(19) Europäisches Patentamt
European Patent Office
Office européen des brevets

(11) EP 2 036 227 B1

(12) **FASCICULE DE BREVET EUROPEEN**

(45) Date de publication et mention de la délivrance du brevet:
**09.07.2014 Bulletin 2014/28**

(21) Numéro de dépôt: **07727352.2**

(22) Date de dépôt: **26.03.2007**

(51) Int Cl.:
***H04B 10/90*** *(2013.01)*

(86) Numéro de dépôt international:
**PCT/EP2007/052879**

(87) Numéro de publication internationale:
**WO 2008/003528 (10.01.2008 Gazette 2008/02)**

(54) **PROCEDE ET APPAREILLAGE POUR COMMUNIQUER A DISTANCE EN UTILISANT L'INTERPRETATION DE SIGNAUX DE THERMOLUMINESCENCE OU DE PHOTOLUMINESCENCE**

VERFAHREN UND VORRICHTUNG ZUR FERNKOMMUNIKATION DURCH INTERPRETATION VON THERMOLUMINESZENZ- ODER PHOTOLUMINESZENZ-SIGNALEN

METHOD AND APPARATUS FOR REMOTE COMMUNICATION USING THE INTERPRETATION OF THERMOLUMINESCENCE OR PHOTOLUMINESCENCE SIGNALS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.07.2006 FR 0606377**

(43) Date de publication de la demande:
**18.03.2009 Bulletin 2009/12**

(73) Titulaire: **SAQUANT**
**03190 Givarlais (FR)**

(72) Inventeur: **DESBRANDES, Robert**
**F-03190 Givarlais (FR)**

(56) Documents cités:
**WO-A1-2005/117306**

- **GENT VAN D L ET AL: "Remote Stimulated Triggering of Quantum Entangled Photoluminescent Molecules of Strontium Aluminate" INTERNET CITATION, [Online] 7 mars 2005 (2005-03-07), XP002357341 Extrait de l'Internet: URL:http://arxiv.org/abs/physics/ 0503052> [extrait le 2005-12-05]**
- **GENT VAN D L: "Remote Stimulated Triggering of Quantum Entangled Nuclear Metastable States of 115mIn" INTERNET CITATION, [Online] novembre 2004 (2004-11), XP002350122 Extrait de l'Internet: URL:http://arxiv.org/ftp/nucl-ex/ papers/04 11/0411050.pdf> [extrait le 2005-10-19]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 036 227 B1

## Description

### Domaine technique :

Certains cristaux deviennent excitées lorsqu'ils sont illuminés par un rayonnement de particules, de gamma, de rayons X, de lumière blanche ou ultraviolette. Ces cristaux peuvent être naturels ou synthétiques. Leur désexcitation peut se produire immédiatement dans le cas de la photoluminescence ou être retardée dans le cas de la thermoluminescence.

En photoluminescence [1] l'énergie des photons de lumière blanche ou ultraviolette est transférée aux électrons de valence des molécules qui sont capturés par les impuretés ou dislocations du réseau cristallin. La désexcitation due au retour des électrons sur leur orbite de valence se produit à la température ambiante avec émission de rayonnement visible. La durée de vie de l'état excité varie avec le type de molécules, le type d'impuretés, ou de dislocation, le type d'élément dopant, et la température. Les cristaux les plus courants contiennent, par exemple, des molécules de sulfure de zinc ou d'aluminate de strontium. Ils sont, par exemple, dopés avec des traces de métaux tels que le calcium, le bismuth, le cuivre, le manganèse, l'europium ou le dysprosium pour obtenir différentes couleurs de luminescence. La concentration en atomes dopants varie, par exemple de 10 à 1000 parties par million. Ces cristaux sont utilisés et commercialisés en particulier dans les signaux lumineux luminescents. La photoluminescence ainsi obtenue se différencie de la phosphorescence obtenue, par exemple en dopant des cristaux de sulfure de zinc avec des traces d'un produit radioactif tel que l'uranium. Dans ce cas, la luminescence se produit sans excitation préalable par un rayonnement ultraviolet ou visible.

La thermoluminescence [2, 3, 4, 5, 6, 8] est un phénomène physique qui se traduit par la propriété qu'ont certains cristaux d'émettre de la lumière quand on les chauffe. Cette luminescence ne se produit que si le chauffage a été précédé d'une irradiation due à des rayonnements ionisants, par exemple à l'exposition à la radioactivité naturelle pendant des milliers d'années ou à l'exposition à un rayonnement artificiel gamma, X, alpha, bêta, neutron, ultraviolet ou visible, pendant quelques minutes ou quelques heures.

La thermoluminescence est utilisée pour la datation en géologie, en archéologie et également pour déterminer les doses de rayonnement ionisant subies en un lieu donné. Ces doses peuvent être mesurées dans un laboratoire ou sur un individu pour assurer la sécurité dans l'emploi des rayonnements ionisants. La technique est nommée « dosimétrie par thermoluminescence ». Certains cristaux comme le fluorure de lithium (LiF), le fluorure de calcium ($CaF_2$), le borate de lithium ($Li_2B_4O_7$), le sulfate de calcium ($CaSO_4$), et l'oxyde d'aluminium ($Al_2O_3$), activées par des traces de métaux de transition, de terres rares ou de carbone, ont la propriété d'être excités sous l'influence de rayonnements ionisants. Ils deviennent luminescents par chauffage et la dose de rayonnement ionisant peut être calculée. La montée en température par chauffage peut être remplacée par une exposition aux rayons d'un laser, par exemple infrarouge.

La luminescence à température ambiante n'est pas strictement nulle et l'excitation disparaît lentement sous forme d'un « fading », qui est la décroissance du signal obtenu dans le temps. De même un fading inverse se produit pour les échantillons stockés pendant longtemps car ils sont légèrement irradiés par les rayons cosmiques et le rayonnement nucléaire ambiant. On a donc dans ce cas une augmentation de l'excitation. La chute d'intensité due au fading est par exemple de l'ordre de 3% en 3 mois pour un cristal d'oxyde d'aluminium dopé au carbone et à la température ambiante. La demi-vie d'un tel échantillon initialement irradié est donc d'environ 5 ans, c'est-à-dire que l'intensité de sa luminescence décroît de moitié en 5 ans.

Les phénomènes de thermoluminescence s'expliquent par la structure imparfaite des cristaux qui contiennent toujours en nombre élevé des défauts tels que des défauts de construction, ou des lacunes, ou des dislocations, ou de la présence d'atomes étrangers à la composition chimique de base (impuretés), et des atomes de dopage. Il est généralement admis que les électrons de valence du cristal au cours de l'irradiation sont éjectés dans la bande de conduction et sont ensuite capturés dans les pièges causés par les lacunes, les dislocations, les atomes étrangers à la composition chimique de base (impuretés) et les atomes de dopage.

Plusieurs pics de luminescence sont généralement obtenus avec les matériaux utilisés en dosimétrie. Ils proviennent du type de piéges. Dans les minéraux les piéges sont généralement profonds et dans les matériaux de dosimétrie les piéges sont généralement moins profonds. Plus d'énergie calorifique ou optique est donc nécessaire pour énergétiser les électrons des piéges profonds, car la profondeur d'un piège indique son niveau énergétique. En photoluminescence, les piéges sont très peu profonds et se vident à la température ambiante sous l'action des vibrations de réseau. Ceci explique les variations de luminescence avec la température.

### Technique antérieure :

La demande internationale N° WO 2005/117306 [7] décrit un procédé pour communiquer à distance en utilisant un produit consistant en des échantillons contenant au moins une sorte de matériaux photoluminescents ou thermoluminescents caractérisé en ce que des groupes de deux ou plusieurs électrons intriqués présents dans des groupes de deux ou plusieurs pièges desdits matériaux photoluminescents ou thermoluminescents, sont intriqués entre eux et sont répartis dans tout ou partie desdits échantillons, appelés par la suite par convention échantillons « intriqués ». Ces échantillons « intriqués » forment un produit. Ils peuvent être séparés dans l'espace et présentent des liaisons quantiques entre certains des électrons piégés dans les pièges des matériaux photoluminescents ou thermoluminescents. Le produit est alors utilisé pour communiquer ou commander par une variation dé luminescence à distance en utilisant l'intrication de particules et la photoluminescence ou la thermoluminescence.

On sépare tout d'abord dans l'espace tout ou partie des échantillons « intriqués » du produit contenant des électrons intriqués dans des pièges des matériaux photoluminescents ou thermoluminescents, certains des électrons piégés étant répartis sur certain de ces échantillons, et présentant des liaisons quantiques.

On exploite alors des liaisons quantiques entre lesdits électrons piégés de ces échantillons « intriqués », indépendamment des distances, des milieux les séparant et des milieux dans lesquels ils sont placés. On provoque au moins une désexcitation, appelée dans la suite « stimulation », modulée en amplitude et / ou en fréquence sur au moins un desdits échantillons « intriqués », qualifié d'échantillon « maître », par exemple soit par chauffage dans sa totalité, soit par chauffage en au moins un point de sa surface, soit par stimulation optique utilisant au moins un flash de lumière infrarouge, visible, ou ultraviolette sur sa totalité, soit par stimulation optique utilisant au moins un flash de lumière infrarouge, visible ou ultraviolette en au moins un point de sa surface, soit par une combinaison de ces procédés, ladite stimulation modulée caractérisant une information ou une commande à transmettre. On détermine, soit au moins une détection d'information, soit au moins une détection de commande, au moyen d'au moins une mesure faite avec un détecteur de luminescence, par exemple un photomultiplicateur ou une photodiode, d'au moins une variation de luminescence sur au moins une sorte de matériaux photoluminescents ou thermoluminescents contenu dans au moins un des autres échantillons « intriqués », qualifié d'échantillon « esclave », lorsque ladite variation de luminescence mesurée est partiellement corrélée avec la stimulation modulée appliquée au susdit échantillon « maître ».

La demande internationale N° WO 2005/117306 [7] décrit également des procédés de fabrication du produit composé d'échantillons « intriqués ». D'autres techniques permettent l'obtention de produits constitués d'échantillons « intriqués » améliorés. Ces produits sont utilisables pour mettre en oeuvre des transmissions quantiques selon le procédé objet de la présente invention tel qu'il est décrit ci-dessous.

Le document intitulé "Remote Stimulated Triggering of Quantum Entangled Photoluminescent Molecules of Strontium Aluminate" (D.L. VAN GENT, R. DESBRANDES) INTERNET CITATION (2005-03-07) décrit également un procédé pour communiquer à distance en utilisant un produit consistant en des échantillons contenant au moins une sorte de matériaux photoluminescents.

**Exposé de l'Invention :**

La présente invention concerne un procédé et sa mise en oeuvre pour communiquer ou commander à distance en utilisant la photoluminescence ou la thermoluminescence. Ce procédé constitue, selon les modes de l'invention, un complément des techniques antérieures de la demande internationale N° WO 2005/117306 [7].

Dans la théorie de la Mécanique Quantique, les particules intriquées bien qu'étant dans des espaces physiques séparés, sont dans le même espace quantique (espace de Hilbert) et des groupes de particules intriquées ont chacun la même fonction d'onde [9, 10, 11, 12, 13, 14]. Une représentation théorique de la propriété pour chacun des groupes de particules intriquées peut être faite.

Si le vecteur d'état de l'électron intriqué dans son piège dans l'échantillon A est $|1>_A$ et le vecteur d'état de l'électron intriqué correspondant dans son piège dans l'échantillon B est $|0>_B$, l'intrication de ces deux états est représentée par le vecteur de la fonction d'onde commune qui est de la forme :

$$|\Psi>_{AB} = 1/\sqrt{2}\ ( |1>_A (x) |0>_B - |0>_A (x) |1>_B )$$

(x) signifiant un produit vectoriel.

Cette équation indique que les états dans les deux électrons ne sont pas définis et présentent une liaison quantique. La définition de l'un des états d'un des électrons dans l'échantillon A, par exemple par chauffage ou par une exposition à un rayonnement ad hoc, provoque immédiatement l'effondrement de la fonction d'onde et la définition de l'état de l'électron correspondant dans l'échantillon B. Tout ou partie des électrons piégés intriqués des échantillons A et B soit retomberaient ensembles dans leur bande de valence en émettant chacun un photon lumineux, soit reprendraient une probabilité de fading normale ou accélérée d'émission. Ceci expliquerait le vidage des pièges de l'échantillon « esclave » distant lors du chauffage ou de l'application d'un rayonnement ad hoc sur tout ou partie de l'échantillon « maître » dont les pièges contiennent des électrons intriqués.

Dans cette invention, la nature des liaisons quantiques n'est pas expliquée : il est également possible que des modèles de forces ou de variables cachées, puissent expliquer ces liaisons entre électrons dans des pièges des échantillons « intriqués » : Dans cette explication, la probabilité de vidage des pièges serait réduite tant que persiste la liaison. La rupture de la liaison quantique entre deux ou plusieurs électrons piégés qui se produirait peut-être par résonance lors du chauffage ou lors de l'application d'un rayonnement ad hoc sur tout ou partie de l'échantillon « maître », se manifesterait par un rétablissement ou un changement de la probabilité de fading des électrons piégés dans le ou les échantillons « esclaves ». Le ou les échantillons intriqués « esclave » présenteraient alors une augmentation transitoire de leur fading, certains des pièges « vidés » pouvant être peu profonds et générer des photons avec une grande probabilité immédiatement après la rupture de la liaison, appelée par convention « liaison quantique ».

Dans cette invention, il est fait usage de mesures de luminescence de matériaux photoluminescents ou thermoluminescents ou encore d'une combinaison des deux, lorsque la variation de luminescence est causée, directement ou indirectement, par une stimulation à distance au moyen de la désexcitation d'électrons piégés et intriqués, en particulier lorsque les pièges désexcités dépendent de un ou plusieurs paramètres de la stimulation.

Dans le cas des matériaux thermoluminescents, il est connu que le vidage complet de tous les pièges de tels matériaux doit être fait en utilisant une technique particulière pour chaque sorte de matériaux, consistant à maintenir ce ou ces matériaux à différentes températures pendant des périodes de quelques minutes à plusieurs heures [Référence 5, page 215]. La présente invention exploite l'application aux relations entre pièges intriqués, de cette propriété de réponse à une stimulation. Cette invention consiste donc à améliorer le procédé et l'appareillage décrit dans la demande internationale n° WO 2005/117306 [7] pour tenir compte de phénomènes complémentaires concernant le vidage des pièges intriqués.

Dans un mode simple du procédé, objet de la présente invention, lors de la montée en température, des pics de luminescence, bien connus de l'homme de l'art, sont obtenus sur l'échantillon « maître » comme le montre la figure 1. Sur cette figure, un échantillon de fluorure de lithium dopé et excité produit un pic de luminescence à 155°C et un autre pic, plus important, à 230°C. La figure 2 illustre schématiquement la thermoluminescence d'un échantillon de fluorure de lithium dopé, en fonction de la température appliquée et des longueurs d'ondes mesurées qui sont comprises entre 300 et 700 nanomètres. Quelques pièges peu profonds apparaissent à 100°C ainsi que les pièges rencontrés à 155°C et à 230°C sur la figure 1 qui ont un maximum d'intensité vers 400 nm.

Dans le mode simple du procédé, lors de la montée en température de l'échantillon « maître », des pics de luminescence sont mesurés sur le ou les échantillons « esclave » intriqués avec l'échantillon « maître » comme le montre la figure 3. L'amplitude de ces pics dépend du mode d'irradiation des échantillons « intriqués » et de la vitesse de montée en température. Des pics de luminescence sont égale-ment mesurés sur l'échantillon « esclave », lors de la descente en température de l'échantillon « maître », comme illustré sur la figure 3, les deux échantillons ayant été préalablement irradiés à 2 Gray. Sur cette figure, la courbe (1) est enregistrée à la montée en température et la courbe (2) est enregistrée à la descente en température. Pour plus de clarté, la courbe (2) a été décalée de 20 coups par seconde vers le haut. Une corrélation est obtenue pour les mêmes températures. On notera que sur cette figure, l'amplitude de 1500 coups par seconde correspond au fading de l'échantillon « esclave ».

Une explication possible de cette corrélation est que les piéges contenant des électrons intriqués se vident plus lentement et peut-être uniquement à la température des pics. Si les excursions de température à la montée et à la descente sont suffisamment rapides, les mêmes échantillons peuvent être utilisés plusieurs fois car les pièges contenant des électrons intriqués ne sont vidés que partiellement à chaque excursion de température. Pour un tel comportement, un phénomène de résonance semble se produire puisque le vidage des pièges semble cesser lorsque la température des pics de luminescence est dépassée. Dans ce mode particulier du procédé, on calcule un coefficient de corrélation entre les mesures des pics lors de la montée en température et les mesures des pics lors de la descente en température.

Chaque pic de luminescence des échantillons « esclaves » peut être exploité séparément en limitant la montée en température comme le montre les figures 4 et 5. Sur la figure 4, la montée en température est arrêtée à 175 °C pour exploiter le premier pic de luminescence. La courbe (3) représente l'intensité de la luminescence durant la montée en température et la courbe (4) représente l'intensité de la luminescence durant la descente en température. Lorsque celui-ci est vide, une montée en température comme indiquée sur la figure 5 permet d'exploiter le second pic de luminescence. De même, la courbe (5) représente l'intensité de la luminescence durant la montée en température et la courbe (6) représente l'intensité de la luminescence durant la descente en température.

Dans un mode particulier de l'invention non exclusif du précédant, une partie du vidage des piéges de l'échantillon « esclave » se manifeste par des creux de luminescence au lieu de pics de luminescence. Plusieurs explications sont possibles : cette diminution peut résulter d'une conversion interne de l'énergie de la luminescence qui réduit le fading. Il est également possible que lors du vidage des pièges de l'échantillon « maître », un échantillon intriqué « esclave » composé d'au moins un matériau thermoluminescent présentant une photoluminescence résiduelle, présente une diminution transitoire de son fading apparent de part l'action des photons libérés des pièges « esclave » précédemment intriqués. Ces photons de fréquence ad hoc annuleraient tout ou partie de la photoluminescence résiduelle de l'échantillon « esclave » selon le procédé qui avait été mis en évidence dans demande internationale N° WO 2005/117306 [7]. La figure 6 montre un exemple typique dans lequel on exploite le phénomène précédent : la courbe (7) de montée en température comporte des creux de diminution de la luminescence, alors que la courbe (8) de descente en température comporte des pics de luminescence aux même températures. Dans ce mode particulier du procédé, on calcule un coefficient d'anti-corrélation entre les mesures de creux lors de la montée en température et les mesures de pics lors de la descente en température.

La figure 7 représente le principe d'une mise en oeuvre typique pour mesurer la réponse de l'échantillon « esclave » lors de la montée puis de la descente en température de l'échantillon « maître » telle qu'illustrée sur la figure 3. A gauche de la figure 7, l'échantillon « maître » (9) est placé dans le four (10). La température du four est mesurée par le thermomètre numérique (13). La température maximale de coupure est contrôlée par le thermostat (11), lequel ne se ré-enclenche pas à la descente en température. Le four est alimenté en énergie en (12). Derrière une paroi métallique (14) et à une distance quelconque, la chambre obscure (15) contient l'échantillon « esclave » (16) qui est placé en face du photomultiplicateur (17). Le photomultiplicateur est connecté par un circuit de comptage à l'ordinateur (18) pour l'enregistrement des données. L'homme de l'art peut aisément mettre en oeuvre des profils de variations de température plus complexes, appelée par la suite « profils caractéristiques », sans sortir du cadre de cette invention. Un exemple de tels profils caractéristiques est constitué par des excursions ad hoc de température pour le vidage de pièges pic par pic dont la mesure de luminescence est représentée sur les figure 4 et 5.

La figure 8 montre un enregistrement typique de la luminescence de l'échantillon « esclave » en fonction du temps, lors d'une montée de température suivie d'une descente de température qui correspond au premier mode simple du procédé décrit ci-dessus. Cet enregistrement a subi un traitement dépendant de l'optimisation du procédé de mesure, pour éliminer les variations statistiques dues à l'appareil de mesure, telles que le bruit. Un exemple d'un tel traitement est constitué par l'utilisation d'une moyenne glissante. Cet enregistrement temporel a été corrigé à l'aide du profil caractéristique de variation de la température et les résultats en température sont exposés sur la figure 3 qui montre visuellement le phénomène de corrélation. La recherche analytique de la corrélation peut s'effectuer par une méthode ad hoc. Un premier exemple de méthode est présenté ci-dessous.

La figure 9 montre la portion de l'enregistrement de la figure 8 qui est utilisée pour le calcul d'un coefficient de corrélation « instantané » variant dans le temps. Cette portion de l'enregistrement est dénommée par la suite « les mesures modifiées ». La longueur temporelle de cette portion, appelée « fenêtre de calcul », a été choisie car elle correspond à l'intervalle de temps en relation avec le profil caractéristique de la figure 10, qui décrit une stimulation de l'échantillon « maître » incluant les températures des pics de luminescence du fluorure de lithium dopé qui a été utilisé, et dont la corrélation est recherchée.

La figure 10 montre l'évolution de la température appliquée à l'échantillon « maître » en fonction du temps, qui constitue le « profil caractéristique » de stimulation où le paramètre variant en fonction du temps est dans ce mode particulier la température. La prise en compte de ce « profil caractéristique » permet de transformer les mesures de luminescence en fonction du temps, en mesures de luminescence en fonction de la température telles qu'illustrées sur la figure 3. Elle permet en outre de calculer une seconde courbe de mesures temporelles de luminescence, dites « mesures inversées temporellement », pour mettre en relation les mesures de mêmes températures distantes, obtenues en « température montante distante » et en « température descendante distante », en fonction d'une échelle de temps modifiée pour cette seconde courbe, par exemple par des homothéties ad hoc. Cette méthode est appliquée par l'équipement « récepteur quantique » au fur et à mesure de la disponibilité des mesures de luminescence, afin de calculer la corrélation « instantanée » entre les « mesures modifiées » et les « mesures modifiées inversées temporellement ».

La corrélation « instantanée » calculée par cette méthode varie au cours du temps : elle est calculée, par exemple à chaque nouvelle mesure, sur la nouvelle « fenêtre de calcul » incluant les mesures les plus récentes. Les deux ensembles de mesures sont représentés sur la figure 11 à l'instant où les deux courbes se superposent presque parfaitement, dénotant la fin d'une réception quantique par le « récepteur quantique », suite à l'application d'un « profil caractéristique » par l'« émetteur quantique ». La corrélation « instantanée » est représentée sur la figure 12 en fonction d'un temps relatif (le temps 0 seconde correspond au temps absolue 545 secondes de la figure 11). La corrélation « instantanée » passe par un maximum maximorum de corrélation. En pratique, un critère tel qu'un seuil de corrélation, par exemple de 0,70 (maximum 1,00), est utilisé pour déterminer une réception quantique. Le seuil de corrélation peut être franchi durant plusieurs mesures selon l'optimisation du procédé, en particulier selon l'étendue de la ou des moyennes glissantes appliquées à l'une ou à plusieurs des étapes du procédé. Dans le cas de la figure 12, le maximum maximorum atteint 0,81 et dépasse seuil de 0,70 pendant 10 secondes dans l'enregistrement typique présenté.

Un second exemple de méthode de recherche analytique de la corrélation est présenté ci-dessous. On utilise un gabarit, illustré sur la figure 13, qui représente l'évolution typique de la courbe de luminescence d'un échantillon « esclave » en fonction du temps, pour une stimulation d'un «échantillon « maître » selon un « profil caractéristique » de variation de la température. Les « mesures modifiées » définies dans la méthode précédente sont corrélées avec le gabarit au fur et à mesure de leur disponibilité. La corrélation « instantanée » calculée par cette méthode varie au cours du temps : elle est calculée, par exemple à chaque nouvelle mesure, sur la nouvelle « fenêtre de calcul » incluant les mesures les plus récentes. Les « mesures modifiées » et le gabarit sont représentés sur la figure 14 à l'instant où les deux courbes se superposent presque parfaitement, dénotant la fin d'une réception quantique par le « récepteur quantique », suite à l'application d'un « profil caractéristique » par l'« émetteur quantique ». La corrélation « instantanée » est représentée sur la figure 15 en fonction d'un temps relatif (le temps 0 seconde correspond au temps absolue 545 secondes de la figure 14). La corrélation « instantanée » passe par un maximum maximorum de corrélation. En pratique, un critère tel qu'un seuil de corrélation, par exemple de 0,70 (maximum 1,00), est utilisé pour déterminer une réception quantique. Comme indiqué précédemment, le seuil de corrélation peut être franchi durant plusieurs mesures selon l'optimisation du procédé. Dans le cas de la figure 15, le maximum maximorum atteint 0,92 et dépasse le seuil de 0,70 pendant 15 secondes dans l'enregistrement typique présenté.

Le calcul de corrélation « instantanée » peut être réalisé par une des méthodes mathématiques bien connues de l'homme de l'art, par exemple par un calcul de coefficient de corrélation $\rho_{X,Y}$ entre deux séries de valeurs mesurées X et Y :

$$\rho_{X,Y} = Cov\,(X,Y) / (\sigma_X \,.\, \sigma_Y)$$

dans lequel Cov est la covariance :

$$Cov\,(X,Y) = (1 / n) \sum (x_i - \mu_x)\,(y_i - \mu_y), \quad \text{pour } i = 1 \text{ à } n$$

$\sigma_X$ = Ecart type des valeurs de la série (X)
$\sigma_Y$ = Ecart type des valeurs de la série (Y)
$\mu_X$ = Moyenne des valeurs de la série (X)
$\mu_Y$ = Moyenne des valeurs de la série (Y)
n = nombre de valeurs mesurées des séries.
Par définition : $-1 < \rho_{X,Y} < +1$

On notera que des variantes de ce coefficient peuvent être calculées, normalisées ou non, sans sortir de cadre de l'invention. De même des méthodes de moindres carrées peuvent être utilisées ou encore des méthodes heuristiques de calcul. La corrélation peut aussi être déterminée au moyen de transformées de Fourier, par exemple en comparant les spectres de fréquences obtenues. De même, plusieurs critères de reconnaissance d'une réception quantique, correspondant à un profil caractéristique dépendant de plusieurs paramètres de stimulation, peuvent être utilisés sans sortir du cadre de l'invention. Des procédés basés sur des modèles mémorisant les quantités de pièges intriqués stimulés et les quantités de pièges intriqués résiduels, durant de l'application de profils caractéristiques de stimulation complexes, peuvent aussi être utilisés. Ces quantités estimées peuvent être calculées par types de pièges intriqués stimulables selon l'optimisation du procédé.

Sur la figure 2, quelques pièges peu profonds apparaissent à 100°C ainsi que les pièges rencontrés sur la figure 1 qui ont un maximum d'intensité vers 400 nm. Le temps d'exposition au chauffage est un facteur important pour le vidage des pièges [5]. Dans un autre mode, le temps de stimulation par un rayonnement de longueur d'onde ad hoc, est également un facteur important pour le vidage des pièges comme le montre la figure 2.25 de l'ouvrage référencé en [4], page 54, pour un échantillon d'oxyde d'aluminium dopé. Cette figure provient de la référence [15]. Elle représente une simulation de la réponse en luminescence de l'échantillon à des stimulations à différentes longueurs d'onde dans le temps. L'échantillon comporte trois types de pièges. Lors de la stimulation initiale, la réponse en intensité de luminescence est pratiquement uniforme car les pièges peu profonds sont désexcités indépendamment de la longueur d'onde. Lorsque la stimulation est prolongée, on distingue trois longueurs d'onde de stimulation pour lesquelles la réponse est plus importante : ces réponses correspondent aux trois types de pièges plus profonds. Une généralisation du procédé principal pour communiquer à distance en utilisant l'interprétation de signaux de thermoluminescence ou de photoluminescence utilise entre autres : au moins un groupe d'échantillons comportant au moins une sorte de matériaux ayant des propriétés de thermoluminescence et / ou de photoluminescence. Ce groupe d'échantillons présente des liaisons, appelées par convention liaisons « quantiques », entre des électrons piégés desdits matériaux, par exemple obtenues par une des méthodes d'illumination, d'irradiation, ou de bombardement, décrites dans la demande internationale N° WO 2005/117306, ou encore par une combinaison de ces méthodes. Ce groupe d'échantillons est appelé par convention le groupe d'échantillons « intriqués » du produit. On utilise en outre au moins la stimulation par thermo désexcitation ou photo désexcitation. Le procédé principal est caractérisé par au moins un équipement « émetteur quantique », comportant au moins un échantillon intriqué du groupe, qui effectue une transmission d'information, appelée « transmission quantique », au moyen d'une stimulation, soit par thermo désexcitation, soit photo désexcitation, soit par une combinaison des deux, sur tout ou partie de l'échantillon, appelé échantillon « maître », durant un intervalle de temps. Selon le mode, on applique un ou successivement plusieurs profils heuristiques de variation d'au moins un paramètre de la stimulation dans le temps, appelés par convention « profils caractéristiques ». Ce ou ces « profils caractéristiques » sont définis de façon à modifier transitoirement la probabilité de désexcitation de certains des électrons piégés intriqués, au moyen de la stimulation appliquée, et optionnellement par rétroaction. Au moins un équipement « récepteur quantique », comportant au moins un échantillon intriqué du groupe, effectue dans le temps au moins une série de mesures de la luminescence dans au moins une raie optique ou au moins une bande de longueurs d'ondes optiques, sur le ou les échantillons, appelés échantillons « esclaves ». Une ou plusieurs des séries de mesures sont interprétées par au moins une méthode de calcul de corrélation, en relation avec au moins une propriété du ou des « profils caractéristiques » utilisés par l'« émetteur quantique », pour déterminer la réception d'au moins une information, codée par ce ou ces « profils caractéristiques ». Cette réception est dénommée « réception quantique ».

Dans un mode particulier du précédant, le procédé utilise au moins un « profil caractéristiqué » comportant une variation d'un paramètre de stimulation afin d'exploiter au moins un pic de luminescence caractéristique d'au moins une sorte de matériaux ayant des propriétés de thermoluminescence.

Dans un autre mode particulier du procédé principal, on utilise au moins un « profil caractéristique » comportant, soit une variation du paramètre de température, soit une variation du paramètre d'intensité lumineuse, soit une variation du paramètre de longueur d'onde incidente, soit une variation du paramètre de surface stimulée, soit une variation du paramètre de volume stimulé, soit une combinaison de ces variations de paramètres, de façon à modifier transitoirement la probabilité de désexcitation de certains des électrons piégés intriqués en fonction du ou des paramètres. Dans un autre mode particulier du procédé principal, on utilise un « profil caractéristique » comportant au moins une variation de la température dans le temps avec une ou plusieurs étapes, soit de montée en température, soit de descente en température, soit de maintien de la température, soit une combinaison de tout ou partie de ces étapes, de façon à modifier transitoirement la probabilité de désexcitation de certains des électrons piégés intriqués pour les températures appliquées, selon le « profil caractéristique », lors de la stimulation.

Dans un autre mode particulier du procédé principal, on utilise un « profil caractéristique » comportant au moins une variation de l'intensité lumineuse dans le temps avec une ou plusieurs étapes, soit d'augmentation de ladite intensité lumineuse, soit de diminution de ladite intensité lumineuse, soit de maintien ladite intensité lumineuse, soit une combinaison de tout ou partie de ces étapes, de façon à modifier transitoirement la probabilité de désexcitation de certains des électrons piégés intriqués pour les intensités lumineuses appliquées, selon le « profil caractéristique », lors de la stimulation.

Dans un autre mode particulier du procédé principal, on utilise un « profil caractéristique » comportant au moins une variation de la longueur d'onde incidente dans le temps, par exemple comprise entre 300 nm et 800 nm, avec une ou plusieurs étapes, soit d'augmentation de ladite longueur d'onde, soit de diminution de ladite longueur d'onde, soit de maintien de ladite longueur d'onde, soit une combinaison de tout ou partie de ces étapes, de façon à modifier transitoirement la probabilité de désexcitation de certains des électrons piégés intriqués pour les longueurs d'ondes incidentes appliquées, selon le « profil caractéristique », lors de la stimulation.

Dans un autre mode particulier du procédé principal, on utilise un « profil caractéristique » comportant au moins une variation de la surface stimulée dans le temps avec une ou plusieurs étapes, soit d'augmentation de ladite surface stimulée, soit de diminution de ladite surface stimulée, soit de maintien de ladite surface stimulée, soit une combinaison de tout ou partie de ces étapes, de façon à modifier transitoirement la probabilité de désexcitation de certains des électrons piégés intriqués sur la surface stimulée, selon le « profil caractéristique », lors de la stimulation.

Dans un autre mode particulier du procédé principal, on utilise un « profil caractéristique » comportant au moins une variation du volume stimulée dans le temps avec une ou plusieurs étapes, soit d'augmentation dudit volume stimulé, soit de diminution dudit volume stimulé, soit de maintien dudit volume stimulé, soit une combinaison de tout ou partie de ces étapes, de façon à modifier transitoirement la probabilité de désexcitation de certains des électrons piégés intriqués sur le volume stimulé, selon le « profil caractéristique », lors de la stimulation.

Dans un autre mode particulier du procédé principal, on utilise les mesures de la luminescence, dans au moins une raie optique ou au moins une bande de longueurs d'ondes optiques, effectuées sur au moins un échantillon « esclave », en les corrigeant temporellement selon un modèle prenant en compte des probabilités de désexcitation des électrons piégés intriqués dans l'échantillon « esclave », lors de l'effondrement des liaisons « quantiques » résultant de l'application du « profil caractéristique » de stimulation à au moins un échantillon « maître ».

Dans un autre mode particulier du procédé principal, on règle la température d'au moins un échantillon « esclave » mesuré dans le « récepteur quantique » de façon à optimiser la réponse de désexcitation des pièges intriqués du ou des échantillons « esclave » lors de la « réception quantique ».

Dans un autre mode particulier du procédé principal, on utilise un ou des « profils caractéristiques » de courtes durées, par exemple comprises entre 1 microseconde et 100 millisecondes, afin de réduire le taux de pièges intriqués désexcités durant l'application du ou des « profils caractéristiques ». Ce ou ces « profils caractéristiques » sont plus particulièrement applicables à la stimulation par photo désexcitation, soit en variation de la longueur d'onde, soit en variation de l'intensité, soit en variation de la surface, ou soit par une combinaison de ces stimulations.

Dans un autre mode particulier du procédé principal, on utilise au moins un « profil caractéristique », dans l'« émetteur quantique », qui comporte au moins une première étape de variation d'au moins un paramètre de stimulation et au moins une seconde étape de variation du même paramètre avec au moins des valeurs communes ou une plage de valeurs communes. La méthode de calcul de corrélation utilise au moins une transformation de la série de mesures, en relation avec le « profil caractéristique », pour calculer, par exemple par interpolation, au moins une nouvelle première série de mesures dont l'abscisse est exprimée dans l'unité du paramètre de stimulation, en relation avec au moins la première étape de variation. Au moins une autre transformation de la série de mesures, en relation avec le « profil caractéristique », permet de calculer, par exemple par interpolation, au moins une nouvelle seconde série de mesures dont l'abscisse est exprimée dans l'unité du paramètre de stimulation, en relation avec au moins la seconde étape de variation. Au moins une valeur de corrélation est calculée entre la nouvelle première série de mesures et la nouvelle seconde série de mesures, afin de déterminer la réception d'au moins une information, codée par le ou les « profils caractéristiques ».

Dans un autre mode particulier du procédé principal, appelé mode « d'interprétation par corrélation temporelle », la ou les séries de mesures sont interprétées pour déterminer la transmission d'au moins une information codée par le ou lesdits « profils caractéristiques », par la recherche, soit d'au moins un maxima maximorum de corrélation caractérisant au moins une corrélation, soit d'au moins un minima minimorum de corrélation caractérisant au moins une anti-corrélation, soit d'au moins un maxima maximorum de corrélation et d'au moins un minima minimorum de corrélation, caractérisant au moins une corrélation et une anti-corrélation, sur la durée dudit ou desdits « profils caractéristiques ». La corrélation « instantanée » est calculée, soit à des instants pré-déterminés, soit continûment, soit sur des intervalles de temps, ces instants ou ces intervalles étant éventuellement connus de l'« émetteur quantique » et du récepteur quantique » dans un sous-mode partiellement ou totalement synchronisé, soit selon une combinaison de ces modalités, sur au moins une fenêtre temporelle, éventuellement glissante, dimensionnée en relation avec au moins une propriété dudit ou desdits « profils caractéristiques ». La corrélation « instantanée » est comprise, lorsqu'elle est normalisée, entre la valeur « -1 » et « +1 », et elle est évaluée, selon le mode, par exemple par l'une des méthodes suivantes :

1 - par une méthode de corrélation (M1) entre la série de mesures, éventuellement après application d'une transformation, et un gabarit.

2 - par une méthode de corrélation (M2), lorsque l'information est codée par l'« émetteur quantique » par au moins deux « profils caractéristiques » décalés d'au moins une valeur de temps connue de l'« émetteur quantique » et du « récepteur quantique », entre la série de mesures et la série de mesures décalée temporellement, éventuellement après application d'une transformation.

3 - par une méthode de corrélation (M3), lorsque l'information est codée par l'« émetteur quantique » par au moins un « profil caractéristique » permettant de mettre en correspondance au moins un ensemble de valeurs d'au moins un paramètre de la stimulation qui sont appliquées à des temps différents, entre la série de mesures, et la série inversée temporellement, éventuellement après application d'une transformation.

4 - par une méthode de corrélation (M4) entre les séries de mesures sur au moins deux échantillons « esclave » mesurés.

5 - par une méthode de corrélation (M5) entre au moins deux des séries de mesures sur au moins un échantillon « esclave » mesuré, par exemple dans au moins deux raies optiques ou au moins deux bandes de longueurs d'ondes optiques ou au moins une raie optique et au moins une bande de longueurs d'ondes optiques, éventuellement après application de transformations.

6 - ou encore par une combinaison de ces méthodes.

Le ou les maxima maximorum de corrélation lorsqu'ils sont supérieurs à un seuil de confiance dépendant de l'optimisation du procédé, par exemple « + 0,7 », et le ou les minima minimorum de corrélation lorsqu'ils sont inférieurs à un seuil de confiance dépendant de l'optimisation du procédé, par exemple « -0,7 », caractérisent au moins une réception quantique d'une information codée selon le ou les « profils caractéristiques ».

Dans un autre mode particulier du mode précédant « d'interprétation par corrélation temporelle », plus particulièrement applicable au sous-mode utilisant la méthode (M1), la corrélation « instantanée » est calculée entre :

1 - la série de mesures du « récepteur quantique » ou une fonction des mesures, lorsque plusieurs échantillons « esclaves » sont employées, par exemple à l'aide d'une moyenne pondérée, le résultat étant dénommé la série de mesures brutes. Cette série de mesures brutes peut subir une transformation appliquée à un sous-ensemble des mesures brutes, par exemple une moyenne glissante sur une fraction de la durée du ou des « profils caractéristiques », ou encore une transformation corrigeant l'effet du « profil caractéristique », les mesures résultantes étant dénommées la « série de mesures modifiées ».

2 - et un gabarit de réponse de désexcitation des pièges intriqués, qui a été calibré préalablement pour le ou les « profils caractéristiques » utilisés, et, soit l'échantillon « esclave » utilisé, soit un échantillon « esclave » typique, ou encore calibré au moyen d'un calcul heuristique utilisant au moins une courbe de réponse de thermoluminescence ou de photoluminescence de la sorte de matériaux et le ou les « profils caractéristiques », ou encore calibré par une combinaison de ces moyens.

Dans un autre mode particulier du mode « d'interprétation par corrélation temporelle », plus particulièrement applicable au sous-mode utilisant la méthode (M2), on emploie des valeurs de temps prédéterminées de décalages qui sont soit fixes, soit pseudo aléatoires selon la même graine, la corrélation « instantanée » étant calculée entre :

1 - la série de mesures du « récepteur quantique » ou une fonction des mesures, lorsque plusieurs échantillons « esclaves » sont mesurées, par exemple à l'aide d'une moyenne pondérée, le résultat étant dénommé la série de mesures brutes. Cette série de mesures brutes peut subir une transformation appliquée à un sous-ensemble des mesures brutes, par exemple une moyenne glissante sur une fraction de la durée du ou des « profils caractéristiques », ou encore une transformation corrigeant l'effet du ou des « profils caractéristiques », ces mesures résultantes étant dénommées la « série de mesures modifiées ».
2 - et la série de mesures brutes définie ci-dessus, décalée temporellement de la ou des valeurs de temps prédéterminées, cette série de mesures brutes pouvant subir une transformation appliquée à un sous-ensemble des mesures brutes, par exemple une moyenne glissante sur une fraction de la durée du ou des « profils caractéristiques », ou encore une transformation corrigeant l'effet du ou des « profils caractéristiques », lesdites mesures résultantes étant dénommées la « série de mesures modifiées décalées ». Ces transformations permettent d'établir une correspondance entre les mêmes valeurs de paramètres de stimulation, correspondance qui se manifeste entre les mesures lors d'une « réception quantique ».

Dans un autre mode particulier du mode « d'interprétation par corrélation temporelle », plus particulièrement applicable au sous-mode utilisant la méthode (M3), la corrélation « instantanée » est calculée entre :

1 - la série de mesures du « récepteur quantique » ou une fonction des mesures, lorsque plusieurs échantillons « esclaves » sont mesurés, par exemple à l'aide d'une moyenne pondérée, le résultat étant dénommé la série de mesures brutes. Cette série de mesures brutes peut subir une transformation appliquée à un sous-ensemble des mesures, par exemple une moyenne glissante sur une fraction de la durée du ou des « profils caractéristiques », ou encore une transformation corrigeant l'effet du ou des « profils caractéristiques », ces mesures résultantes étant dénommées la « série de mesures modifiées ».
2 - et la série de mesures brutes, éventuellement modifiées selon l'optimisation du procédé, cette série de mesures étant inversée temporellement. Cette nouvelle série de mesures brutes peut subir une transformation appliquée à un sous-ensemble des mesures, par exemple une moyenne glissante sur une fraction de la durée du ou des « profils caractéristiques », ou encore une transformation corrigeant l'effet du ou des « profils caractéristiques », ces mesures résultantes étant dénommées la « série de mesures inversées». Ces transformations sont appliquées afin d'établir une correspondance entre les mêmes valeurs de paramètres de stimulation, correspondance qui se manifeste entre les mesures lors d'une « réception quantique ».

Dans un autre mode particulier du mode « d'interprétation par corrélation temporelle », plus particulièrement applicable au sous-mode utilisant la méthode (M4), la corrélation « instantanée » est calculée entre :

1 - la série de mesures sur le premier échantillon « esclave » du « récepteur quantique » ou une fonction des mesures d'un premier groupe d'échantillons « esclave », lorsque plusieurs échantillons « esclaves » sont mesurées, par exemple à l'aide d'une moyenne pondérée, le résultat étant dénommé la première série de mesures brutes. Cette première série de mesures brutes peut subir une transformation appliquée à un sous-ensemble des mesures, par exemple une moyenne glissante sur une fraction de la durée du ou des « profils caractéristiques », ces mesures résultantes étant dénommées la « première série de mesures modifiées ».
2 - et la série de mesures sur le deuxième échantillon « esclave » du « récepteur quantique » ou une fonction des mesures d'un second groupe d'échantillons « esclave » disjoint du précédent, lorsque plusieurs échantillons « esclaves » sont mesurées, par exemple à l'aide d'une moyenne pondérée, le résultat étant dénommé la seconde série de mesures brutes. Cette seconde série de mesures brutes peut subir une transformation appliquée à un sous-ensemble des mesures, par exemple une moyenne glissante sur une fraction de la durée du ou des « profils caractéristiques », les mesures résultantes étant dénommées la « seconde série de mesures modifiées ».

Dans un autre mode particulier du mode « d'interprétation par corrélation temporelle », plus particulièrement applicable au sous-mode utilisant la méthode (M5), la corrélation « instantanée » est calculée entre :

1 - la série de mesures dans la première raie optique ou bande de longueurs d'ondes optiques, du « récepteur quantique » ou une fonction des mesures, lorsque plusieurs échantillons « esclaves » sont mesurées, par exemple à l'aide d'une moyenne pondérée, le résultat étant dénommé la série de mesures brutes. Cette série de mesures brutes peut subir une transformation appliquée à un sous-ensemble des mesures, par exemple une moyenne glissante sur une fraction de la durée du ou des « profils caractéristiques », ou encore une transformation heuristique normalisant ces mesures pour le ou les « profils caractéristiques » en relation avec les différentes longueurs d'ondes mesurées, les mesures résultantes étant dénommées la « première série de mesures modifiées ».

2 - et la série de mesures dans la seconde raie optique ou bande de longueurs d'ondes optiques, du « récepteur quantique » ou une fonction des mesures, lorsque plusieurs échantillons « esclaves » sont mesurées, par exemple à l'aide d'une moyenne pondérée, le résultat étant dénommé la série de mesures brutes. Cette série de mesures brutes peut subir une transformation appliquée à un sous-ensemble des mesures, par exemple une moyenne glissante sur une fraction de la durée du ou des « profils caractéristiques », ou encore une transformation heuristique normalisant les mesures pour le ou les « profils caractéristiques » en relation avec les différentes longueurs d'ondes mesurées, les mesures résultantes étant dénommées la « seconde série de mesures modifiées ».

Dans un autre mode particulier du mode « d'interprétation par corrélation temporelle », le « récepteur quantique » effectue dans le temps des mesures de la luminescence sur au moins deux raies optiques ou au moins deux bandes de longueurs d'ondes optiques ou au moins une raie optique et une bande de longueurs d'ondes optiques. Ces mesures permettent de déterminer la transmission d'information lors de la rencontre sur un même intervalle de temps, soit d'au moins deux maxima maximorum de corrélation, soit d'au moins deux minima minimorum de corrélation, soit d'au moins un maxima maximorum de corrélation et d'au moins un minima minimorum de corrélation.

Dans un autre mode particulier du mode « d'interprétation par corrélation temporelle », au moins un échantillon intriqué « esclave », lorsqu'il est composé d'au moins une sorte de matériaux ayant des propriétés de thermoluminescence, et présentant des propriétés additionnelles de photoluminescence, est préalablement à la « réception quantique », exposé à un rayonnement infrarouge pour supprimer la photoluminescence éventuellement résiduelle. Cette suppression permet d'améliorer la réception quantique par la recherche d'un maxima maximorum de corrélation, lors de l'application d'au moins un « profil caractéristique ».

Dans un autre mode particulier du mode « d'interprétation par corrélation temporelle », plus particulièrement applicable lorsque les périodes de « transmission quantique » et de « réception quantique » sont synchronisées, au moins un échantillon intriqué « esclave », lorsqu'il est composé d'au moins une sorte de matériaux ayant des propriétés de thermoluminescence, et présentant des propriétés additionnelles de photoluminescence, est, préalablement à chaque « réception quantique », exposé à une source de très faible intensité de lumière visible, ultraviolette ou X, pour induire une photoluminescence résiduelle. Cette photoluminescence résiduelle permet de déterminer la transmission d'information par la recherche d'un minima minimorum, lors de l'application d'un « profil caractéristique ».

Dans un autre mode particulier du procédé principal, les « profils caractéristiques » sont appliqués par le ou les « émetteurs quantiques » à des instants ou sur des fenêtres temporelles, pré-déterminés, éventuellement variables selon une loi pseudo-aléatoire commune, qui sont aussi connus du ou des « récepteurs quantiques » qui appliquent le procédé de détermination d'une transmission d'information codée au moins aux instants ou pendant les fenêtres temporelles, pré-déterminés.

Dans un autre mode particulier du procédé principal, l'« émetteur quantique » effectue une rétroaction en utilisant au moins un autre échantillon « esclave » et un processus de mesure de la luminescence dans au moins une raie optique ou au moins une bande de longueurs d'ondes optiques sur cet autre échantillon « esclave ». Ce processus de mesure permet de contrôler par une méthode heuristique la réponse de désexcitation des pièges intriqués à au moins une valeur d'au moins un paramètre du « profil caractéristique » de la stimulation dans le temps, par rétroaction en modulant en complément la stimulation du « profil caractéristique » appliquée à l'échantillon « maître ». La rétroaction peut par exemple comprendre, soit une variation éventuellement complémentaire du paramètre de température, soit une variation éventuellement complémentaire du paramètre d'intensité lumineuse, soit une variation éventuellement complémentaire du paramètre de longueur d'onde incidente, soit une variation éventuellement complémentaire du paramètre de surface stimulée, soit une variation éventuellement complémentaire du paramètre de volume stimulé, soit une combinaison de ces variations complémentaires de paramètres du « profil caractéristique » appliqué à l'échantillon « maître ». Cette rétroaction permet d'optimiser statistiquement la réponse d'au moins un échantillon « esclave » d'au moins un « récepteur quantique » distant.

Dans un autre mode particulier du procédé principal, l'« émetteur quantique » effectue une rétroaction en utilisant un processus de mesure de la luminescence dans au moins une raie optique ou au moins une bande de longueurs d'ondes optiques sur l'échantillon « maître ». Ce processus de mesure permet de contrôler par une méthode heuristique la réponse de désexcitation des pièges à au moins une valeur d'au moins un paramètre du « profil caractéristique » de la stimulation dans le temps, par rétroaction en modulant en complément la stimulation du « profil caractéristique » appliquée à l'échantillon « maître ». La rétroaction peut par exemple comprendre, soit une variation éventuellement complémentaire du paramètre de température, soit une variation éventuellement complémentaire du paramètre d'intensité lumineuse, soit une variation éventuellement complémentaire du paramètre de longueur d'onde incidente, soit une variation éventuellement complémentaire du paramètre de surface stimulée, soit une variation éventuellement complémentaire du paramètre de volume stimulé, soit une combinaison de ces variations complémentaires de paramètres du « profil caractéristique » appliqué à l'échantillon « maître ». Cette rétroaction permet d'optimiser statistiquement la réponse d'au moins un échantillon « esclave » d'au moins un « récepteur quantique » distant. Un autre mode particulier du procédé principal, appelé « procédé multi-maîtres », est défini dans le cas où au moins un même échantillon, appelé par convention « esclave », a été intriqué successivement avec plusieurs échantillons ou groupes d'échantillons, appelés par convention « maître ». Dans ce mode, on répète plusieurs fois le procédé principal, en utilisant l'un après l'autre au moins un des échantillons « maître » dans l'« émetteur quantique », et au moins un desdits échantillons « esclave » dans le « récepteur quantique », cette répétition du procédé permettant d'effectuer plusieurs déterminations de transmission d'information en remplaçant l'échantillon « maître » lorsque le vidage des électrons piégés « intriqués » de l'échantillon « maître » est soit partiel au-de-là d'un seuil de qualité, soit total.

Dans un autre mode particulier du procédé principal, on utilise au moins une sorte de matériaux photoluminescents présentant à très basses températures, comprises entre -273 °C et 0 °C, des propriétés de thermoluminescence.

Dans un autre mode particulier du procédé principal, on calcule au moins une moyenne glissante, éventuellement pondérée, sur une fraction du ou des « profils caractéristiques ». Ce calcul permet d'intégrer ou de minimiser, soit les perturbations dues au bruit de mesure (dark count), soit les perturbations dues aux rayons cosmiques, soit les perturbations électromagnétiques, soit une combinaisons de ces perturbations, afin d'optimiser le signal de la réponse d'au moins un échantillon « esclave » mesuré, lors de la variation d'au moins un paramètre de stimulation d'au moins un échantillon « maître »

Description sommaire des **dessins :**

La figure 1 représente la réponse de luminescence lors du chauffage d'un échantillons de fluorure de lithium dopé qui a été irradié à 2 Gray par les rayons gamma d'un accélérateur linéaire.

La figure 2 représente schématiquement la réponse de luminescence en terme de longueur d'onde lors du chauffage d'un échantillons de fluorure de lithium dopé

La figure 3 représente la réponse typique d'un test de montée et descente en température limitée à 245°C

La figure 4 représente la réponse typique d'un test de montée et descente en température limitée à 175°C

La figure 5 représente la réponse typique d'un test de montée et descente en température limitée à 245°C après vidage des pièges du pic à 170°C.

La figure 6 représente la réponse typique d'un test de montée et descente en température limitée à 245°C dans lequel des creux se produisent en température montante et des pics en température descendante.

La figure 7 représente une mise en oeuvre de l'invention pour mesurer la réponse de l'échantillon « esclave » lors de la montée en température de l'échantillon « maître ».

La figure 8 représente un enregistrement typique en fonction du temps d'un test de montée et descente en température limitée à 245°C à 375 secondes.

La figure 9 représente la partie de la courbe de la figure 9 sélectionnée pour calculer le coefficient de corrélation entre montée et descente en température.

La figure 10 représente la montée et la descente en température du four en fonction du temps.

La figure 11 représente la courbe de la figure 10 et la même courbe inversée dans le temps en tenant compte de la courbe de la figure 11.

La figure 12 représente la variation du coefficient de corrélation lors du glissement de plus à moins 40 secondes des courbes de la figure 12 l'une par rapport à l'autre.

La figure 13 représente un gabarit heuristique qui peut être utilisé pour effectuer la corrélation.

La figure 14 représente la courbe de la figure 10 sur laquelle le gabarit a été super-posé.

La figure 15 représente la variation du coefficient de corrélation lors du glissement de plus à moins 40 secondes des courbes de la figure 15 l'une par rapport à l'autre.

La figure 16 représente une mise en oeuvre de l'invention pour mesurer la réponse de l'échantillon « esclave » lors de la montée en température de l'échantillon « maître ». Un second échantillon « esclave » est utiliser pour optimiser la montée en température.

La figure 17 représente une mise en oeuvre de l'invention pour mesurer la réponse de deux échantillons « esclave » lors de la montée en température de l'échantillon « maître », afin d'avoir un meilleur rapport signal sur bruit.. Un second échantillon « esclave » auxiliaire est utiliser pour optimiser la montée en température.

La figure 18 représente une mise en oeuvre de l'invention pour mesurer la réponse de l'échantillon « esclave » lors de la montée en température de l'échantillon « maître », l'échantillon « esclave » étant maintenu à une température optimale.

La figure 19 représente une mise en oeuvre de l'invention pour mesurer la réponse de l'échantillon « esclave » lors de la montée en température de l'échantillon « maître ». Un second échantillon « esclave » est utilisé pour optimiser la montée en température. Un gabarit permet d'obtenir le coefficient de corrélation durant la mesure.

La figure 20 représente une mise en oeuvre de l'invention pour mesurer la réponse de deux échantillons « esclave » lors de la montée en température de l'échantillon « maître », afin d'avoir un meilleur rapport signal sur bruit.. Un second échantillon « esclave » est utiliser pour optimiser la montée en température par irradiation contrôlée.

La figure 21 représente une mise en oeuvre de l'invention pour mesurer la réponse de l'échantillon « esclave » et de l'échantillon « maître » lors de la montée en température, l'échantillon « esclave » étant maintenu à la température optimale.

La figure 22 représente une mise en oeuvre de l'irradiation d'une pluralité d'échantillons sur un plateau tournant afin d'intriquer ces échantillons.

La figure 23 représente une mise en oeuvre de l'irradiation d'une pluralité d'échantillons sur deux plateaux tournants afin d'intriquer ces échantillons.

La figure 24 représente une mise en oeuvre de l'irradiation d'une pluralité d'échantillons sur un plateau tournant, deux disques étant obtenus par subdivision et présentant des échantillons intriqués deux à deux.

La figure 25 représente une mise en oeuvre de l'irradiation simultanée d'une pluralité d'échantillons sur un plateau tournant dont un est irradié simultanément avec un échantillon « unique » par un générateur fournissant un faisceau intriqué afin d'intriquer en partie l'échantillon « unique » avec une pluralité d'échantillons du plateau.

La figure 26 représente une mise en oeuvre d'un mode de réalisation de l'invention pour mesurer la réponse d'un échantillon « esclave » sur un plateau, un échantillon « maître » étant désexcité par stimulation sur l'autre plateau.

La figure 27 représente une mise en oeuvre d'un mode de réalisation de l'invention pour mesurer la réponse d'un échantillon « esclave » « unique », pour recevoir les signaux des échantillons « maître », positionnés sur un plateau, qui sont désexcités successivement par stimulation.

La figure 28 illustre une mise en oeuvre d'un mode de réalisation de l'invention dans lequel une série de mesures temporelles est effectuée sur l'échantillon « esclave » en France, lors de la montée et descente en température de l'échantillon « maître » aux Etats Unis.

La figure 29 représente la moyenne glissante sur 20 secondes de la série de mesures temporelles précédentes.

La figure 30 illustre la corrélation visuelle entre la portion de la série de mesures glissantes précédente tracée en fonction de montée en température distante et la portion de la série de mesures glissantes précédente tracée en fonction de descente en température distante.

La figure 31 illustre l'évolution des coefficients de corrélation dans le temps entre les mesures correspondant aux étapes de montée et de descente en température du profil caractéristique utilisé sur la moyenne glissante de la figure 29, avec un maximum maximorum caractéristique à 480 secondes.

La figure 32 illustre l'organigramme des différentes opérations du procédé pour déterminer à partir des données temporelles reçues la réception quantique distante d'information ou de commande dans le mode particulier de l'invention dont le résultat est illustré à la figure 31.

Manières de réaliser **l'invention :**

Des manières de réaliser l'invention sont décrites ci-dessous. Cependant il est précisé que la présente invention peut être réalisée de différentes façons. Ainsi, les détails spécifiques mentionnés ci-dessous ne doivent pas être compris comme limitant la réalisation, mais plutôt comme une base descriptive pour supporter les revendications et pour apprendre à l'homme de l'art l'usage de la présente invention, dans pratiquement la totalité des systèmes, structures ou manières, détaillés et appropriés. Les échantillons peuvent être composés de matériaux thermoluminescents ou photoluminescents dont les raies d'émission lumineuse correspondent à plusieurs types de piéges se vidant à des températures différentes. De plus ces pièges peuvent être vidés partiellement à chaque montée en température. En conséquence, un seul groupe d'échantillons irradiés ensembles par des rayons intriqués peut servir pour transmettre un message ou un ordre comportant plusieurs digits (chiffres binaires).

La mise en ouvre la plus simple de l'invention peut se faire comme illustrée sur la figure 8 décrite précédemment. Afin d'améliorer la qualité des enregistrements et en particulier le rapport signal sur bruit, divers ajouts sont présentés.

Sur la figure 16, deux échantillons irradiés ensembles sont utilisés afin d'optimiser l'évolution de la température. Le four (22) qui contient l'échantillon « maître » (21) est alimenté en énergie. Un thermostat (19) régule la température du four. Le thermomètre numérique (23) reçoit les données de température élaborées par le circuit (24) et provenant, par exemple, du photomultiplicateur (25) illuminé par l'échantillon « esclave » auxiliaire (26) placé dans la chambre obscure (27). Le circuit du thermomètre (23) contrôle le thermostat (19) pour réaliser le profile de température optimale. Le système récepteur est placé à une distance quelconque dans un milieu quelconque schématisé par la paroi (28).

L'échantillon « esclave » utile (30) est placé dans la chambre obscure (29). Le photomultiplicateur (31), par exemple, mesure la luminescence de l'échantillon (30). Celle ci est transmise au circuit (32) pour être enregistrée par l'ordinateur (33).

Dans la mise en oeuvre de la figure 17, trois échantillons irradiés ensembles sont utilisés afin d'optimiser l'évolution de la température et de diminuer le rapport signal sur bruit. Le four (36) qui contient l'échantillon « maître » (37) est alimenté en énergie en (34). Un thermostat (35) régule la température du four. Le thermomètre numérique (38) reçoit les données de température élaborées par le circuit (39) et provenant, par exemple, du photomultiplicateur (40) illuminé par l'échantillon « esclave » auxiliaire (41) placé dans la chambre obscure (42). Le circuit du thermomètre (39) contrôle le thermostat (35) pour réaliser le profile de température optimal. Le système récepteur est placé à une distance quelconque dans un milieu quelconque schématisé par la paroi (43). L'échantillon « esclave » principal (46) est placé dans la chambre obscure (48). Le photomultiplicateur (44), par exemple, mesure la luminescence de l'échantillon « esclave » principal (46). Celle ci est transmise au circuit (50) pour être enregistrée par l'ordinateur (51). Un échantillon « esclave » secondaire (47) est placé dans le chambre obscure (49) à proximité de la chambre obscure (48). Le photomultiplicateur (45), par exemple, mesure la luminescence de l'échantillon « esclave » secondaire (47). Le signal de luminescence est envoyé au circuit (50) pour être traité avec le signal en provenance de l'échantillon « esclave » principal (46) afin de diminuer le rapport signal sur bruit

La figure 18 représente une option qui peut être appliquée à l'échantillon « esclave » principal (61) afin d'améliorer le signal de luminescence. Sur la partie gauche de la figure, l'échantillon « maître » (55) est placé dans le four (56). La température du four est mesurée par le thermomètre numérique (53). La température maximale de coupure est contrôlée par le thermostat (54), lequel ne se ré-enclenche pas à la descente en température. Le four est alimenté en énergie en (52). Le système récepteur est placé à une distance quelconque dans un milieu quelconque schématisé par la paroi (57) et à une distance quelconque. La chambre obscure (58) contient l'échantillon « esclave » (61) qui est placé en face du photomultiplicateur (63). La température de l'échantillon « esclave » (61) est régulée grâce à, par exemple, une résistance (59) et une alimentation (60). Un écran transparent (62) protège le photomultiplicateur (63). Le circuit (63) assure le comptage et l'enregistrement des impulsions dues à la luminescence de l'échantillon « esclave » (61).

Sur la partie gauche de la figure 19, l'émetteur quantique comporte dans me four (65) un générateur de rayonnement (66), par exemple un laser ou une lampe infrarouge. Le rayonnement est filtré par le filtre optique (67) pour obtenir une longueur d'onde unique, en particulier dans le cas où le vidage des pièges se fait par photo-stimulation, pour désexciter l'échantillon « maître » (68). Un circuit électronique (69) contrôle le générateur (66) et le filtre (67) à l'aide des informations en provenance d'un détecteur de luminescence (70), par exemple un photomultiplicateur, qui est illuminé par un échantillon « esclave » auxiliaire (72) placé dans la chambre obscure (71), afin d'optimiser la transmission. Le récepteur quantique, sur la partie droite de la figure, est placé à une distance quelconque dans un milieu quelconque, schématisé par la paroi (73). L'échantillon « esclave » (76) est placé dans la chambre obscure (75). Un détecteur de luminescence (77) envoie son signal vers le circuit électronique (78). Le signal est alors comparé avec le signal gabarit stocké dans la mémoire (74). Le coefficient de corrélation est enregistré dans l'ordinateur (79) qui valide ou rejette le signal.

Sur la partie gauche de la figure 20, l'émetteur quantique comporte dans me four (80) un générateur de rayonnement (81), par exemple un laser ou une lampe infrarouge. Le rayonnement est filtré par le filtre optique (82) pour obtenir une longueur d'onde unique, en particulier dans le cas où le vidage des pièges se fait par photo-stimulation, pour désexciter l'échantillon « maître » (83). Un circuit électronique (84) contrôle le générateur (81) et le filtre (82) à l'aide des informations en provenance d'un détecteur de luminescence (85), par exemple un photomultiplicateur, qui est illuminé par un échantillon « esclave » auxiliaire (87) placé dans la chambre obscure (86), afin d'optimiser la transmission. Le récepteur quantique, sur la partie droite de la figure, est placé à une distance quelconque dans un milieu quelconque, schématisé par la paroi (88). L'échantillon « esclave » primaire (93) est placé dans la chambre obscure (92). Un détecteur de luminescence (94) envoie son signal vers le circuit électronique (95). Le signal est alors comparé avec le signal d'un échantillon « esclave » secondaire (89) placé dans la chambre obscure (90). L'illumination est mesurée par le détecteur de luminescence (91). Le signal d'illumination est envoyé vers le circuit électronique (95) reçoit qui effectue une corrélation Le coefficient de corrélation est enregistré dans l'ordinateur (96) qui valide ou rejette le signal. Le circuit électronique (95) peut également effectuer une moyenne des signaux et la comparer à un gabarit comme dans la figure 20.

Dans la partie gauche de la figure 21, la luminescence de l'échantillon « maître » (103), placé dans le four (104), est mesurée par le détecteur (101). Celui-ci est protégé de la chaleur par l'écran transparent (102). Le four est alimenté en énergie en (97). La température du four est mesurée par le thermomètre électronique (98). La montée en température est optimisée par l'ordinateur (100) qui contrôle le thermostat (99) à l'aide des signaux de luminescence et de température. Le récepteur quantique, sur la partie droite de la figure, est placé à une distance quelconque dans un milieu quelconque, schématisé par la paroi (105). Sur cette figure il est similaire à celui de la figure 19. La chambre obscure (106) contient l'échantillon « esclave » (109) qui est placé en face du photomultiplicateur (111). La température de l'échantillon « esclave » (109) est régulée grâce à, par exemple, une résistance (107) et une alimentation (108). Un écran transparent (110) protège le photomultiplicateur (111). Le circuit (112) assure le comptage et l'enregistrement des impulsions dues à la luminescence de l'échantillon « esclave » (109).

Tout système de mesure sur l'échantillon « esclave » peut être associé à tout système de stimulation de l'échantillon « maître » sans sortir du cadre de l'invention. Selon un mode de réalisation de l'invention, un appareillage d'irradiation est schématisé sur la figure 22. Les groupes d'échantillons (216) sont placés sur un plateau tournant (215). Ce plateau est supporté par un axe (218) et est connecté à un moteur pas à pas (210), lui-même commandé par une minuterie (219). Les groupes d'échantillons sont présentés l'un après l'autre devant le faisceau de rayons gamma d'un accélérateur linéaire compact (213) par exemple. Un absorbeur (217) arrête les rayons gamma non absorbés. En général les accélérateurs ne peuvent pas fonctionner en permanence. Un certain nombre d'unités de temps d'irradiation, par exemple de 1 minute, est appliqué à chaque échantillon pour obtenir l'excitation optimale à l'aide d'une minuterie (214). Dans le cas d'échantillons de fluorure de lithium dopé, une excitation de 2 minutes avec un accélérateur linéaire compact suffit pour obtenir une dose de 2 Gray. Ces échantillons sont alors maintenus dans l'obscurité de façon à ne pas augmenter le « fading ». Il est également possible d'utiliser un accélérateur fournissant des rayons X par effet Bremsstrahlung.

La figure 23 illustre un mode d'irradiation des échantillons placés sur deux plateaux. Les échantillons (114) et (118) sont irradiés simultanément à la même distance de l'accélérateur (193). Il est contrôlé par une minuterie (192) synchronisée avec la position des échantillons. Un absorbeur (119) arrête les rayons gamma non absorbés par les échantillons. Les échantillons sont placés sur deux plateaux (191) et (115) supportés par des axes (116) et (120). Deux moteurs pas à pas (117) et (121) assurent la rotation synchrone des plateaux. Une minuterie (122) synchronisée avec la minuterie (192) de l'accélérateur contrôle le fonctionnement des moteurs pas à pas.

Lesdits échantillons peuvent être également incorporés dans les disques de façon discrète ou continue. Le même résultat peut-être obtenu avec l'utilisation de rubans ou de bandes pour porter les échantillons ou les incorporer de façon discrète ou continue. Il est également possible d'utiliser un accélérateur fournissant des rayons X par effet Bremsstrahlung.

La figure 24 illustre un mode particulier d'utilisation de faisceaux de rayons X ou gamma intriqués pour intriquer des échantillons thermoluminescents placés sur un seul support (191). On retrouve des éléments qui sont décrits ci-dessus pour la figure 23. Dans cette préparation, après avoir procédé aux irradiations successives des échantillons, on effectue une subdivision (128) : on dispose alors de deux disques (130) et (131). Certains échantillons sont intriqués deux à deux, par exemple (132) et (133) qui est issu de la division de l'échantillon (118)

La figure 25 illustre la préparation des échantillons utilisés dans le mode « mono-maître multiple / multi-esclave unique » de l'invention. Un générateur (143) produit par effets Bremsstrahlung un faisceau de photons X ou gamma intriqués. Ce faisceau intriqué irradie successivement les échantillons thermoluminescents (148) du plateau (147) et aussi l'échantillon thermoluminescent (149) fixe. Un absorbeur (151) arrête les photons qui n'ont pas interagi avec les échantillons. Les échantillons qui sont portés par le plateau (147) forment les futurs échantillons « mono-maître » (148) et l'échantillon unique placé sur le support (153) forme le futur échantillon « multi-esclave » (149) dont la mesure ultérieure pourra être répétée un grand nombre de fois lors des transmissions quantiques ultérieures. Un moteur pas à pas (150) commande la rotation du plateau (147). Une minuterie (154) alimentée en énergie en (155) commande le moteur pas à pas et le circuit électronique (146), lui même alimenté en énergie en (145). Ce circuit commande le fonctionnement de l'ensemble (143) qui génère des rayons intriqués gamma ou X (144).

La figure 26 montre l'exploitation d'échantillons intriqués deux à deux sur des plateaux. Sur la partie gauche de la figure, le plateau « maître » (159) est placé dans la chambre (157). L'échantillon (160), par exemple, est stimulé par chauffage (thermo désexcitation) ou par photo désexcitation à l'aide du générateur (158). Ce générateur est commandé par le circuit électronique (156). Le plateau est supporté par l'axe (161) relié au moteur pas à pas (162). Une minuterie dans le circuit électronique (156) commande le générateur (158) et le moteur pas à pas (162) pour la synchronisation du procédé. Le récepteur quantique, sur la partie droite de la figure, est placé à une distance quelconque dans un milieu quelconque, schématisé par la paroi (163). Le plateau « esclave » (167) est placé dans la chambre obscure (166) ; il est supporté par l'axe (169) relié au moteur pas à pas (170). Un détecteur de luminescence (165) effectue une série de mesure de la luminescence sur l'échantillon (168). Les mesures sont enregistrées dans l'ordinateur (164) qui applique l'un des modes du procédé de l'invention plus particulièrement applicable à une série de mesures sur un échantillon « esclave » afin de déterminer une réception quantique d'information. Une minuterie dans l'ordinateur (164) commande le moteur pas à pas (170) pour la synchronisation du procédé.

La figure 27 est une illustration du mode « multi-maître » de l'invention. Elle illustre une utilisation particulière du disque produit comme indiqué à la figure 25 avec un échantillon « esclave » « unique » spécialement préparé en lieu et place d'un autre plateau. Afin d'optimiser éventuellement ses propriétés de réponse aux stimulations appliquées aux échantillons du plateau « maître », l'échantillon « esclave » « unique » peut, par exemple, être de surface plus importante. Sur la figure 27 l'émetteur quantique fonctionne comme l'émetteur quantique de la figure 26. Le récepteur quantique, sur la partie droite de la figure 27, est placé à une distance quelconque dans un milieu quelconque, schématisé par la paroi (178). L'échantillon « esclave » « unique » (180) est placé dans la chambre obscure (179) ; il est posé sur un support (181). Un détecteur de luminescence (182) effectue un série de mesures la luminescence sur l'échantillon « esclave » « unique » (180). Les mesures sont enregistrées dans l'ordinateur (183) qui applique une recherche de corrélation selon l'un des modes du procédé de l'invention plus particulièrement applicable à une série de mesures sur un seul échantillon « esclave », afin de déterminer une réception quantique d'information. Le récepteur quantique peut opérer en continu sur l'échantillon « esclave » « unique », alors que l'émetteur quantique, schématisé sur la partie gauche de la figure 27, stimule par thermo désexcitation ou par photo désexcitation au moyen du générateur d'énergie calorifique ou optique (172), une ou plusieurs fois, un des échantillons « maîtres » du plateau (174), successivement selon l'optimisation du procédé. Le plateau est placé dans l'enceinte (173), il est supporté par l'axe (176) connecté au moteur pas à pas (177). Une minuterie (171) commande le générateur (172) et le moteur pas à pas (177) pour la synchronisation du procédé.

**Meilleure manière de réaliser l'invention :**

Dans un mode particulier de réalisation préféré, deux échantillons thermoluminescents constitués de fluorure de lithium dopé, sont irradiées ensembles par des rayons X provenant d'une cible de tungstène, par effet Bremsstrahlung, pendant une durée suffisante pour piéger des électrons intriqués dans ces cristaux, par exemple pendant 10 secondes. Ces échantillons sont séparés et transportés sur une grande distance, par exemple de 8500 km. Ainsi, dans la réalisation présentée, un des échantillons demeure à Givarlais en France, l'échantillon « esclave », et l'autre, l'échantillon « maître » est transporté à Stillwater, Oklahoma, aux Etats-Unis.

Le procédé d'émission quantique au moyen d'une stimulation par chauffage est appliqué à l'échantillon « maître » : le profil caractéristique de température comporte une étape de montée de 20°C jusqu'à 251 °C, et une étape de descente en température de 251 °C jusqu'à 70°C.

Le procédé de réception quantique comprend la réalisation de la série de mesures temporelles de luminescence de l'échantillon « esclave » maintenu à une température constante de 20°C et l'interprétation de ces mesures.

La figure 32 détaille les traitements successifs du procédé permettant de déterminer la réception d'une information ou d'une commande distante résultant de la transmission quantique. Tout d'abord, la série de mesures temporelles (197), exprimée en coups par seconde (CPS), est enregistrée par le détecteur de photons, par exemple les photomultiplicateurs (31, 44, 45, 63, 77, 91, 94 ou 111). Ces mesures sont illustrées sur la figure 28 par la courbe (184).

Afin de diminuer les bruits de fond du détecteur de photons, le procédé de la figure 32 applique une moyenne glissante (198) sur les mesures précédentes, par exemple de 20 secondes. La figure 29 représente cette moyenne glissante (185) et pour information l'instant de retournement (186) correspondant au maximum de température de l'échantillon « maître » distant, cet instant n'étant pas connu du récepteur quantique et étant l'un des objets du procédé de détermination de la transmission d'une information ou d'une commande distante.

La figure 30 représente en fonction de la température de l'échantillon « maître » distant de 8500 km, la courbe (187), enregistrée sur l'échantillon « esclave », situé en France, lors de la stimulation par chauffage de l'échantillon « maître », situé aux Etats Unis, de 20°C à 251 °C. La courbe épaisse (188) est enregistrée également sur l'échantillon « esclave », situé en France, lors de la descente en température de 251°C à 70°C de l'échantillon « maître », situé aux Etats Unis. Ces courbes sont calculées à partir de la courbe (185) de la figure 29 et de l'instant de retournement (186). Ces courbes sont données à titre indicatif pour visualiser la corrélation malgré le bruit du photomultiplicateur utilisé. Elles ne peuvent être tracées qu'après la détermination du point de retournement.

Dans le procédé de la figure 32, la corrélation est évaluée à chaque nouvelle mesure disponible, sur une portion de la série de moyennes glissantes correspondant à la durée du profil caractéristique de température et du retard induit pas la moyenne glissante. Chaque valeur de corrélation est évaluée comme si l'émetteur quantique terminait une stimulation selon le profil caractéristique.

Une portion de la série de données obtenues par moyenne glissante (199) correspondant à l'étape de températures montantes du profil caractéristique est mise en relation, pour les mêmes températures du profil caractéristique, avec la transformation (201) de la portion de la série de données (200) obtenues par moyenne glissante selon l'étape de températures descendantes du profil caractéristique.

Le calcul des coefficients de corrélation (202) est effectué pour différentes plages de température (qui correspondent à des profils caractéristiques de longueurs différentes), avec les deux portions de série de données (199) et (200) au fur et à mesure de la disponibilité des valeurs de données temporelles consécutives.

La figure 31 représente la variation des coefficients de corrélation en fonction du temps dans la base de temps de l'émetteur quantique, chacune des valeurs de corrélation ne pouvant être calculée en temps réel qu'après la durée du profil caractéristique correspondant. Trois courbes sont calculées : la courbe (191) donne le coefficient de corrélation sur une plage montante et descendante de température de 200°C à 251 °C (profil caractéristique court), la courbe (192) donne le coefficient de corrélation sur une plage montante et descendante de température de 175°C à 251°C (profil caractéristique moyen), la courbe (193) donne le coefficient de corrélation sur une plage montante et descendante de température de 150°C à 251 °C (profil caractéristique long).

Dans le procédé de la figure 32, l'interprétation de la variation d'un coefficient de corrélation dans le temps est effectuée en (203) par la recherche d'un maximum maximorum et de deux minima techniques (204) afin d'effectuer la détermination d'une réception quantique d'information ou de commande distante (205). Sur la figure 31, on note le maximum maximorum (194) des courbes à 480 secondes qui correspond au temps où l'échantillon « maître » distant (par exemple 103, figure 21) a atteint sa température maximale de 251 °C. La coupure de l'alimentation du four (par exemple 104, figure 21) se produit 10 secondes avant le maximum de corrélation, soit à 470 secondes en (190) sur la figure 31. Les coefficients de corrélations sont calculés soit en différé dès disponibilité des valeurs permettant de calculer la corrélation sur la base du profil caractéristique le plus long, soit au fur et à mesure de la disponibilité des valeurs, le coefficient de corrélation associé à un profil caractéristique court étant en relation avec la stimulation distante en avance de phase dans ce cas : les trois coefficients de corrélation sont néanmoins exploités dans une même base de temps mettant en relation l'instant de retournement de la température des profils caractéristiques pour permettre la comparaison des corrélations comme représentée sur la figure 31. La présence de 3 maximum maximorum (194) est caractéristique de la détection de la stimulation distante. On note également que deux anti-corrélations techniques (195) et (196) se produisent quasi-symétriquement par rapport au pic de corrélation (194). Ces anti-corrélations techniques peuvent varier selon l'optimisation des procédés de transmission quantique mis en oeuvre. Les maxima maximorum (194) permettent de déterminer l'instant où la température maximale de l'échantillon « maître », par exemple (21, 37, 55, 68, 76, 83 ou 103) est atteinte. Le procédé est utilisé aux fins de réaliser la détermination d'une réception quantique distante d'information ou de commande. Selon l'optimisation du procédé de transmission quantique, les mêmes échantillons permettent d'effectuer une ou plusieurs transmissions quantiques successives à des instants différents. Selon l'optimisation du procédé de transmission quantique, plusieurs échantillons « maître » intriqués avec un même échantillon « esclave » peuvent être utilisés. L'homme de l'art pourra aussi appliquer le procédé aux produits complexes définis dans [7].

L'homme de l'art peut évidemment étendre cet enseignement à d'autres variantes de réalisation sans sortir du cadre de cette invention. En particulier les fréquences de déterminations d'information ou de commande distante peuvent être augmentées en fonction de l'optimisation du procédé de transmission quantique et des profils caractéristiques adaptés peuvent être définis sans sortir du cadre de cette invention.

**Possibilités d'applications industrielles :**

Différentes applications industrielles sont immédiatement envisageables, signaux de secours dans les mines, les fonds marins, sur des distances interplanétaires, etc. Le procédé, objet de l'invention, permet aussi d'effectuer des transmissions quantiques dans des conditions d'environnement dans lesquelles les transmissions électromagnétiques sont difficiles, voire impossibles. De plus ces transmissions quantiques ne peuvent être ni détectées, ni perturbées par des tiers. Elles sont rigoureusement secrètes. Toutefois un ou des échantillons « esclave » supplémentaires peuvent être remis à des tiers de confiance pour effectuer des enregistrements selon les législations applicables.

Des dispositifs selon l'invention, y compris des kits commerciaux de démonstration du procédé, peuvent être réalisés.

Le procédé selon l'un quelconque des modes de l'invention peut être utilisé, soit pour transmettre des informations ou des commandes, soit pour recevoir des informations ou des commandes, soit pour transmettre et recevoir des informations ou des commandes.

D'une manière générale, les dispositifs de mise en oeuvre du procédé selon l'un quelconque des modes de l'invention sont caractérisés en ce qu'ils comprennent au moins un des appareillages suivants, dans la mesure où il est destiné à appliquer la partie du procédé, objet du procédé principal ou d'un des modes du procédé principal, située sur le lieu de couverture de ce brevet, y compris les aéronefs, les vaisseaux marins, sous-marins et spatiaux, et les sondes terrestres, marines et spatiales :

- un ou des équipements « émetteurs quantiques » appliquant une stimulation selon ledit ou lesdits « profils caractéristiques »
- un ou des équipements « récepteurs quantiques » déterminant au moins une information ou une commande distante selon ledit ou lesdits profils caractéristiques.

Références

[1] Weber M. J. and Tompson B. J. « Selected Papers on Photoluminescence of Inorganic Solids», SPIE Milestone Series, V. Ms 150, Aug 1998.

[2] Justus B. L. et al., «Dosimetry measurements», CRC Press LLC,(2000).

[3] Shani G., « Radiation Dosimetry: Instrumentation and Methods», CRC Press (January 2001).
[4] Botter-Jensen L., McKeever S; W; S., and Wintle A; G., « Optically Stimulated Luminescence Dosimetry », Elsevier, Amsterdam, NL, (2003).
[5] McKeever S. W. S., « Thermoluminescence of solids », Cambridge University Press, 1985.
[6] Furetta C., « Handbook of Thermoluminescence », World Scientific Publishing.
[7] Desbrandes, R., et Van Gent D. L. « Procédé et Appareillage pour Communiquer à Distance en utilisant la Photoluminescence ou la Thermoluminescence », Demande Internationale à l'OMPI N° WO 2005/117306, du 23 mai 2005.
[8] MacKeever S. W. S. et al. « Thermoluminescence Dosimetry Materials: Properties and Uses », Nuclear Technologiy Publishing, Ashford, UK, 1995.
[9] Einstein A., Podolsky B., Rosen N., « Can Quantum-Mechanical Description of Physical Reality Be Considered Complete? », Phys. Rev. 47, 777, (1935).
[10] Bell J. S., « Speakable and Unspeakable in Quantum Mechanics », New York, Cambridge University Press, 1993.
[11] Aspect A., « Trois tests expérimentaux des inégalités de Bell par mesure de corrélation de polarisation de photons », Doctoral Dissertation, Université Paris-Orsay, 1er Février 1983.
[12] Townsend P. D., Rarity J. G., Tapster P. R., « Single-Photon Interference in 10 km Long Optical-Fiber », Electronics Letters, V 29, p. 634, 1993.
[13] Duncan A. J., and Kleinpoppen H., « Quantum Mechanics versus Local Realism », (F. Selleri, ed.), Plenum, New York, 1988.
[14] Greenberger D., et al,. « Bell's Theorem Without Inequalities », Amer. J. of Phys., 58, (12), Dec. 1990.
[15] Whitley V. H. et McKeever S. W. S., Linearly modulated photoconductivity and linearly modulated optically stimulated luminescence measurements on Al2O3:C, J. of Appl. Phys. 90, 6073-6083, 2001

**Revendications**

1. Procédé pour communiquer à distance en utilisant l'interprétation de signaux de thermoluminescence ou de photoluminescence dans lequel on utilise entre autres :

   - au moins un groupe d'échantillons comportant au moins une sorte de matériaux ayant des propriétés de thermoluminescence et / ou de photoluminescence, qui présentent des liaisons, appelées par convention liaisons « quantiques », entre des électrons piégés desdits matériaux, ledit groupe d'échantillons étant appelé par convention le groupe d'échantillons « intriqués »,
   - au moins la stimulation par thermo désexcitation ou photo désexcitation,

   **caractérisé en ce que** :

   - au moins un équipement « émetteur quantique » (par exemple fig. 7 - gauche, fig. 16 gauche, fig.17 gauche, fig.18 - gauche, fig. 19 - gauche, fig. 20 - gauche, fig.21 - gauche, fig. 26 - gauche, fig. 27 - gauche), comportant au moins un échantillon « intriqué » (par exemple 9, 21, 37, 55, 68, 83, 103, 160, 175) dudit groupe, effectue une transmission d'information, appelée « transmission quantique », au moyen d'une stimulation, soit par thermo désexcitation (par exemple fig. 1), soit par photo désexcitation (par exemple fig. 2), soit par une combinaison des deux, sur tout ou partie dudit échantillon « intriqué », appelé échantillon « intriqué » « maître », durant un intervalle de temps, en appliquant, selon le mode, un ou successivement plusieurs profils heuristiques de variation d'au moins un paramètre de la stimulation appliquée dans le temps, appelés par convention « profils caractéristiques » (par exemple fig. 10), de façon à modifier transitoirement la probabilité de désexcitation de certains des électrons piégés intriqués, au moyen de la stimulation appliquée par le ou lesdits « profils caractéristiques », et optionnellement par rétroaction (par exemple fig. 16 - gauche, fig. 17 - gauche),
   - au moins un équipement « récepteur quantique » (par exemple fig. 7 - droite, fig. 16 - droite, fig.17 - droite, fig.18 - droite, fig. 19 - droite, fig. 20 - droite, fig. 21 - droite, fig. 26 - droite, fig. 27 - droite), comportant au moins un échantillon « intriqué » (par exemple 16, 30, 46, 47, 61, 76, 89, 93, 109, 168, 180) dudit groupe, effectue dans le temps au moins une série de mesures de la luminescence (fig. 8, fig. 9, fig. 28) dans au moins une raie optique ou au moins une bande de longueurs d'ondes optiques, sur ledit ou lesdits échantillons « intriqués », appelés échantillons « intriqués » « esclaves », une ou plusieurs desdites séries de mesures étant interprétées par au moins une méthode de calcul de corrélation (par exemple fig. 3, fig. 11, fig. 14, fig. 32), en relation avec au moins une propriété du ou des « profils caractéristiques » utilisés par l'« émetteur quantique », pour déterminer la réception d'au moins une information (par exemple fig. 12, fig. 15, fig. 31), codée par ledit ou lesdits « profils caractéristiques », ladite réception étant dénommée « réception quantique ».

2. Procédé selon la revendication 1 **caractérisé en ce qu'**au moins un « profil caractéristique » (par exemple fig. 10) utilise une variation d'un paramètre de stimulation afin d'exploiter au moins un pic de luminescence (par exemple fig. 1, fig. 2) caractéristique d'au moins une sorte de matériaux ayant des propriétés de thermoluminescence.

3. Procédé selon la revendication 1 **caractérisé en ce qu'**au moins un « profil caractéristique » utilise, soit au moins une variation du paramètre de température (par exemple fig. 10), soit au moins une variation du paramètre d'intensité lumineuse, soit au moins une variation du paramètre de longueur d'onde incidente, soit au moins une variation du paramètre de surface stimulée, soit au moins une variation du paramètre de volume stimulé, de façon à modifier transitoirement la probabilité de désexcitation de certains des électrons piégés intriqués en fonction dudit ou desdits paramètres.

4. Procédé selon la revendication 1 **caractérisé en ce que** le « profil caractéristique » (par exemple fig. 10) utilise au moins une variation de la température dans le temps comportant une ou plusieurs étapes, soit de montée en température, soit de descente en température, soit de maintien de la température, soit une combinaison de tout ou partie de ces étapes, de façon à modifier transitoirement la probabilité de désexcitation de certains des électrons piégés intriqués pour les températures appliquées (par exemple fig. 3, fig. 4, fig. 5, fig. 6, fig. 8, fig. 11, fig. 14, fig. 30), selon ledit « profil caractéristique », lors de la stimulation.

5. Procédé selon la revendication 1 **caractérisé en ce qu'**au moins un « profil caractéristique » utilise au moins une variation de l'intensité lumineuse dans le temps comportant une ou plusieurs étapes, soit d'augmentation de ladite intensité lumineuse, soit de diminution de ladite intensité lumineuse, soit de maintien ladite intensité lumineuse, soit une combinaison de tout ou partie de ces étapes, de façon à modifier transitoirement la probabilité de désexcitation de certains des électrons piégés intriqués pour les intensités lumineuses appliquées, selon ledit « profil caractéristique », lors de la stimulation.

6. Procédé selon la revendication 1 **caractérisé en ce qu'**au moins un « profil caractéristique » utilise au moins une variation de la longueur d'onde incidente dans le temps, par exemple comprise entre 300 nm et 800 nm, comportant une ou plusieurs étapes, soit d'augmentation de ladite longueur d'onde, soit de diminution de ladite longueur d'onde, soit de maintien de ladite longueur d'onde, soit une combinaison de tout ou partie de ces étapes, de façon à modifier transitoirement la probabilité de désexcitation de certains des électrons piégés intriqués pour les longueurs d'ondes incidentes appliquées (par exemple fig. 2), selon ledit « profil caractéristique », lors de la stimulation.

7. Procédé selon la revendication 1 **caractérisé en ce qu'**au moins un « profil caractéristique » utilise au moins une variation de la surface stimulée dans le temps comportant une ou plusieurs étapes, soit d'augmentation de ladite surface stimulée, soit de diminution de ladite surface stimulée, soit de maintien de ladite surface stimulée, soit une combinaison de tout ou partie de ces étapes, de façon à modifier transitoirement la probabilité de désexcitation de certains des électrons piégés intriqués sur la surface stimulée, selon ledit « profil caractéristique », lors de la stimulation.

8. Procédé selon la revendication 1 **caractérisé en ce qu'**au moins un « profil caractéristique » utilise au moins une variation du volume stimulée dans le temps comportant une ou plusieurs étapes, soit d'augmentation dudit volume stimulé, soit de diminution dudit volume stimulé, soit de maintien dudit volume stimulé, soit une combinaison de tout ou partie de ces étapes, de façon à modifier transitoirement la probabilité de désexcitation de certains des électrons piégés intriqués sur le volume stimulé, selon ledit « profil caractéristique », lors de la stimulation.

9. Procédé selon la revendication 1 **caractérisé en ce que** les mesures de la luminescence, dans au moins une raie optique ou au moins une bande de longueurs d'ondes optiques, effectuées sur au moins un échantillon « intriqué » « esclave » sont corrigées temporellement selon un modèle prenant en compte des probabilités de désexcitation des électrons piégés intriqués dans ledit échantillon « intriqué » « esclave », lors de l'effondrement des liaisons « quantiques » résultant de l'application du « profil caractéristique » de stimulation à au moins un échantillon « intriqué » « maître ».

10. Procédé selon la revendication 1 **caractérisé en ce que** la température d'au moins un échantillon « intriqué » « esclave » mesurée dans le « récepteur quantique » est optimisée, de façon à optimiser la réponse de désexcitation des pièges intriqués dudit ou desdits échantillons « intriqués » « esclaves » lors de la « réception quantique ».

11. Procédé selon la revendication 1 **caractérisé en ce que** ledit ou lesdits « profils caractéristiques » appliqués sont de courtes durées, par exemple comprises entre 1 microseconde et 100 millisecondes, afin de réduire le taux de pièges intriqués désexcités durant l'application dudit ou desdits « profils caractéristiques », ledit ou lesdits « profils caractéristiques » étant plus particulièrement applicables à la stimulation par photo désexcitation, soit en variation de la longueur d'onde, soit en variation de l'intensité, soit en variation de la surface, ou soit par une combinaisons de ces stimulations.

**12.** Procédé selon la revendication 1 **caractérisé en ce que** :

- au moins un « profil caractéristique » (par exemple fig. 10) utilisé par l'« émetteur quantique » comporte au moins une première étape de variation d'au moins un paramètre de stimulation et au moins une seconde étape de variation du même paramètre comportant au moins des valeurs communes ou une plage de valeurs communes,
- et **en ce que** la méthode de calcul de corrélation utilise :

  o au moins une transformation de ladite série de mesures, en relation avec ledit « profil caractéristique », pour calculer, par exemple par interpolation, au moins une nouvelle première série de mesures (par exemple 1, 4, 5, 187) dont l'abscisse est exprimée dans l'unité du paramètre de stimulation, en relation avec au moins la première étape de variation,
  o et au moins une autre transformation de ladite série de mesures, en relation avec ledit « profil caractéristique », pour calculer, par exemple par interpolation, au moins une nouvelle seconde série de mesures (par exemple 2, 3, 6, 188) dont l'abscisse est exprimée dans l'unité du paramètre de stimulation, en relation avec au moins la seconde étape de variation,
  o et **en ce qu'**au moins une valeur de corrélation est calculée entre la nouvelle première série de mesures et la nouvelle seconde série de mesures, afin de déterminer la réception d'au moins une information, codée par ledit ou lesdits « profils caractéristiques ».

**13.** Procédé selon la revendication 1 **caractérisé en ce que** ladite ou lesdites séries de mesures sont interprétées pour déterminer la transmission d'au moins une information codée par le ou lesdits « profils caractéristiques » (par exemple fig. 10), par la recherche, soit d'au moins un maxima maximorum de corrélation caractérisant au moins une corrélation (par exemple fig. 12, fig. 15, fig. 31), soit d'au moins un minima minimorum de corrélation caractérisant au moins une anti-corrélation, soit d'au moins un maxima maximorum de corrélation et d'au moins un minima minimorum de corrélation, caractérisant au moins une corrélation et une anti-corrélation, sur la durée dudit ou desdits « profils caractéristiques », la corrélation « instantanée » étant calculée, soit à des instants pré-déterminés, soit continûment, soit sur des intervalles de temps, ces instants ou ces intervalles étant éventuellement connus de l'« émetteur quantique » et du « récepteur quantique » dans un mode partiellement ou totalement synchronisé, soit selon une combinaison de ces modalités, sur au moins une fenêtre temporelle (par exemple fig. 9), éventuellement glissante, dimensionnée en relation avec au moins une propriété dudit ou desdits « profils caractéristiques », ladite corrélation « instantanée » étant comprise, lorsqu'elle est normalisée, entre la valeur « -1 » et « +1 », ladite corrélation « instantanée » étant par exemple évaluée selon le mode par l'une des méthodes suivantes :

- soit par une méthode de corrélation (M1) entre ladite série de mesures, éventuellement après application d'une transformation, et un gabarit (par exemple fig. 13),
- soit par une méthode de corrélation (M2), lorsque l'information est codée par l'« émetteur quantique » par au moins deux « profils caractéristiques » décalés d'au moins une valeur de temps connue de l'« émetteur quantique » et du « récepteur quantique », entre ladite série de mesures et ladite série de mesures décalée temporellement, éventuellement après application d'une transformation,
- soit par une méthode de corrélation (M3), lorsque l'information est codée par l'« émetteur quantique » par au moins un « profil caractéristique » permettant de mettre en correspondance au moins un ensemble de valeurs d'au moins un paramètre de la stimulation qui sont appliquées à des temps différents, entre ladite série de mesures, et ladite série inversée temporellement, éventuellement après application d'une transformation (par exemple fig. 11),
- soit par une méthode de corrélation (M4) entre lesdites séries de mesures sur au moins deux échantillons « intriqués » « esclave » mesurés (par exemple fig. 17),
- soit par une méthode de corrélation (M5) (par exemple fig. 2) entre au moins deux desdites séries de mesures sur au moins un échantillon « intriqué » « esclave » mesuré, par exemple dans au moins deux raies optiques ou au moins deux bandes de longueurs d'ondes optiques ou au moins une raie optique et au moins une bande de longueurs d'ondes optiques, éventuellement après application de transformations,

ledit ou lesdits maxima maximorum de corrélation lorsqu'ils sont supérieurs à un seuil de confiance dépendant de l'optimisation du procédé, par exemple « + 0,7 », et ledit ou lesdits minima minimorum de corrélation lorsqu'ils sont inférieurs à un seuil de confiance dépendant de l'optimisation du procédé, par exemple « - 0,7 », caractérisant au moins une réception quantique d'une information codée selon ledit ou lesdits « profils caractéristiques ».

**14.** Procédé selon la revendication 13, plus particulièrement applicable au mode utilisant la méthode (M1), **caractérisé en ce que** la corrélation « instantanée » est calculée entre :

- ladite série de mesures du « récepteur quantique » (par exemple fig. 8) ou une fonction desdites mesures, lorsque plusieurs échantillons « intriqués » « esclaves » sont employés, par exemple à l'aide d'une moyenne pondérée, le résultat étant dénommé la série de mesures brutes, ladite série de mesures brutes pouvant subir une transformation appliquée à un sous-ensemble desdites mesures brutes, par exemple une moyenne glissante sur une fraction de la durée dudit ou desdits « profils caractéristiques », ou encore une transformation corrigeant l'effet du « profil caractéristique », lesdites mesures résultantes étant dénommées la « série de mesures modifiées »,
- et un gabarit de réponse de désexcitation des pièges intriqués (par exemple fig. 13), qui a été calibré préalablement pour ledit ou lesdits « profils caractéristiques » utilisés, et, soit au moins pour l'échantillon « intriqué » « esclave » utilisé, soit au moins pour un échantillon « intriqué » « esclave » typique, ou encore au moins calibré au moyen d'un calcul heuristique utilisant au moins une courbe de réponse de thermoluminescence ou de photoluminescence de ladite sorte de matériaux et ledit ou lesdits « profils caractéristiques ».

**15.** Procédé selon la revendication 13, plus particulièrement applicable au mode utilisant la méthode (M2), **caractérisé en ce que** les valeurs de temps prédéterminées de décalages sont soit fixes, soit pseudo aléatoires selon la même graine, la corrélation « instantanée » étant calculée entre :

- ladite série de mesures du « récepteur quantique » (par exemple fig. 8) ou une fonction desdites mesures, lorsque plusieurs échantillons « intriqués » « esclaves » sont employés, par exemple à l'aide d'une moyenne pondérée, le résultat étant dénommé la série de mesures brutes, ladite série de mesures brutes pouvant subir une transformation appliquée à un sous-ensemble desdites mesures brutes, par exemple une moyenne glissante sur une fraction de la durée dudit ou desdits « profils caractéristiques », ou encore une transformation corrigeant l'effet dudit ou desdits « profils caractéristiques », lesdites mesures résultantes étant dénommées la « série de mesures modifiées »,
- et ladite série de mesures brutes, décalée temporellement de la ou des valeurs de temps prédéterminées, ladite série de mesures brutes pouvant subir une transformation appliquée à un sous-ensemble desdites mesures brutes, par exemple une moyenne glissante sur une fraction de la durée dudit ou desdits « profils caractéristiques », ou encore une transformation corrigeant l'effet dudit ou desdits « profils caractéristiques », lesdites mesures résultantes étant dénommées la « série de mesures modifiées décalées », afin d'établir une correspondance entre les mêmes valeurs de paramètres de stimulation, correspondance qui se manifeste entre les mesures lors d'une « réception quantique ».

**16.** Procédé selon la revendication 13, plus particulièrement applicable au mode utilisant la méthode (M3), **caractérisé en ce que** la corrélation « instantanée » est calculée entre :

- ladite série de mesures du « récepteur quantique » (par exemple 184, 197) ou une fonction desdites mesures, lorsque plusieurs échantillons « intriqués » « esclaves » sont employés, par exemple à l'aide d'une moyenne pondérée, le résultat étant dénommé la série de mesures brutes, ladite série de mesures brutes pouvant subir une transformation appliquée à un sous-ensemble desdites mesures, par exemple une moyenne glissante (par exemple fig. 8, fig 29 - 185) sur une fraction de la durée dudit ou desdits « profils caractéristiques », ou encore une transformation corrigeant l'effet dudit ou desdits « profils caractéristiques », lesdites mesures résultantes étant dénommées la « série de mesures modifiées » (par exemple 185, 199),
- et ladite série de mesures brutes, éventuellement modifiées selon l'optimisation du procédé, ladite série de mesures étant inversée temporellement, ladite série de mesures brutes pouvant subir une transformation appliquée à un sous-ensemble desdites mesures, par exemple une moyenne glissante sur une fraction de la durée dudit ou desdits « profils caractéristiques », ou encore une transformation corrigeant l'effet dudit ou desdits « profils caractéristiques », lesdites mesures résultantes étant dénommées la « série de mesures inversées» (par exemple 201), afin d'établir une correspondance entre les mêmes valeurs de paramètres de stimulation (par exemple fig. 11, fig. 30), correspondance qui se manifeste entre les mesures lors d'une « réception quantique » (par exemple fig. 12, fig. 31).

**17.** Procédé selon la revendication 13, plus particulièrement applicable au mode utilisant la méthode (M4), **caractérisé en ce que** la corrélation « instantanée » est calculée entre :

- ladite série de mesures sur le premier échantillon « intriqué » « esclave » du « récepteur quantique » ou une fonction des mesures d'un premier ensemble d'échantillons « intriqués » « esclave », lorsque plusieurs échantillons « intriqués » « esclaves » sont employés, par exemple à l'aide d'une moyenne pondérée, le résultat étant dénommé la première série de mesures brutes, ladite série de mesures brutes pouvant subir une transformation appliquée à un sous-ensemble desdites mesures, par exemple une moyenne glissante sur une fraction de la durée dudit ou desdits « profils caractéristiques », lesdites mesures résultantes étant dénommées la « première série de mesures modifiées »,
- et ladite série de mesures sur le deuxième échantillon « intriqué » « esclave » du « récepteur quantique » ou une fonction des mesures d'un second ensemble d'échantillons « intriqués » « esclave » disjoint du précédent, lorsque plusieurs échantillons « intriqués » « esclaves » sont employés, par exemple à l'aide d'une moyenne pondérée, le résultat étant dénommé la seconde série de mesures brutes, ladite série de mesures brutes pouvant subir une transformation appliquée à un sous-ensemble desdites mesures, par exemple une moyenne glissante sur une fraction de la durée dudit ou desdits « profils caractéristiques », lesdites mesures résultantes étant dénommées la « seconde série de mesures modifiées ».

**18.** Procédé selon la revendication 13, plus particulièrement applicable au mode utilisant la méthode (M5), **caractérisé en ce que** la corrélation « instantanée » est calculée entre :

- ladite série de mesures dans la première raie optique ou bande de longueurs d'ondes optiques, du « récepteur quantique » ou une fonction desdites mesures, lorsque plusieurs échantillons « intriqués » « esclaves » sont employés, par exemple à l'aide d'une moyenne pondérée, le résultat étant dénommé la série de mesures brutes, ladite série de mesures brutes pouvant subir une transformation appliquée à un sous-ensemble desdites mesures, par exemple une moyenne glissante sur une fraction de la durée dudit ou desdits « profils caractéristiques », ou encore une transformation heuristique normalisant lesdites mesures pour ledit ou lesdits « profils caractéristiques » en relation avec les différentes longueurs d'ondes mesurées, lesdites mesures résultantes étant dénommées la « première série de mesures modifiées »,
- et ladite série de mesures dans la seconde raie optique ou bande de longueurs d'ondes optiques, du « récepteur quantique » ou une fonction desdites mesures, lorsque plusieurs échantillons « intriqués » « esclaves » sont employés, par exemple à l'aide d'une moyenne pondérée, le résultat étant dénommé la série de mesures brutes, ladite série de mesures brutes pouvant subir une transformation appliquée à un sous-ensemble desdites mesures, par exemple une moyenne glissante sur une fraction de la durée dudit ou desdits « profils caractéristiques », ou encore une transformation heuristique normalisant lesdites mesures pour ledit ou lesdits « profils caractéristiques » en relation avec les différentes longueurs d'ondes mesurées, lesdites mesures résultantes étant dénommées la « seconde série de mesures modifiées ».

**19.** Procédé selon la revendication 13 **caractérisé en ce que** le « récepteur quantique » effectue dans le temps des mesures de la luminescence sur au moins deux raies optiques ou au moins deux bandes de longueurs d'ondes optiques ou au moins une raie optique et une bande de longueurs d'ondes optiques, afin de déterminer la transmission d'information lors de la rencontre sur un même intervalle de temps, soit d'au moins deux maxima maximorum de corrélation, soit d'au moins deux minima minimorum de corrélation, soit d'au moins un maxima maximorum de corrélation et d'au moins un minima minimorum de corrélation.

**20.** Procédé selon la revendication 13 **caractérisé en ce qu'**au moins un échantillon « intriqué » « esclave », lorsqu'il est composé d'au moins une sorte de matériaux ayant des propriétés de thermoluminescence, et présentant des propriétés additionnelles de photoluminescence, est préalablement à la « réception quantique », exposé à un rayonnement infrarouge pour supprimer la photoluminescence éventuellement résiduelle, afin d'améliorer la réception quantique par la recherche d'un maxima maximorum de corrélation, lors de l'application d'au moins un « profil caractéristique ».

**21.** Procédé selon la revendication 13, plus particulièrement applicable lorsque les périodes de « transmission quantique » et de « réception quantique » sont synchronisées, **caractérisé en ce qu'**au moins un échantillon « intriqué » « esclave », lorsqu'il est composé d'au moins une sorte de matériaux ayant des propriétés de thermoluminescence, et présentant des propriétés additionnelles de photoluminescence, est, préalablement à chaque « réception quantique », exposé à une source de très faible intensité de lumière visible, ultraviolette ou X, pour induire une photoluminescence résiduelle, afin de déterminer la transmission d'information par la recherche d'un minima minimorum (par exemple fig. 6), lors de l'application d'un « profil caractéristique ».

22. Procédé selon la revendication 1 **caractérisé en ce que** les « profils caractéristiques » sont appliqués par ledit ou lesdits « émetteurs quantiques » à des instants ou sur des fenêtres temporelles, pré-déterminés, éventuellement variables selon une loi pseudo-aléatoire commune, qui sont aussi connus dudit ou desdits « récepteurs quantiques » qui appliquent le procédé de détermination d'une transmission d'information codée au moins auxdits instants ou pendant lesdites fenêtres temporelles, pré-déterminés.

23. Procédé selon la revendication 1 **caractérisé en ce que** l'« émetteur quantique » (par exemple fig. 16 - gauche, fig. 17 - gauche) effectue une rétroaction en utilisant au moins un autre échantillon « intriqué » (par exemple 26, 41) dudit groupe, appelé échantillon « intriqué » « esclave secondaire », et un processus de mesure de la luminescence (par exemple 25, 40) dans au moins une raie optique ou au moins une bande de longueurs d'ondes optiques sur ledit échantillon « intriqué » « esclave secondaire », afin de contrôler par une méthode heuristique la réponse de désexcitation des pièges intriqués à au moins une valeur d'au moins un paramètre du « profil caractéristique » de la stimulation dans le temps, par rétroaction (par exemple 24, 39), en modulant en complément la stimulation du « profil caractéristique » appliquée à l'échantillon « intriqué » « maître » (par exemple 21, 37), par exemple, soit au moyen d'au moins une variation éventuellement complémentaire du paramètre de température, soit au moyen d'au moins une variation éventuellement complémentaire du paramètre d'intensité lumineuse, soit au moyen d'au moins une variation éventuellement complémentaire du paramètre de longueur d'onde incidente, soit au moyen d'au moins une variation éventuellement complémentaire du paramètre de surface stimulée, soit au moyen d'au moins une variation éventuellement complémentaire du paramètre de volume stimulé, de façon optimiser statistiquement la réponse d'au moins un échantillon « intriqué » « esclave » (par exemple 30, 40, 47) d'au moins un « récepteur quantique » distant (par exemple fig. 16 - droite, fig.17 - droite).

24. Procédé selon la revendication 1 **caractérisé en ce que** l'« émetteur quantique » effectue une rétroaction en utilisant un processus de mesure de la luminescence dans au moins une raie optique ou au moins une bande de longueurs d'ondes optiques sur l'échantillon « intriqué » « maître », afin de contrôler par une méthode heuristique la réponse de désexcitation des pièges à au moins une valeur d'au moins un paramètre du « profil caractéristique » de la stimulation dans le temps, par rétroaction en modulant en complément la stimulation du « profil caractéristique » appliquée à l'échantillon « intriqué » « maître », par exemple, soit au moyen d'au moins une variation éventuellement complémentaire du paramètre de température, soit au moyen d'au moins une variation éventuellement complémentaire du paramètre d'intensité lumineuse, soit au moyen d'au moins une variation éventuellement complémentaire du paramètre de longueur d'onde incidente, soit au moyen d'au moins une variation éventuellement complémentaire du paramètre de surface stimulée, soit au moyen d'au moins une variation éventuellement complémentaire du paramètre de volume stimulé, de façon optimiser statistiquement la réponse d'au moins un échantillon « intriqué » « esclave » d'au moins un « récepteur quantique » distant.

25. Procédé pour appliquer plusieurs fois la revendication 1 dans lequel au moins un même échantillon, appelé par convention échantillon « intriqué » « multi-esclave » (par exemple 149), a été intriqué successivement avec plusieurs échantillons ou ensembles d'échantillons, appelés par convention échantillons « intriqués » « mono-maître » (par exemple 148), ledit ou lesdits échantillons « intriqués » « multi-esclave » et chacun desdits échantillons « intriqués » « mono-maître » ou chacun desdits ensembles d'échantillons « intriqués » « mono-maître » formant un groupe d'échantillons « intriqués » selon la revendication référencée, **caractérisé en ce que** l'on répète plusieurs fois le procédé de la revendication référencée, en utilisant l'un après l'autre au moins un desdits échantillons « intriqués » « mono-maître » (par exemple 175) en tant qu'échantillon « intriqué » « maître » dans l'« émetteur quantique » (par exemple fig. 27 - gauche), et au moins un desdits échantillons « intriqués » « multi-esclave » (par exemple 180) en tant qu'échantillon « intriqué » « esclave » dans le « récepteur quantique » (par exemple fig. 27 - droite), ladite répétition dudit procédé permettant d'effectuer plusieurs déterminations de transmission d'information (par exemple fig. 12, fig. 31) en remplaçant l'échantillon « intriqué » « mono-maître » lorsque le vidage des électrons piégés intriqués dudit échantillon « intriqué » « mono-maître » est soit partiel au-de-là d'un seuil de qualité, soit total, en conservant l'échantillon « intriqué » « multi-esclave ».

26. Procédé selon la revendication 1 **caractérisé en ce qu'**on utilise au moins une sorte de matériaux photoluminescents présentant à très basses températures, comprises entre -273 °C et 0 °C, des propriétés de thermoluminescence.

27. Procédé selon la revendication 1 **caractérisé en ce qu'**on calcule au moins une moyenne glissante (par exemple fig. 8, fig.29 - 185, fig.32 - 198), éventuellement pondérée, sur une fraction dudit ou desdits « profils caractéristiques » (par exemple fig. 10), afin d'intégrer ou de minimiser, soit les perturbations dues au bruit de mesure (dark count), soit les perturbations dues aux rayons cosmiques, soit les perturbations électromagnétiques, soit une combinaisons de ces perturbations, pour optimiser le signal de la réponse d'au moins un échantillon « intriqué » « esclave » mesuré, lors de la variation d'au moins un paramètre de stimulation appliqué à au moins un échantillon « intriqué » « maître ».

**28.** Dispositif de mise en oeuvre du procédé selon l'une quelconque des revendications 1 à 27 **caractérisé en ce qu'**il comprend au moins un des appareillages suivants, dans la mesure où il est destiné à appliquer la partie du procédé, objet de ladite revendication de procédé, située sur le lieu de couverture de ce brevet, y compris les aéronefs, les vaisseaux marins, sous-marins et spatiaux, et les sondes terrestres, marines et spatiales :

- un ou des équipements « émetteurs quantiques » (par exemple fig. 7 - gauche, fig. 16 - gauche, fig.17 - gauche, fig.18 - gauche, fig. 19 - gauche, fig. 20 - gauche, fig. 21 - gauche, fig. 26 - gauche, fig. 27 - gauche)
- un ou des équipements « récepteurs quantiques » (par exemple fig. 7 - droite, fig. 16 - droite, fig.17 - droite, fig.18 - droite, fig. 19 - droite, fig. 20 - droite, fig. 21 - droite, fig. 26 - droite, fig. 27 - droite)

**29.** Utilisation du procédé selon l'une quelconque des revendications 1 à 27, soit pour transmettre des informations ou des commandes, soit pour recevoir des informations ou des commandes, soit pour transmettre et recevoir des informations ou des commandes.

## Patentansprüche

**1.** Verfahren um auf Entfernung zu kommunizieren in dem man die Deutung der Signale von Thermolumineszenz oder von Fotolumineszenz gebraucht, wobei man unter anderem verwendet:

- mindestens eine Gruppe Proben, die mindestens eine Art von den Materialien enthalten welche Eigenschaften der Thermolumineszenz und/oder der Fotolumineszenz haben, die Verbindungen aufweisen, konventionmässig "Quantenverbindungen" genannt, zwischen den aufgefangenen Elektronen der vorher erwähnten Materialien, die genannte Gruppe von den Proben, sei konventionmässig Gruppe "verschränkter" Proben genannt,
- mindestens die Stimulation durch Thermo-Entregung oder Fotoentregung,

**gekennzeichnet durch**:

- mindestens führt eine "Quantensender" Ausrüstung (z.B. Abb.7 - links, Abb. 17 - links, Abb. 18 - links, Abb. 19 - links, Abb. 20 - links, Abb. 21 - links, Abb.26 - links, Abb. 27 links), enthaltend mindestens eine "verschränkte" Probe (z.B. 9, 21, 37, 55, 68, 83, 103, 160, 175) der genannten Gruppe, tätigt eine Übertragung von Informationen, genannt "Quantenübertragung", mittels einer Stimulation, entweder **durch** Thermo-Entregung (z.B. Abb. 1) oder **durch** Fotoentregung (z.B. Abb. 2) oder **durch** eine Kombination beider, auf dem Ganzem oder einem Teil der genannten "verschränkten" Probe, genannt "verschränkte Master-" Probe, während eines Zeitintervalls, unter Verwendung, entsprechend des Modus, eine oder sich folgend mehrere heuristische Profilvariationen von mindestens einem Parameter der angewendeten Stimulationen in der Zeit, konventionmässig "charakteristische Profile" genannt (z.B. Abb. 10), so dass vorrübergehend die Möglichkeit der Entregung von einigen der verschränkten aufgefangenen Elektronen zu ändern, mittels der Stimulation angewendet **durch** das oder die vorher genannten "charakteristischen Profile" und optionmässig **durch** Rückwirkung (z.B. Abb. 16 - links, Abb. 17 - links),
- mindestens eine "Quantenempfänger" Ausrüstung (z.B. Abb. 7 - rechts, Abb. 16 - rechts, Abb. 17 - rechts , Abb. 18 - rechts, Abb. 19 - rechts, Abb. 20 - rechts, Abb. 21 - rechts, Abb. 26 - rechts, Abb. 27 - rechts), enthaltend mindestens eine "verschränkte" Probe (z.B. 16, 30, 46, 47, 61, 76, 89, 93, 109, 168, 180) der genannten Gruppe, tätig in der Zeit mindestens eine Serie von Messungen der Lumineszenz (Abb. 8, Abb. 9 , Abb.28) in mindestens einer optischen Linie oder auf mindestens einem optischen Streifen optischer Wellenlängen auf der oder den genannten "verschränkten" Proben, genannt "verschränkte Sklaven"-Proben, eine oder mehrere Serien von Messungen gedeutet von mindestens einer Methode zur Errechnung der Korrelation (z.B. Abb. 3, Abb. 11, Abb. 14, Abb. 32), in Verbindung mit mindestens einer Eigenschaft des oder der "charakteristischen Profile" verwendet **durch** den "Quantensender" um den Empfang von mindestens einer Information zu bestimmen (z.B. Abb. 12, Abb. 15, Abb. 31) codiert **durch** das oder die genannten "charakteristischen Profile" der genannte Empfang sei "quantischer Empfang" genannt.

**2.** Verfahren entsprechend Anspruch 1 gekennzeichnet in dem mindestens ein "charakteristisches Profil" (z.B. Abb. 10) eine Variation eines Parameters der Stimulation verwendet, um mindestens eine Lumineszenzspitze auszunutzen (z.B. Abb. 1, Abb. 2) charakterisiert von mindestens einer Art Materialien, die Eigenschaften der Thermolumineszenz haben.

3. Verfahren entsprechend Anspruch 1 gekennzeichnet in dem mindestens ein "charakteristisches Profil", entweder mindestens eine Variation des Parameters der Temperatur verwendet (z.B. Abb. 10) oder mindestens eine Variation des Parameters der Lichtstärke oder mindestens eine Variation des Parameters der infallenden Wellenlänge oder eine Variation des Parameters der stimulierten Oberfläche oder mindestens eine Variation des Parameters des stimulierten Volumens, um die Wahrscheinlichkeit der Entregung von einigen der verschränkten aufgefangenen Elektronen vorrübergehend zu modifizieren entsprechend einem oder mehreren der vorher erwähnten Parameter.

4. Verfahren entsprechend Anspruch 1 gekennzeichnet in dem das "charakteristische Profil" (z.B. Abb. 10) mindestens eine Variation der Temperatur verwendet, die eine oder mehrere Etappen enthalten, entweder von Temperaturanstieg oder von Temperaturabfall oder ein Beibehalten der Temperatur oder eine Kombination von allen oder einem Teil dieser Etappen, um die Wahrscheinlichkeit der Entregung von einigen der aufgefangenen verschränkten Elektronen vorübergehend zu modifizieren für die angewendeten Temperaturen (z.B. Abb. 3, 4, 5, 6, 8, 11, 14, 30) entsprechend dem genannten "charakteristischen Profil" während der Stimulation.

5. Verfahren entsprechend Anspruch 1, gekennzeichnet in dem mindestens ein "charakteristisches Profil" mindestens eine Variation der Lichtstärke zeitlich verwendet, die eine oder mehrere Etappen enthalten, entweder von der Zunahme der vorher erwähnten Lichtstärke oder von der Abnahme der vorher erwähnten Lichtstärke oder dem Beibehalten der vorher erwähnten Lichtstärke oder der Kombination von allen oder einemTeil dieser Etappen, um die Wahrscheinlichkeit der Entregung von einigen der verschränkten aufgefangenen Elektronen vorrübergehend zu modifizieren für die angewendeten Lichtstärken, entsprechend dem vorher genannten "charakteristischen Profil", während der Stimulation.

6. Verfahren entsprechend Anspruch 1, gekennzeichnet in dem mindestens ein "charakteristischen Profil", mindestens eine zeitliche Variation der infallenden Wellenlänge z. B. zwischen 300 Nanometer und 800 Nanometer enthaltend eine oder mehrere Etappen, entweder einer Zunahme der vorher erwähnten Wellenlänge oder einer Abnahme der vorher erwähnten Wellenlänge oder das Beibehalten der vorher erwähnten Wellenlänge oder einer Kombination von allen oder einem Teil dieser Etappen um die Wahrscheinlichkeit der Entregung von einigen der verschränkten aufgefangenen Elektronen vorrübergehend zu modifizieren für die angewendeten infallenden Wellenlängen (z.B. Abb. 2), entsprechend dem vorher genannten "charakteristischen Profil", während der Stimulation.

7. Verfahren entsprechend Anspruch 1, gekennzeichnet in dem mindestens ein "charakteristisches Profil", mindestens eine zeitliche Variation der stimulierten Oberfläche verwendet, die eine oder mehrere Etappen enthalten, entweder von der Zunahme der vorher erwähnten angeregten Oberfläche oder von der Abnahme der vorher erwähnten angeregten Oberfläche oder das Beibehalten der vorher erwähnten angeregten Oberfläche oder der Kombination von allen oder einem Teil dieser Etappen, um die Wahrscheinlichkeit der Entregung von einigen der verschränkten aufgefangenen Elektronen auf der angeregten Oberfläche vorübergehend zu modifizieren, entsprechend dem vorher genannten "charakteristischen Profil", während der Stimulation.

8. Verfahren entsprechend Anspruch 1, gekennzeichnet in dem mindestens ein "charakteristisches Profil", mindestens eine zeitliche Variation des stimulierten Volumens verwendet, die eine oder mehrere Etappen enthalten, entweder von der Zunahme des vorher erwähnten angeregten Volumens oder eine Abnahme des sogenannten stimulierten Volumens oder ein Beibehalten des sogenannten stimulierten Volumens oder eine Kombination von allen oder einem Teil dieser Etappen, um die Wahrscheinlichkeit der Entregung von einigen verschränkten aufgefangenen Elektronen vorrübergehend zu modifizieren auf dem stimulierten Volumen, entsprechend dem vorher genannten "charakteristischen Profil", während der Stimulation.

9. Verfahren entsprechend Anspruch 1, kennzeichnet die Messungen der Lumineszenz in mindestens in einer optischen Linie oder mindestens in einem Band optischer Wellenlängen, durchgeführt auf mindestens einer "verschränkten Sklaven"-Probe, die zeitmässig korrigiert entsprechend einem Modell, das die Wahrscheinlichkeiten der Entregung der verschränkten aufgefangenen Elektronen vorher genannten "verschränkten Sklaven-" Probe berücksichtigt, zu der Zeit des Zusammenfalls der "quantischen" Verbindungen, resultierend aus der Anwendung des "charakteristischen Profils" der Stimulation auf mindestens einer "verschränkten Master" - Probe.

10. Verfahren entsprechend Anspruch 1, gekennzeichnet in dem die Temperatur von mindestens einer "verschränkten Sklaven"- Probe die im "quantischen" Empfänger gemessen wurde, optimiert ist, um auf diese Art die Antwort der Entregung der verschränkten Fallen von der genannten oder den genannten "verschränkten Sklaven-Proben zu der Zeit der "quantischen Rezeption" zu optimieren.

**11.** Verfahren entsprechend Anspruch 1, gekennzeichnet in dem das genannte oder die genannten "charakteristischen Profile", von kurzer Dauer angewendet wurden, z.B. zwischen 1 Mikrosekunde und 100 Millisekunden, um den Prozentsatz der verschränkten entregten Fallen zu reduzieren während der Anwendung des oder der besagten "charakteristischen Profile", dieses oder diese genannten "charakteristischen Profile" zu verringern, insbesondere anwendbar zur Anregung durch Fotoentregung, entweder in einer Variation der Wellenlänge oder einer Variation der Intensität oder in einer Variation der Oberfläche oder durch die Kombination dieser Stimulationen.

**12.** Verfahren entsprechend Anspruch 1 gekennzeichnet in dem:

- mindestens ein "charakteristisches Profil" (z.B. Abb. 10) verwendet durch den "quantischen Sender" enthält mindestens eine erste Etappe der Variation von mindestens einem Parameter der Stimulation und mindestens eine zweite Etappe der Variation des gleichen Parameters der mindestens gemeinsame Werte enthält oder eine Zone gemeinsamer Werte,
- und in dem die Berechnungsmethode der Korrelation gebraucht:

o mindestens eine Transformation der genannten Serie von Messungen, in Bezug auf das genannte "charakteristische Profil", um zu berechnen z. B. durch Interpolation, mindestens eine neue erste Serie von Messungen (z.B. 1, 4, 5, 187) deren Abszisse in der Einheit des Parameters der Stimulation, in Bezug mit mindestens der ersten Etappe der Variation ausgedrückt wird,
o und mindestens eine andere Transformation der genannten Serie von Messungen, in Bezug auf das genannte "charakteristische Profil", um zu berechnen zum Beispiel durch Interpolation, mindestens eine neue zweite Serie von Messungen (z.B. 2, 3, 6, 188) deren Abszisse in der Einheit des Parameters der Stimulation, in Bezug mit mindestens der zweiten Etappe der Variation ausgedrückt wird,
o und in dem mindestens ein Wert der Korrelation wird zwischen der neuen ersten Serie von Messungen und der neuen zweiten Serie von Messungen berechnet ist, um die Rezeption von mindestens einer Informationen zu bestimmen, kodiert durch das genannte "charakteristische Profil" oder durch die vorher erwähnten "charakteristischen Profile".

**13.** Verfahren entsprechend Anspruch 1, gekennzeichnet in dem die genannte oder genannten Serien Messungen interpretiert sind, um die Transmission von mindestens einer kodierten Information durch ein oder mehrere der genannten "charakteristischen Profile" zu bestimmen (z.B. Abb. 10), durch die Forschung, sei entweder mindestens ein Maxima maximorum der Korrelation kennzeichnend mindestens eine Wechselbeziehung (z.B. Abb. 12, Abb. 15, Abb. 31) oder mindestens ein Minimum minimorum der Korrelation kennzeichnend mindestens eine Antikorrelation oder mindestens ein Maxima maximorum der Korrelation und mindestens ein Minimum minimorum der Korrelation kennzeichnend, mindestens eine Korrelation und eine Antikorrelation, auf der Dauer eines oder einigen der genannten "charakteristischen Profile", die "sofortige" Korrelation, sei berechnet entweder an vorbestimmten Momenten oder kontinuierlich oder in zeitlichen Intervallen, diese Momente oder diese Intervalle seien möglicherweise dem quantischen Sender und dem quantischen Rezeptor bekannt eine ganz oder teilweise synchronisierte Weise oder einer Kombination dieser Modalitäten, auf mindestens einem Zeitfenster (z.B. Abb. 9), möglicherweise gleitend, dimensional in Verbindung mit mindestens einer Eigenschaft des vorher genannten oder der genannten "charakteristischen Profile", die genannte sofortige Korrelation sei verstanden, wenn sie normalisiert ist, zwischen einem Wert "-1" und "+1", die genannte "sofortige" Korrelation sei z. B. eingeschätzt nach der Art und Weise durch eine der folgenden Verfahren:

- sei durch ein Verfahren der Korrelation (M1) zwischen der vorher genannten Serie von Messungen, möglicherweise nach Anwendung einer Transformation und einer Vorrichtung (z.B. Fig. 13),
- oder durch ein Verfahren der Korrelation (M2), wenn die Information durch den "quantischen Sender" codiert ist, durch mindestens zwei "charakteristische Profile", die von mindestens einem Zeitwert verschoben werden, dem "quantischen" Sender und dem "quantischen Empfänger" bekannt sind, zwischen den vorher genannten Serien von Messungen und den vorher genannten Serien von den zeitlich verschobenen Messungen, möglicherweise nach der Anwendung einer Transformation,
- oder ein Verfahren der Korrelation (M3), wenn die Information durch den "quantischen Sender" kodiert ist, durch mindestens ein "charakteristisches Profil", das es ermöglicht, mindestens eine Gesamtheit von Werten in Verbindung zu bringen von mindestens einem Parameter der Stimulation, die zu verschiedenen Zeiten eingesetzt sind, zwischen der besagten Serie von Messungen, und der besagten zeitlich umgekehrten Serie, möglicherweise nach Anwendung einer Transformation (z.B. Fig. 11),

- oder ein Verfahren der Wechselbeziehung (M4) zwischen den besagten Serien von Messungen auf mindestens zwei gemessenen "verschränkten Sklaven"- Proben (z.B. Fig. 17),
- oder ein Verfahren der Korrelation (M5) (z.B. Abb. 2) zwischen mindestens zwei der besagten Serien von Messungen auf mindestens einer gemessenen "verschränkten Sklaven"- Probe, zum Beispiel mindestens in zwei optischen Linien oder mindestens in zwei Streifen optischer Wellenlängen oder mindestens einer optischen Linie und mindestens einem Streifen optischer Wellenlängen, möglicherweise nach Anwendung von Transformationen,

das genannte oder die genannten Maxima maximorum der Korrelation, während sie höher sind als eine Vertrauensgrenze abhängig von der Optimierung des Prozesses, zum Beispiel "+ 0,7" und das genannte oder die genannten Minimum minimorum der Korrelation oder, während sie niedriger sind als eine Vertrauensgrenze abhängig von der Optimierung des Prozesses, zum Beispiel "-0,7", gekennzeichnet von mindestens einer quantischen Rezeption einer kodierten Information gemäß des oder den genannten "charakteristischen Profilen".

**14.** Verfahren entsprechend Anspruch 13, besonders anwendbar unter Verwendung der Methode (M1), gekennzeichnet in dem die "sofortige" Korrelation berechnet wird zwischen:

- der genannten Serie von Messungen des "quantischen Rezeptors" (z.B. Abb.8) oder einer Funktion der genannten Messungen, wenn mehrere "verschränkte Sklaven"-Proben benutzt werden, mit Hilfe eines abgewogenen Mittelwerts, das Ergebnis sei genannt die Serie von brutto Messungen, die genannte Serie von Bruttomessungen könnte eine Transformation durchziehen angewendet an einer Untergesamtheit der genannten Bruttomessungen, zum Beispiel ein gleitender Mittelwert, auf einem Bruch der Dauer des oder der genannten "charakteristischen Profile" oder eine Transformation korrigierend den Effekt des "charakteristischen Profils", die genannten resultierenden Messungen, seien die "Serie modifizierter Messungen" genannt ,
- und eine Vorrichtung der Antwort zur Entregung der verschränkten Fallen (z.B. Abb. 13), die vorher kalibriert wurde für das oder die genannten benutzten "charakteristische Profile", und sei gebraucht für mindestens eine "verschränkte Sklaven"-Probe, oder für eine typische "verschränkte Sklaven"-Probe, oder mindestens kalibriert mittels einer heuristischen Berechnung unter Verwendung mindestens einer Erwiderungskurve der Thermo- oder Fotolumineszenz der genannten Art von Materialien und des oder der genannten "charakteristischen Profile".

**15.** Verfahren entsprechend Anspruch 13, besonders anwendbar unter Verwendung der Methode (M2), gekennzeichnet in dem die vorbestimmten Zeitwerte der Verschiebungen fixiert sind, pseudo aleatorisch entsprechend dem gleichen Korn, die "sofortige" Korrelation, sei berechnet zwischen:

- der genannten Serie von Messungen des "quantischen Rezeptor" (z.B. Abb.8) oder eine Funktion der genannten Messungen, wenn mehrere "verschränkte Sklave-" Proben benutzt sind, zum Beispiel mit Hilfe eines gewogenen Mittelwerts, das Ergebnis, genannt die Serie von Bruttomessungen, die genannte Serie von Bruttomessungen könnte eine Transformation durchziehen angewendet auf einer Untergesamtheit der genannten Bruttomessungen, zum Beispiel ein gleitender Mittelwert, auf einem Bruch der Dauer des oder der genannten "charakteristischen Profile" oder von Transformation korrigierend den Effekt des oder der "charakteristischen Profile", die genannten resultierenden Messungen seien die "Serie von modifizierten Messungen" genannt ,
- und die genannte Serie von Bruttomessungen, zeitlich verschoben von einem oder mehreren der vorbestimmter Zeitwerte, die genannte Serie von Bruttomessungen, könnte eine Transformation durchziehen auf einer Untergesamtheit der genannten Bruttomessungen, zum Beispiel ein gleitender Mittelwert auf einem Bruch der Dauer des oder der genannten "charakteristischen Profile", oder eine Transformation korrigierend den Effekt des oder der genannten "charakteristischen Profile", die genannten resultierenden Messungen, die Serie von verschobenen modifizierten Messungen genannt werden, um eine Korrespondenz zwischen den gleichen Werten der Parameter der Stimulation herzustellen, Korrespondenz die zwischen Messungen während einer "quantischen Rezeption" auftritt.

**16.** Verfahren entsprechend Anspruch 13, besonders anwendbar unter Verwendung der Methode (M3), gekennzeichnet in dem die "sofortige" Korrelation berechnet wird zwischen:

- der genannten Serie von Messungen vom "quantischen Rezeptor" (z.B. 184, 197) oder einer Funktion der genannten Messungen, wenn mehrere "verschränkte Sklaven"-Proben verwendet werden z.B. mit Hilfe eines gewogenen Mittelwerts, das Ergebnis sei genannt die Serie der Bruttomessungen, die genannte Serie der Bruttomessungen könnte eine Transformation durchziehen, angewendet an einer Untergesamtheit der genannten Messungen, z.B. ein gleitender Mittelwert (z.B. Abb. 8, Abb. 29-185) auf einem Bruchteil der Dauer des oder der genannten "charakteristischen Profile" oder eine Transformation korrigierend die Wirkung des oder der genannten "charakteristischen Profile", die genannten Messungen seien genannt die "Serie modifizierter Messungen" (z.B. 185, 199)

- und die genannte Serie der Bruttomessungen, möglicherweise modifiziert nach der Optimierung des Verfahrens, die genannte Serie der Messungen sei zeitlich umkehrbar, die genannte Serie der Bruttomessungen könnte eine Transformation durchziehen angewendet an einer Untergesamtheit der genannten Messungen, z.B. ein gleitender Mittelwert auf einem Bruchteil der Dauer des oder der genannten "charakteristischen Profile" oder eine Transformation korrigierend die Wirkung des oder der genannten "charakteristischen Profile", die resultierenden Messungen seien genannt "die Serie der umkehrbaren Messungen" (z.B. 201), um eine Korrespondenz zu erstellen zwischen den gleichen Werten der Parameter der Stimulation (z.B. Abb. 11, Abb. 30), Korrespondenz die sich bemerkbar macht zwischen den Messungen während einer "quantischen Rezeption" (z.B. Abb. 12, Abb. 31).

**17.** Verfahren entsprechend Anspruch 13, besonders anwendbar unter Verwendung der Methode (M4), gekennzeichnet in dem die "sofortige" Korrelation berechnet wird zwischen:

- die genannten Serie von Messungen auf der ersten "verschränkten Sklaven"-Probe "des quantischen Empfängers", oder eine Funktion von Messungen einer ersten Gesamtheit "verschränkter Sklaven"- Proben, wenn mehrere "verschränkte Sklaven"-Proben eingesetzt werden, zum Beispiel mit Hilfe eines gewogenen Mittelwerts, das Ergebnis sei genannt erste Serie von Bruttomessungen, die genannte Serie von Bruttomessungen könnte eine Transformation durchziehen, angewendet an einer Untergesamtheit der genannten Messungen, zum Beispiel ein gleitender Mittelwert auf einem Bruchteil der Dauer des oder der "charakteristischen Profile", die genannten resultierenden Messungen seien genannt "erste Serie der modifizierten Messungen",
- und die genannte Serie von Messungen auf der zweiten "verschränkten" "Sklaven"- Probe des "quantischen Empfängers" oder eine Funktion der Messungen auf einer zweiten Gesamtheit "verschränkter Sklaven"-Proben, getrennt von den vorrausgehenden, wenn mehrere "verschränkte Sklaven"-Proben angewendet werden, zum Beispiel mit Hilfe eines gewogenen Mittelwerts, das Ergebnis sei genannt, die zweite Serie von Bruttomessungen, die genannte Serie von Bruttomessungen könnte eine Transformation durchziehen, angewendet an einer Untergesamtheit der genannten Messungen, zum Beispiel ein gleitender Mittelwert, auf einem Bruchteil der Dauer des oder der genannten "charakteristischen Profile", die genannten resultierenden Messungen seien genannt die "zweite Serie modifizierter Messungen".

**18.** Verfahren entsprechend Anspruch 13, besonders anwendbar unter Verwendung der Methode (M5), gekennzeichnet in dem die "sofortige" Korrelation berechnet wird zwischen:

- die genannten Serie von Messungen in der ersten optischen Linie oder Steifen optischer Wellenlängen, vom "quantischen Empfänger" oder eine Funktion der genannten Messungen, wenn mehrere "verschränkte Sklaven"-Proben benutzt werden, zum Beispiel mit Hilfe eines gewogenen Mittelwerts, das Ergebnis sei genannt, das die Serie von Bruttomessungen, die genannte Serie von Bruttomessungen könnte eine Transformation durchziehen angewendet auf einer Untergesamtheit der genannten Messungen, zum Beispiel ein gleitender Mittewert auf einem Bruchteil der Dauer des oder der genannten "charakteristischen Profile" oder von heuristischer Transformation normalisierend die genannten Messungen für das oder die genannten "charakteristische Profile" in Verbindung mit den verschiedenen gemessenen Wellenlängen, die genannten resultierenden Messungen, seien genannt, die "erste Serie modifizierter Messungen",
- und die genannte Serie von Messungen in der zweiten optischen Linie oder Streifen optischer Wellenlängendes "quantischen Empfängers" oder eine Funktion der genannten Messungen, wenn mehrere "verschränkte Sklaven"-Proben verwendet werden, z.B. mit Hilfe eines gewogenen Mittelwertes, das Ergebnis sei genannt die Serie von Bruttomessungen, die genannte Serie von Bruttomessungen könnte eine Transformation durchziehen angewendet an einer Untergesamtheit der genannten Messungen, z.B. ein gleitender Mittelwert auf einem Bruchteil der Dauer des oder der "charakteristischen Profile" oder einer heuristischen Transformation normalisierend die genannten Messungen für das oder die "charakteristischen Profile" in Verbindung mit den gemessenen Wellenlängen, die genannten resultierenden Messungenseien genannt, die "zweite Serie modifizierter Messungen".

**19.** Verfahren entsprechend Anspruch 13, gekennzeichnet in dem der "quantische Empfänger", Messungen der Lumineszenz auf mindestens zwei optischen Linien oder mindestens zwei Streifen optischen Wellenlängen oder mindestens einer optischen Linie und einem Streifen von optischer Wellenlängen zeitlich durchführt, um die Übertragung von Informationen zu bestimmen, während des, Zusammentreffens im selben Zeitintervall, entweder von mindestens zwei Maxima maximorum der Korrelation oder von mindestens zwei Minimum minimorum der Korrelation oder mindestens eines Maxima maximorum der Korrelation und mindestens eines Minimum minimorum der Korrelation.

**20.** Verfahren entsprechend Anspruch 13, gekennzeichnet in dem mindestens eine "verschränkte Sklaven"- Probe, wenn sie von mindestens eine Art Materialien besteht, die Eigenschaften der Thermolumineszenz haben und zusätzliche Eigenschaften der Fotolumineszenz darstellen, ist voraussichtlich bei der "quantischen Rezeption", einer Infrarotstrahlung ausgesetzt, um die eventuelle restliche Fotolumineszenz abzubauen, um die quantische Rezeption zu verbessern durch die Suche eines Maxima maximorum der Korrelation, während der Anwendung von mindestens einem "charakteristischen Profil".

**21.** Verfahren entsprechend Anspruch 13, besonders anwendbar, wenn die Zeiträume "der quantischen Übertragung" und "der quantischen Rezeption" synchronisiert sind, gekennzeichnet in dem mindestens eine "verschränkte Sklaven-" Probe, wenn sie aus mindestens einer Art Materialien besteht, die Eigenschaften der Thermolumineszenz haben, und zusätzliche Eigenschaften der Fotolumineszenz aufweisen, ist voraussichtlich bei jeder "quantischen Rezeption" einer schwachen Quelle sichtbarem Lichts, ultraviolettem Licht oder Röntgenstrahlen von schwacher Intensität ausgesetzt um die restliche Fotolumineszenz zu induzieren, um die Informationstransmission durch die Suche eines Minima minimorum (z.B. Abb. 6), während der Anwendung eines "charakteristischen Profil".

**22.** Verfahren entsprechend Anspruch 1, gekennzeichnet in dem die "charakteristischen Profile" angewendet sind durch den oder die" quantischen Sender", zu Momenten oder auf Zeitfenster, vorbestimmt, möglicherweise veränderlich entsprechend einem geläufigen Pseudo-Zufallsgesetz, die auch dem oder den genannten "quantischen Rezeptoren" bekannt sind, die den Prozess der Bestimmung einer codierten Informationstransmission mindestens an einem der genannten Momenten oder während der genannten vorbestimmten Zeitfenster anwenden .

**23.** Verfahren entsprechend Anspruch 1, in dem der "quantische Sender" (z.B. Abb. 16 - links, Abb. 17 - links) eine Rückwirkung durchführt, in dem er mindestens eine andere "verschränkte Sklaven"- Probe (z.B. 26, 41) der genannten Gruppe verwendet, genannt "sekundäre verschränkte Sklaven"- Probe, und einen Prozess der Messung von Lumineszenz (z.B. 25, 40) in mindestens einer optischen Linie oder in mindestens einem Streifen optischer Wellenlängen auf der genannten "sekundären verschränkten Sklaven"- Probe, um durch ein heuristisches Verfahren, die Antwort der Entregung der verschränkten Fallen zu kontrollieren auf mindestens einem Wert von mindestens einem Parameter des "charakteristischen Profils" in der zeitlichen Stimulation, durch Rückwirkung (z.B. 24, 29), in dem man zusätzlich die Stimulation des "charakteristischen Profils", moduliert, angewendet an der "verschränkten Master" - Probe (z.B. 21, 37) zum Beispiel entweder mittels mindestens einer eventuellen ergänzenden Variation des Parameters der Temperatur, oder mittels mindestens einer eventuellen ergänzenden Variation des Parameter der Lichtstärke oder mittels mindestens einer eventuellen ergänzenden Variation des Parameters der infallenden Wellenlänge oder mittels mindestens einer eventuellen ergänzenden Variation des Parameters der stimulierten Oberfläche oder mittels mindestens einer eventuellen ergänzenden Variation des Parameters des stimulierten Volumens, um statistisch gesehen die Antwort von mindestens einer "verschränkten Sklaven"- Probe (z.B. 30, 40, 47) von mindestens einem entfernten "quantischen Rezeptor" zu optimieren (z.B. Abb.16 rechts, Abb. 17 rechts).

**24.** Verfahren entsprechend Anspruch 1, gekennzeichnet in dem der "quantische Sender" eine Rückwirkung durchführt, wobei er einen Prozess der Messung der Lumineszenz in mindestens einer optischen Linie verwendet, oder in mindestens einem Streifen optischer Wellenlängen verwendet an der "verschränkten Master"- Probe, um durch ein heuristisches Verfahren die Antwort der Entregung der Fallen kontrolliert bei mindestens einem Wert von mindestens einem Parameter des "charakteristischen Profils" der zeitlichen Anregung, durch eine Rückwirkung unter Verwendung einer ergänzenden Modulation der Anregung des "charakteristischen Profils", angewendet an der "verschränkten Master"-Probe, zum Beispiel mittels mindestens einer eventuellen ergänzenden Variation des Parameter der Temperatur oder mittels mindestens einer eventuellen ergänzenden Variation des Parameter der Lichtstärke, oder mittels mindestens einer eventuellen ergänzenden Variation des Parameter der infallenden Wellenlänge oder mittels mindestens einer eventuellen ergänzenden Variation des Parameters der stimulierten Oberfläche oder mittels mindestens einer eventuellen ergänzenden Variation des Parameters des angeregten Volumens um statistisch gesehen die Antwort von mindestens einer "verschränkten Sklaven"- Probe zu optimieren von mindestens einem entfernten "quantischen Rezeptor".

**25.** Verfahren um mehrmals den Anspruch 1, zu verwenden in dem mindestens eine gleiche Probe, genannt vereinbarungsgemäß "verschränkte Multisklaven"- Probe (z.B. 149), nachfolgend verschränkt wurde mit mehreren Proben oder einer Gesamtheit von Proben genannt vereinbarungsgemäß "verschränkte Monomaster"- Proben (z.B. 148), die genannte oder die genannten "verschränkten Multisklaven"- Proben und jede der genannten "verschränkten Monomaster"-Proben, oder jede der genannten Gesamtheit "der verschränkten Monomaster"- Proben, bilden eine Gruppe "verschränkter" Proben entsprechend dem referenzierten Anspruch, gekennzeichnet in dem man mehrmals des referenzierte Verfahren wiederholt ,in dem man einen nach dem anderen mindestens eine der genannten "verschränkten Monomaster"-Proben verwendet (z.B. 175) als "verschränkte Master"- Probe im "quantischen Sender" (z.B. Abb. 27 - links), und mindestens eine der genannten "verschränkten Multisklaven"-Proben (z.B. 180) als "verschränkte Sklaven"- Probe im "quantischen Rezeptor" (z.B. Abb. 27 - rechts), die genannte Wiederholung des genannten Verfahrens, ermöglicht es, mehrere Bestimmungen von Informationsübertragungen durchzuführen (z.B. Abb. 12, .Abb. 31) in dem man die "verschränkte Monomaster"-Probe während der Entleerung der gefangenen verschränkten Elektronen der genannten" verschränkten Monomaster"-Probe ersetzt ist entweder teilweise über der Grenze der Qualität oder ganz, konservierend dabei die "verschränkte Multisklaven"-Probe.

**26.** Verfahren entsprechend Anspruch 1, gekennzeichnet in dem mindestens eine Art photolumineszenter Materialien verwendet wird, die bei sehr tiefen Temperaturen zwischen -273 °C und 0 °C, Eigenschaften der Thermolumineszenz vorweisen.

**27.** Verfahren entsprechend Anspruch 1, gekennzeichnet in dem mindestens ein gleitender Mittelwert berechnet wird (z.B. Abb. 8, Abb. 29 - 185, Abb. 32 - 198), möglicherweise abgewogen, auf einem Bruchteil des oder der genannten "charakteristischen Profile" (z.B. Abb. 10), um hervorgerufenen Störungen durch die Geräusche der Messungen (dark count) oder Störungen durch kosmische Strahlung oder elektromagnetische Störungen oder eine Kombination dieser Störungen zu integrieren oder herabzusetzen, um das Antwortsignal von mindestens einer "verschränkten Sklaven"-Probe zu optimieren, die gemessen wurde während der Variation von mindestens einem Parameter der Stimulation angewendet an mindestens einer "verschränkten Master"- Probe.

**28.** Vorrichtung zum Einsatz des Verfahrens entsprechend irgendeiner der Ansprüche 1 bis 27, gekennzeichnet in dem sie mindestens einen der folgenden Apparate enthält, der insofern dazu dient einen Teil des Verfahrens anzuwenden, Objekt des genannten des Verfahrens, gelegen an dem Ort, der durch dieses Patent abgesichert ist, einschließend Flugapparate, Schiffe, U-Boote, Raumschiffe und Raumfähren, sowie Erd-, Marine-, und Raumsonden:

- eine oder einige Ausrüstungen "Quantischer Sender" (z.B. Abb. 7 - links, Abb. 16 - links, Abb. 17 - links, Abb. 18 - links, Abb. 19 - links, Abb. 20 - links, Abb. 21 - links, Abb. 26 - links, Abb. 27 - links)
- eine oder einige Ausrüstungen "quantischer Rezeptoren" (z.B. Abb. 7 - rechts, Abb. 16 - rechts, Abb. 17 - rechts, Abb. 18 - rechts, Abb. 19 - rechts, Abb. 20 - rechts, Abb. 21 - rechts, Abb. 26 - rechts, Abb. 27 - rechts)

**29.** Gebrauch des Verfahrens entsprechend irgendeinem der Ansprüche 1 bis 27, entweder um Informationen oder Fernsteuerungen zu übertragen, oder Informationen oder Fernsteuerungen zu empfangen, oder Informationen oder Fernsteuerungen zu übertragen und zu empfangen.

## Claims

**1.** Process to remotely communicate by using the interpretation of signals of thermoluminescence or photoluminescence in which one uses amongst other things:

- at least one group of samples comprising at least one kind of materials having properties of thermoluminescence and/or photoluminescence, which present connections, called by convention "quantum" couplings, between trapped electrons of the aforesaid materials, the aforementioned group of samples being called per convention the group of "entangled" samples,
- at least stimulation by thermo-deexcitation or photo deexcitation, **characterized in that**:
- at least one "quantum transmitter" equipment (e.g. Fig. 7 - left side, Fig. 16 - left side, Fig. 17 - left side, Fig. 18 - left side, Fig. 19 - left side, Fig. 20 - left side, Fig. 21 - left side, Fig. 26 - left side, Fig. 27 - left side), comprising at least one "entangled" sample (e.g. 9, 21, 37, 55, 68, 83, 103, 160, 175) of the aforesaid group, carries out a transmission of information, called "quantum transmission", by means of a stimulation, either by thermo-deexcitation (e.g. Fig. 1), or by photo deexcitation (e.g. Fig. 2), or by a combination of both, on whole or part of the aforesaid "entangled" sample, called "master" "entangled" sample, during an interval of time, by applying, according to the mode, one or successively several heuristic profiles of variation of at least one parameter of stimulation applied versus time, called by convention "characteristic profiles" (e.g. Fig. 10), in order to transitorily modify the probability of deexcitation of some of entangled trapped electrons, by means of the stimulation applied by one or several of the aforesaid "characteristic profiles", and optionally by feedback (e.g. Fig. 16 - left side, Fig. 17 - left side),
- at least one "quantum receiver" equipment (e.g. Fig. 7 - right side, Fig. 16 - right side, Fig. 17 - right side, Fig. 18 - right side, Fig. 19 - right side, Fig. 20 - right side, Fig. 19 - right side, Fig. 20 - right side, Fig. 21 - right side, Fig. 26 - right side, Fig.27 - right side), comprising at least one "entangled" sample (e.g. 16, 30, 46, 61, 76, 89, 93, 109, 168, 180) of the aforesaid group, carries out versus time at least one series of measurements of luminescence (Fig. 8, Fig. 9) in at least one optical line or at least one band of optical wavelengths, on the aforesaid sample or on the aforesaid "entangled" samples, called "slave" "entangled" samples, one or more of the aforesaid series of measurements being interpreted by at least one method of calculation of correlation (e.g. Fig. 3, Fig. 11, Fig. 14, Fig. 32), in relation to at least one property of one or several of the "characteristic profiles" used by the "quantum transmitter", to determine the reception of at least one information (e.g. Fig. 12, Fig. 15, Fig. 31), coded by the aforesaid "characteristic profile" or by the aforesaid "characteristic profiles", the aforesaid reception being called "quantum reception".

2. Method according to claim 1 **characterized in that** at least one "characteristic profile" (e.g. Fig. 10) uses a variation of a parameter of stimulation in order to exploit at least one peak of luminescence (e.g. Fig. 1, Fig. 2) characteristic of at least one kind of materials having properties of thermoluminescence.

3. Method according to claim 1 **characterized in that** at least one "characteristic profile" uses, either at least a variation of the parameter of temperature (e.g. Fig. 10), or at least a variation of the parameter of light intensity, or at least a variation of the parameter of incident wavelength, or a variation of the parameter of stimulated surface, or at least a variation of the parameter of stimulated volume, in order to transitorily modify the probability of deexcitation of some of the entangled trapped electrons according to one or several of the aforesaid parameters.

4. Method according to claim 1 **characterized in that** the "characteristic profile" (e.g. Fig. 10) uses at least one variation of the temperature versus time comprising one or more steps, either of increase in temperature, or of decrease in temperature, or of maintenance of the temperature, or a combination of whole or part of these steps, in order to transitorily modify the probability of deexcitation of some of the entangled trapped electrons for the temperatures applied (e.g. Fig. 3, Fig. 4, Fig. 5, Fig. 6, Fig. 11, Fig. 14, Fig. 30), according to the aforementioned "characteristic profile", during the stimulation.

5. Method according to claim 1 **characterized in that** at least one "characteristic profile" uses at least one variation of the light intensity versus time comprising one or more steps, either of increase of the aforesaid light intensity, or of decrease of the aforesaid light intensity, or of maintenance of the aforementioned light intensity, or a combination of whole or part of these steps, in order to transitorily modify the probability of deexcitation of some of the entangled trapped electrons for the light intensities applied, according to the aforementioned "characteristic profile", during the stimulation.

6. Method according to claim 1 **characterized in that** at least one "characteristic profile" uses at least one variation of the incident wavelength versus time, for example ranging between 300 nm and 800 nm, comprising one or more steps, either of increase of the aforesaid wavelength, or of decrease of the aforesaid wavelength, or of maintenance of the aforesaid wavelength, or a combination of whole or part of these steps, in order to transitorily modify the probability of deexcitation of some of the entangled trapped electrons for the incident wavelengths applied (e.g. Fig. 2), according to the aforementioned "characteristic profile", during the stimulation.

7. Method according to claim 1 **characterized in that** at least one "characteristic profile" uses at least one variation of the surface stimulated versus time comprising one or more steps, either of increase of the aforesaid stimulated surface, or of decrease of the aforesaid stimulated surface, or of maintenance of the aforesaid stimulated surface, or a combination of whole or part of these steps, in order to transitorily modify the probability of deexcitation of some of the entangled trapped electrons on the surface stimulated, according to the aforementioned "characteristic profile", during the stimulation.

8. Method according to claim 1 **characterized in that** at least one "characteristic profile" uses at least one variation of the volume stimulated versus time comprising one or more steps, either of increase of the aforesaid stimulated volume, or of decrease of the aforesaid stimulated volume, or of maintenance of the aforesaid stimulated volume, or a combination of whole or part of these steps, in order to transitorily modify the probability of deexcitation of some of entangled trapped electrons on the volume stimulated, according to the aforementioned "characteristic profile", during the stimulation.

**9.** Method according to claim 1 **characterized in that** measurements of luminescence, in at least one optical line or at least one band of optical wavelengths, carried out on at least one "slave" "entangled" sample is corrected temporally according to a model taking into account probabilities of deexcitation of entangled trapped electrons in the aforesaid "slave" "entangled" sample, at the time of the collapse of the "quantum" couplings resulting from the application of the "characteristic profile" of stimulation to at least one "master" "entangled" sample.

**10.** Method according to claim 1 **characterized in that** the temperature of at least one "slave" "entangled" sample measured in the "quantum receiver" is optimized, in order to optimize the response of deexcitation of the entangled traps of one or several aforesaid "slave" "entangled" samples at the time of the "quantum reception".

**11.** Method according to claim 1 **characterized in that** one or several of the aforementioned "characteristic profile" applied, are of short durations, for example ranging between 1 microsecond and 100 milliseconds, in order to reduce the rate of entangled traps which are deexcited during the application of one or several of the aforesaid "characteristic profiles", the aforementioned "characteristic profiles" being more particularly applicable to stimulation by photo deexcitation, either in a variation of the wavelength, or in a variation of the intensity, or in a variation of the surface, or by combinations of these stimulations.

**12.** Method according to claim 1 **characterized in that**:

- at least one "characteristic profile" (e.g. Fig. 10) used by the "quantum transmitter" comprises at least one first step of variation of at least one parameter of stimulation and at least one second step of variation of the same parameter comprising at least some common values or a range of common values,
- and **in that** the method of calculation of the correlation uses:

  o at least one transformation of the aforementioned series of measurements, in relation to the aforementioned "characteristic profile", to calculate, for example by interpolation, at least one new first series of measurements (e.g. 1, 4, 5, 187) whose the X-coordinate is expressed in the unit of the parameter of stimulation, in relation to at least the first step of variation,
  o and at least another transformation of the aforementioned series of measurements, in relation to the aforementioned "characteristic profile", to calculate, for example by interpolation, at least one new second series of measurements (e.g. 2, 3, 6, 188) whose the X-coordinate is expressed in the unit of the parameter of stimulation, in relation to at least the second step of variation,
  o and **in that** at least one value of the correlation is calculated between the new first series of measurements and the new second series of measurements, in order to determine the reception of at least one information, encoded by the aforementioned "characteristic profile" or by the aforementioned "characteristic profiles".

**13.** Method according to claim 1 **characterized in that** the single aforementioned series of measurement or the several aforementioned series of measurements are interpreted to determine the transmission of at least one data by one or several of the aforesaid "characteristic profiles" (e.g. Fig. 10), by research, either of at least one maxima maximorum of correlation characterizing at least one correlation (e.g. Fig. 12, Fig. 15, Fig. 31), or of at least one minima minimorum of correlation characterizing at least one anti-correlation, or of at least one maxima maximorum of correlation and of at least one minima minimorum of correlation, characterizing at least one correlation and anti-correlation, on the duration of one or several aforesaid "characteristic profiles", the "instantaneous" correlation being calculated, either at predetermined moments, or continuously, or on intervals of time, these moments or these intervals being possibly known from the "quantum transmitter" and the "quantum receiver" in a mode partially or completely synchronized, or according to a combination of these methods, on at least one temporal window (e.g. Fig. 9), possibly moving, dimensioned in relation to at least one property of one or several aforesaid "characteristic profiles", the aforesaid "instantaneous" correlation ranging, when it is standardized, between the value "- 1" and "+1", the aforesaid "instantaneous" correlation, for example, being evaluated, according to the mode, by one of the following methods:

- either by a method of correlation (M1) between the aforementioned series of measurements, possibly after application of a transformation, and a caliber (e.g. Fig. 13),
- or by a method of correlation (M2), when the information is coded by the "quantum transmitter" using at least two "characteristic profiles" shifted of at least one value of time, known from the "quantum transmitter" and from the "quantum receiver", between the aforementioned series of measurements and the aforementioned series of measurements shifted temporally, possibly after the application of a transformation,
- or by a method of correlation (M3), when the information is coded by the "quantum transmitter" by at least one "characteristic profile" making it possible to put in correspondence at least one set of values of at least one parameter of the stimulation, which are applied at different times, between the aforementioned series of measurements, and the aforementioned series reversed temporally, possibly after application of a transformation (e.g. Fig. 11),

- or by a method of correlation (M4) between the aforementioned series of measurements on at least two "slave" "entangled" samples measured (e.g. Fig. 17),
- or by a method of correlation (M5) (e.g. Fig. 2) between at least two of the aforementioned series of measurements on at least one measured "slave" "entangled" sample, for example in at least two optical lines or at least two bands of optical wavelengths or at least one optical line and at least one band of optical wavelengths, possibly after application of transformations,

the single aforementioned maxima maximorum of correlation or the several aforementioned maxima maximorum of correlation, when they are higher than a threshold of confidence depending upon the optimization of the process, for example "+ 0,7", and the single aforementioned minima minimorum of correlation or the several aforementioned minima minimorum of correlation, when they are lower than a threshold of confidence depending upon the optimization of the process, for example "-0,7", characterizing at least one quantum reception of a data according to the aforementioned "characteristic profile" or the aforementioned "characteristic profiles".

**14.** Method according to claim 13, more particularly applicable to the mode using method (M1), **characterized in that** the "instantaneous" correlation is calculated between:

- the aforementioned series of measurements from the "quantum receiver" (e.g. Fig. 8), or a function of the aforesaid measurements when several "slave" "entangled" samples are employed, for example using a weighted average, the result being called the series of raw measurements, the aforementioned series of raw measurements possibly undergoing a transformation applied to a subset of the aforesaid raw measurements, for example one running average applied to a fraction of the duration of one or several aforesaid "characteristic profiles", or a transformation correcting the effect of a "characteristic profile", the aforementioned resulting measurements being called "series of modified measurements",
- and a caliber of response of deexcitation of entangled traps (e.g. Fig. 13), which was calibrated beforehand for the one aforementioned "characteristic profile" used or for several aforementioned "characteristic profiles" used, and, either at least for the "slave" "entangled" sample used, or at least for a typical "slave" "entangled" sample, or at least calibrated by means of an heuristic calculation using at least one response curve of thermoluminescence, or of photoluminescence, of the aforesaid kind of materials, and the single aforementioned "characteristic profile" or the several aforementioned "characteristic profiles".

**15.** Method according to claim 13, more particularly applicable to the mode using the method (M2), **characterized in that** the predetermined values of time of shifts are either fixed, or pseudo-random according to same seed, the "instantaneous" correlation being calculated between:

- the aforementioned series of measurements from the "quantum receiver" (e.g. Fig. 8), or a function of the aforesaid measurements when several "slave" "entangled" samples are employed, for example using a weighted average, the result being called the series of raw measurements, the aforementioned one series of raw measurements possibly undergoing a transformation applied to a subset of the aforesaid raw measurements, for example one running average applied to a fraction of the duration of one or several aforesaid "characteristic profiles", or a transformation correcting the effect of one or several aforesaid "characteristic profiles", the aforementioned resulting measurements being called the "series of modified measurements",
- and the aforementioned series of raw measurements, shifted temporally of one or several of the predetermined values of time, the aforementioned one series of raw measurements possibly undergoing a transformation applied to a subset of the aforesaid raw measurements, for example one running average applied to a fraction of the duration of one or several aforesaid "characteristic profiles", or a transformation correcting the effect of one or several aforesaid "characteristic profiles", the aforementioned resulting measurements being called the "series of shifted modified measurements", in order to establish a correspondence between the same values of parameters of stimulation, such correspondence occurring between measurements at the time of a "quantum reception".

**16.** Method according to claim 13, more particularly applicable to the mode using the method (M3), **characterized in that** the "instantaneous" correlation is calculated between:

- the aforementioned series of measurements from the "quantum receiver" (e.g. 184, 197), or a function of the aforesaid measurements when several "slave" "entangled" samples are employed, for example using a weighted average, the result being called the series of raw measurements, the aforementioned one series of raw measurements possibly undergoing a transformation applied to a subset of the aforesaid measurements, for example one running average (e.g. Fig. 8, Fig. 29 - 185) to a fraction of the duration of one or several aforesaid "characteristic profiles", or a transformation correcting the effect of one or several aforesaid "characteristic profiles", the aforementioned resulting measurements being called the "series of modified measurements" (e.g. 185, 199),
- and the aforementioned series of raw measurements, possibly modified according to the optimization of the process, the aforementioned series of measurements being reversed temporally, the aforementioned one series of raw measurements possibly undergoing a transformation applied to a subset of the aforesaid measurements, for example one running average to a fraction of the duration of one or several aforesaid "characteristic profiles", or a transformation correcting the effect of one or several aforesaid "characteristic profiles", the aforementioned measurements resulting being called the "series from reversed measurements" (e.g. 201), in order to establish a correspondence between the same values of the parameters of stimulation (e.g. Fig. 11, Fig. 30), correspondence which occurs between measurements at the time of a "quantum reception" (e.g. Fig. 12, Fig. 31).

**17.** Method according to claim 13, more particularly applicable to the mode using method (M4), **characterized in that** the "instantaneous" correlation are calculated between:

- the aforementioned series of measurements on the first "slave" "entangled" sample of "quantum receiver", or a function of measurements of a first set of "slave" "entangled" samples when several "slave" "entangled" samples are employed, for example using a weighted average, the result being called the first series of raw measurements, the aforementioned one series of raw measurements possibly undergoing a transformation applied to a subset of the aforesaid measurements, for example one running average applied to a fraction of the duration of one or several aforesaid "characteristic profiles", the aforementioned resulting measurements being called the "first series of modified measurements",
- and the aforementioned series of measurements from the second "entangled" "slave" sample of the "quantum receiver" or a function of the measurements on a second set of "slave" "entangled" samples disjoined from the preceding one when several "slave" "entangled" samples are employed, for example using a weighted average, the result being called the second series of raw measurements, the aforementioned one series of raw measurements possibly undergoing a transformation applied to a subset of the aforesaid measurements, for example one running average applied to a fraction of the duration of one or several aforesaid "characteristic profiles", the aforementioned resulting measurements being called the "second series of modified measurements".

**18.** Method according to claim 13, more particularly applicable to the mode using method (M5), **characterized in that** the "instantaneous" correlation is calculated between:

- the aforementioned series of measurements in the first optical line or band of optical wavelengths, from the "quantum receiver", or a function of the aforesaid measurements when several "slave" "entangled" samples are employed, for example using a weighted average, the result being called the series of raw measurements, the aforementioned one series of raw measurements possibly undergoing a transformation applied to a subset of the aforesaid measurements, for example one running average applied to a fraction of the duration of one or several aforesaid "characteristic profiles", or an heuristic transformation standardizing the aforementioned measurements for the aforementioned "characteristic profile", or the aforementioned "characteristic profiles", in relation to the various measured wavelengths, the aforementioned resulting measurements being called the "first series of modified measurements",
- and the aforementioned series of measurements in the second optical line or band of optical wavelengths, from the "quantum receiver", or a function of the aforesaid measurements when several "slave" "entangled" samples are employed, for example using a weighted average, the result being called the series of raw measurements, the aforementioned one series of raw measurements possibly undergoing a transformation applied to a subset of the aforesaid measurements, for example one running average applied to a fraction of the duration of one or several aforesaid "characteristic profiles", or an heuristic transformation standardizing the aforementioned measurements for the aforementioned "characteristic profile" or the aforementioned "characteristic profiles" in relation to the various measured wavelengths, the aforementioned resulting measurements being called the "second series of modified measurements".

**19.** Method according to claim 13 **characterized in that** the "quantum receiver" takes measurements of luminescence, versus time, on at least two optical lines or at least two bands of optical wavelengths or at least one optical line and a band of optical wavelengths, in order to determine the transmission of information at the time of the occurrence on the same interval of time, either of at least two maxima maximorum of correlation, or of at least two minima minimorum of correlation, or of at least one maxima maximorum of correlation and of at least one minima minimorum of correlation.

**20.** Method according to claim 13 **characterized in that** at least one "slave" "entangled" sample, when it is made up of at least one kind of materials having properties of thermoluminescence, and presenting additional properties of photoluminescence, is prior to the "quantum reception", exposed to an infra-red radiation in order to cancel the possibly residual photoluminescence, in order to improve the quantum reception by research of maxima maximorum of correlation, during the application of at least one "characteristic profile".

**21.** Method according to claim 13, more particularly applicable when the periods of "quantum transmission" and "quantum reception" are synchronized, **characterized in that** at least one "slave" "entangled" sample, when it is made up of at least one kind of materials having properties of thermoluminescence, and presenting additional properties of photoluminescence, is prior to each "quantum reception", exposed to a source of very low intensity of visible, or ultraviolet light or X-rays, to induce a residual photoluminescence, in order to determine the transmission of information by the search for a minima minimorum (e.g. Fig. 6), during the application of one "characteristic profile".

**22.** Method according to claim 1 **characterized in that** the "characteristic profiles" are applied by the aforementioned "quantum transmitter", or the aforementioned "quantum transmitters", at moments or during temporal windows, predetermined, possibly varying according to a common pseudo-random law, which are also known of one or several aforesaid "quantum receivers", which apply the process of determination of a transmission of coded information at least at the aforesaid moments or during the aforementioned temporal windows, which are predetermined.

**23.** Method according to claim 1 **characterized in that** the "quantum transmitter" (e.g. Fig. 16 - left side, Fig. 17 - left side) carries out a feedback, by using at least another "slave" "entangled" sample (e.g. 26, 41) from the aforementioned group, called "secondary slave" "entangled" sample, and a process of measurement of luminescence (e.g. 25, 40) in at least one optical line or at least one band of optical wavelengths on the aforesaid "secondary slave" "entangled" sample, in order to control, by an heuristic method, the response of deexcitation of some entangled traps at least at one value of at least one parameter of the "characteristic profile" of stimulation versus time, by a feedback (e.g. 24, 29), using a complementary modulation of the stimulation of the "characteristic profile", which is applied to the "master" "entangled" sample (e.g. 21, 37), for example, either by means of at least a possibly complementary variation to the parameter of temperature, either by means of a possibly complementary variation to the parameter of light intensity, or by means of at least a possibly complementary variation to the parameter of incident wavelength, or by means of at least a possibly complementary variation to the parameter of stimulated surface, or by means of at least a possibly complementary variation to the parameter of stimulated volume, in order to statistically optimize the response of at least one "slave" "entangled" sample (e.g. 30, 40, 47) from at least one distant "quantum receiver" (e.g. Fig. 16 - right side, Fig. 17 - right side).

**24.** Method according to claim 1 **characterized in that** the "quantum transmitter" carries out a feedback, by using a process of measurement of luminescence in at least one optical line or at least one band of optical wavelengths on the "master" "entangled" sample, in order to control by an heuristic method the response of deexcitation of some traps at least at one value of at least one parameter of the "characteristic profile" of stimulation versus time, by a feedback using a complementary modulation of the stimulation of the "characteristic profile", which is applied to the "master" "entangled" sample, for example, either by means of at least a possibly complementary variation to the parameter of temperature, or by means of at least a possibly complementary variation to the parameter of light intensity, either by means of at least a possibly complementary variation to the parameter of incident wavelength, or by means of at least a possibly complementary variation to the parameter of stimulated surface, or by means of at least a possibly complementary variation to the parameter of stimulated volume, in order to statistically optimize the response of at least one "slave" "entangled" sample from at least one distant "quantum receiver".

**25.** Method to apply several times claim 1, in which at least one same sample, called by convention "multi-slave" "entangled" sample (e.g. 149), has been entangled successively with several samples or sets of samples, called by convention "mono-master" "entangled" samples (e.g. 148), said "multi-slave" "entangled" sample or said "multi-slave" "entangled" samples and each of said "mono-master" "entangled" samples or each of said sets of "mono-master" "entangled" samples forming a group of "entangled" samples according to the referenced claim, **characterized in that** one repeats several times the process of the referred claim, by using one after the other at least one of the aforesaid "mono-master" "entangled" samples (e.g. 175) as a "master" "entangled" sample in the "quantum transmitter" (e.g. Fig. 27 - left side), and at least one of the aforesaid "multi-slave" "entangled" samples (e.g. 180) as a "slave" "entangled" sample in the "quantum receiver" (e.g. Fig. 27 - right side), the aforementioned repetition of the aforesaid method making it possible to carry out several determinations of transmission of information (e.g. Fig. 12, Fig. 31), by replacing the "mono-master" "entangled" sample when the emptying of entangled trapped electrons of the aforesaid "mono-master" "entangled" sample is either partial below a threshold of quality, or total, while keeping in use the "multi-slave" "entangled" sample.

**26.** Method according to claim 1 **characterized in that** one uses at least one kind of photoluminescent materials presenting at very low temperatures, ranging between -273 °C and 0 °C, some properties of thermoluminescence.

**27.** Method according to claim 1 **characterized in that** one calculates at least one running average (e.g. Fig. 8, Fig. 29 - 185, Fig. 32 - 198), possibly weighted, on a fraction of one or several aforesaid "characteristic profiles" (e.g. Fig. 10), in order to integrate or to minimize, either disturbances due to the noise of measurement (dark count), or disturbances due to the cosmic rays, or electromagnetic disturbances, or combinations of these disturbances, to optimize the signal of the response of at least one "slave" "entangled" sample measured, during the variation of at least one parameter of stimulation applied to at least one "master" "entangled" sample.

**28.** Device of implementation of the method according to anyone of the claims 1 to 27, **characterized in that** it includes at least one of the following apparatuses, insofar as it is intended to apply the part of the process, object of the aforesaid claim of process, located on the place covered by this patent, including the aircraft, the marine, underwater and space vessels, and the terrestrial, marine and space probes:

- one or several "quantum transmitters" equipment (e.g. Fig. 7 - left side, Fig. 16 - left side, Fig. 17 - left side, Fig. 18 - left side, Fig. 19 - left side, Fig. 20 - left side, Fig. 21 - left side, Fig. 26 - left side, Fig. 27 - left side)
- one or several "quantum receivers" equipment (e.g. Fig. 7 - right side, Fig. 16 - right side, Fig. 17 - right side, Fig. 18 - right side, Fig. 19 - right side, Fig. 20 - right side, Fig. 21 - right side, Fig. 26 - right side, Fig. 27 - right side)

**29.** Use of the method according to anyone of the claims 1 to 27, either to transmit information or commands, or to receive information or commands, or to transmit and receive information or commands.

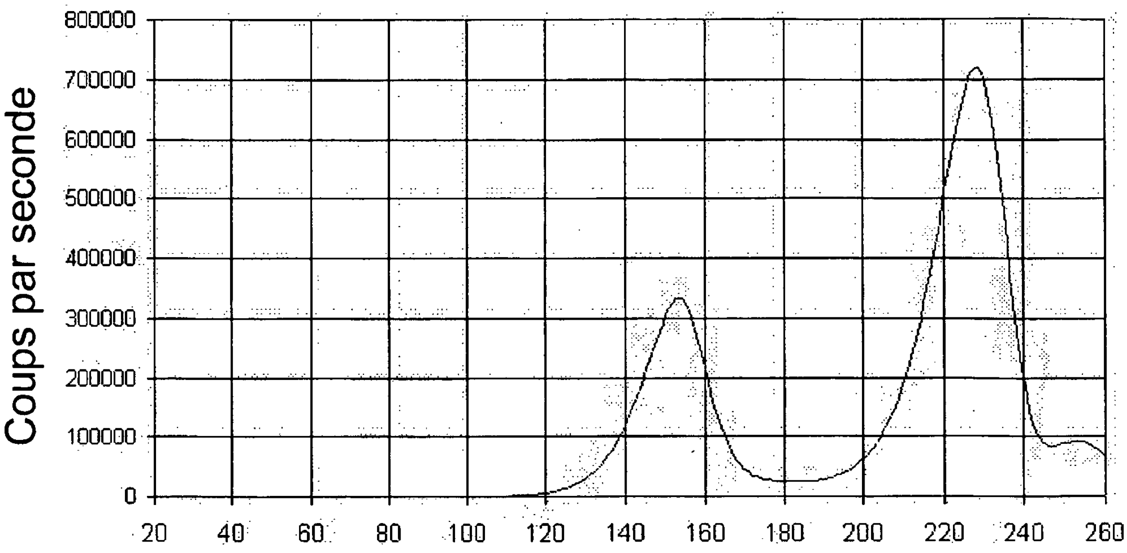
Coups par seconde
800000
700000
600000
500000
400000
300000
200000
100000
0
20
40
60
80
100
120
140
160
180
200
220
240
260
Température en °C

Fig. 1

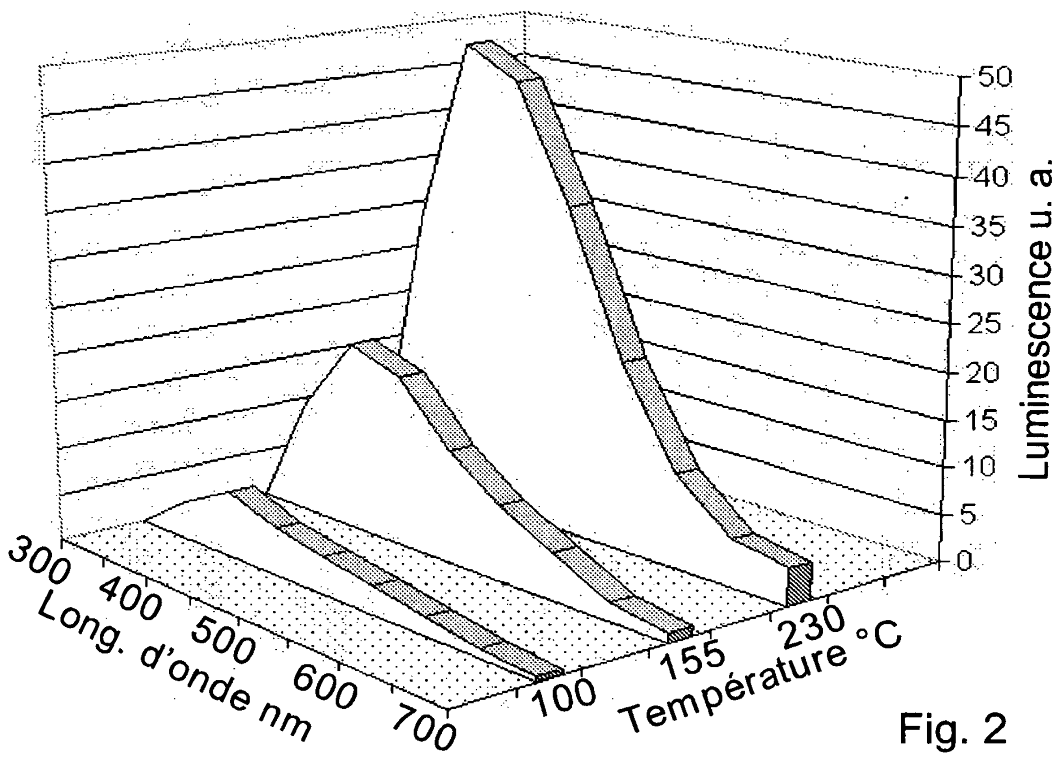
50
45
40
35
30
25
20
15
10
5
0
Luminescence u. a.
300
400
500
600
700
Long. d'onde nm
100
155
230
Température °C

Fig. 2

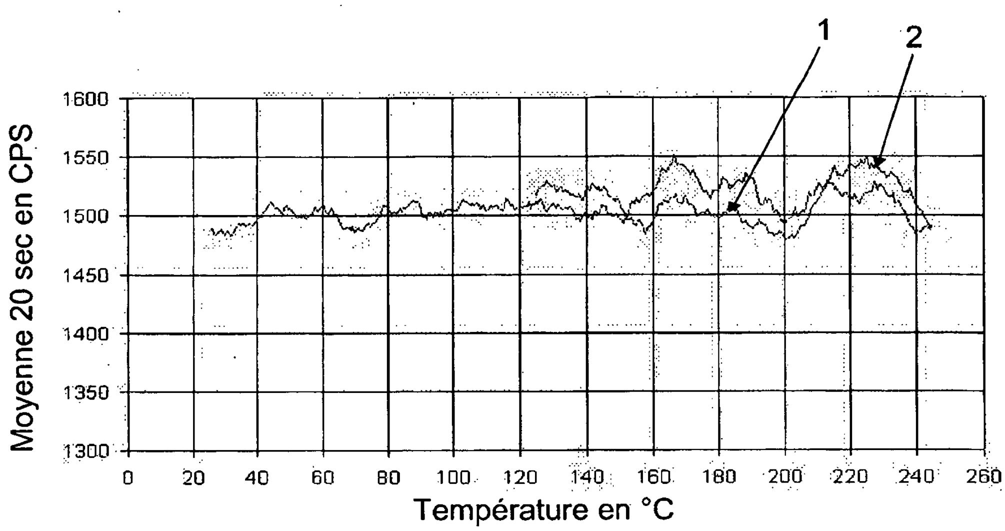


Fig. 3

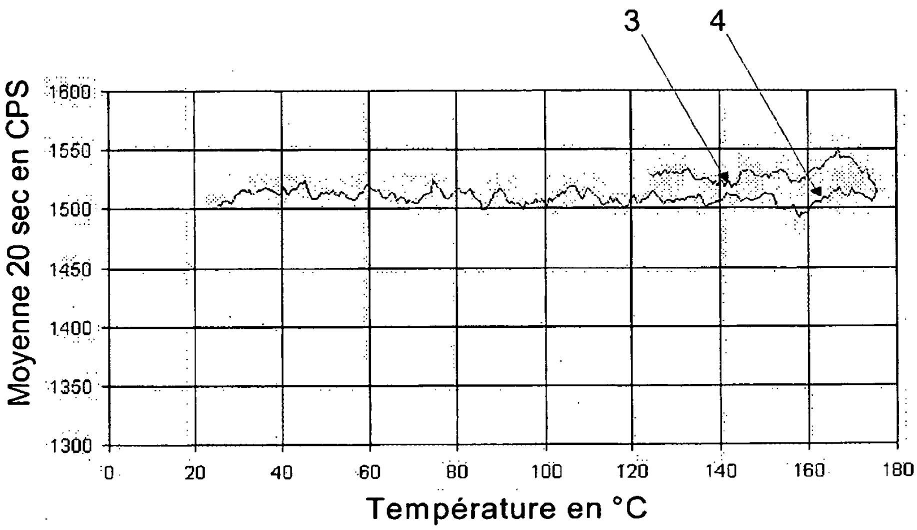


Fig. 4

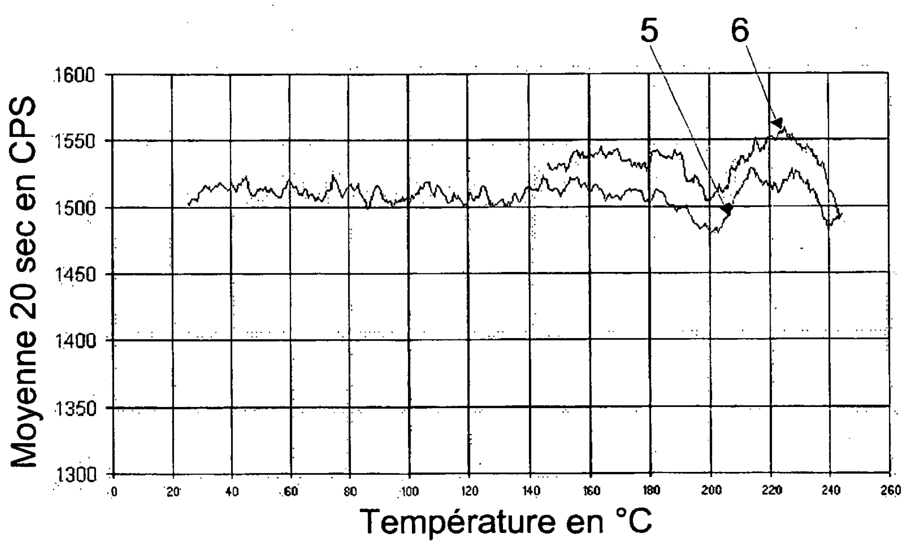


Fig. 5

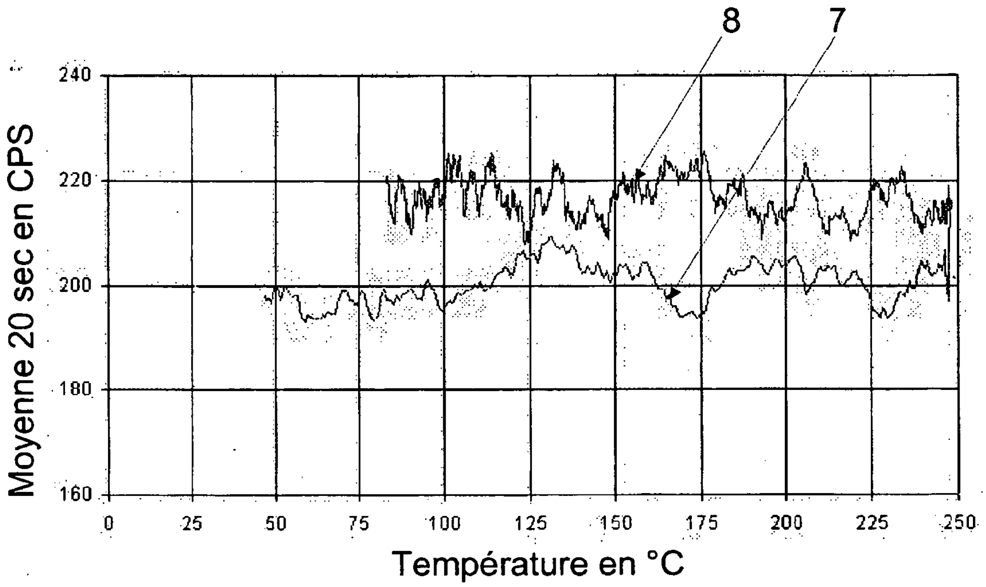
8
7
240
220
200
180
160
Moyenne 20 sec en CPS
0
25
50
75
100
125
150
175
200
225
250
Température en °C

Fig. 6

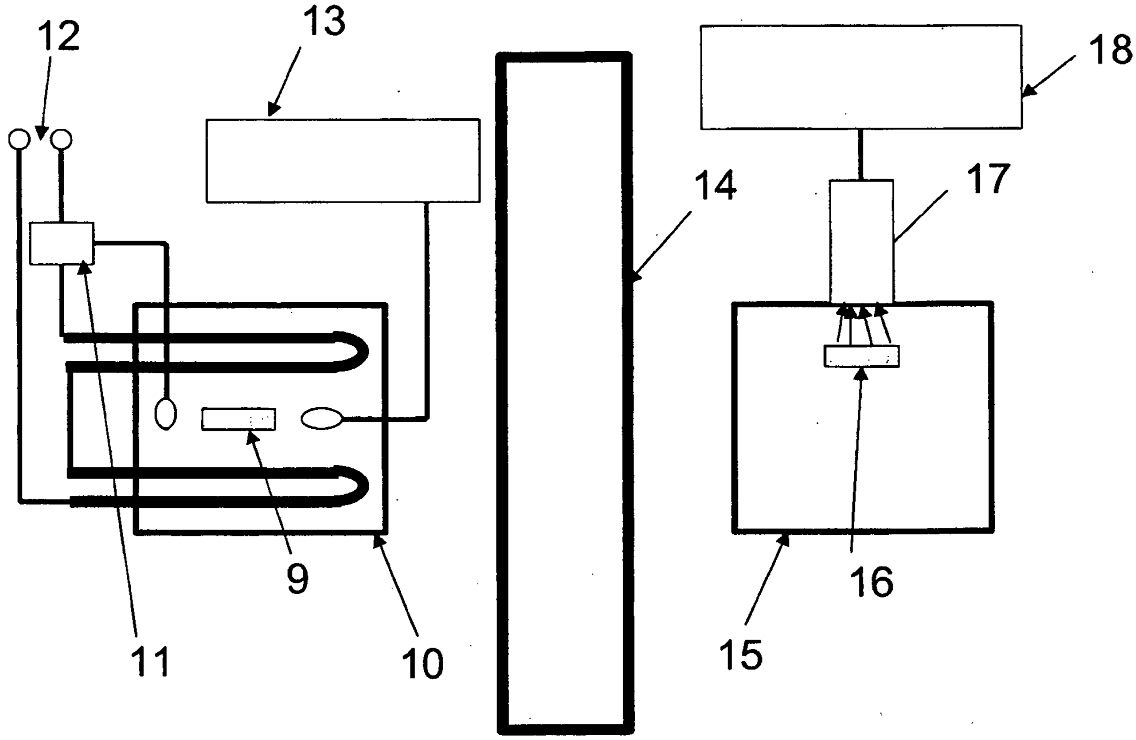
12
13
18
14
17
9
16
11
10
15

Fig. 7

Fig. 8

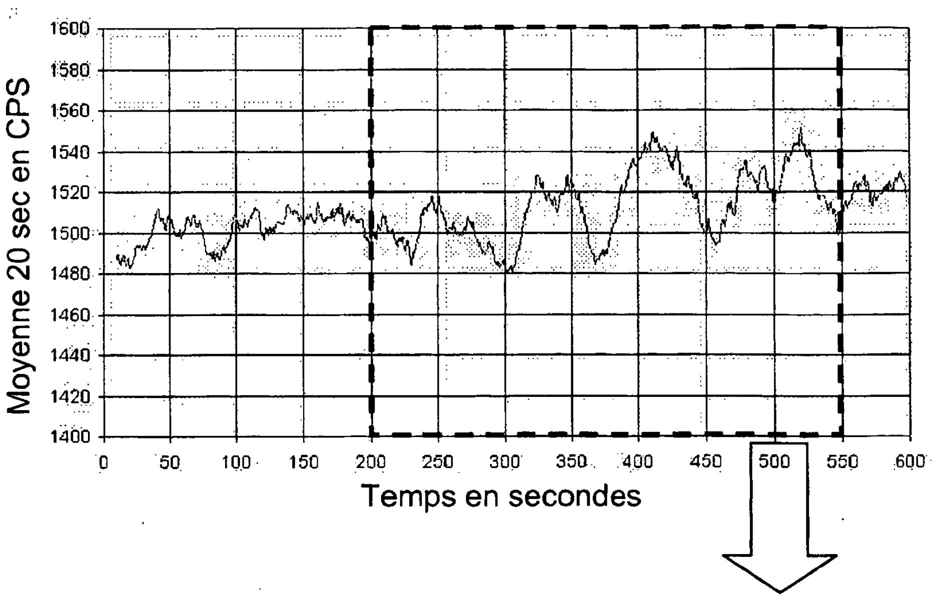


Fig. 9

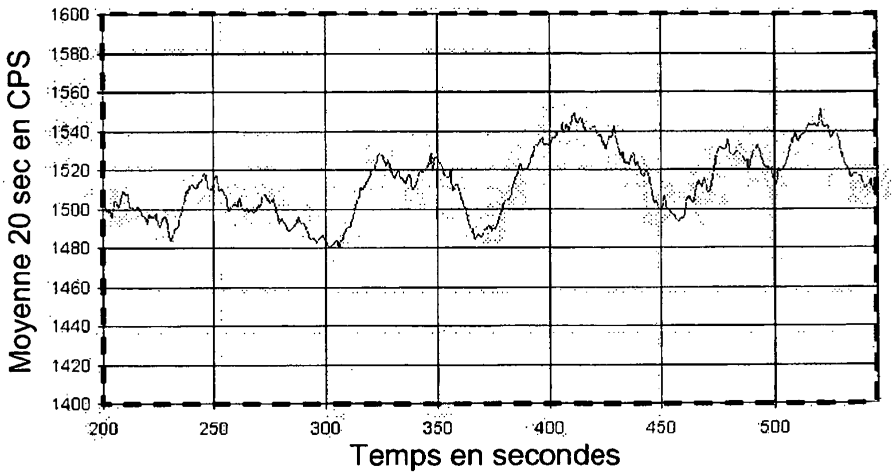


Fig. 10

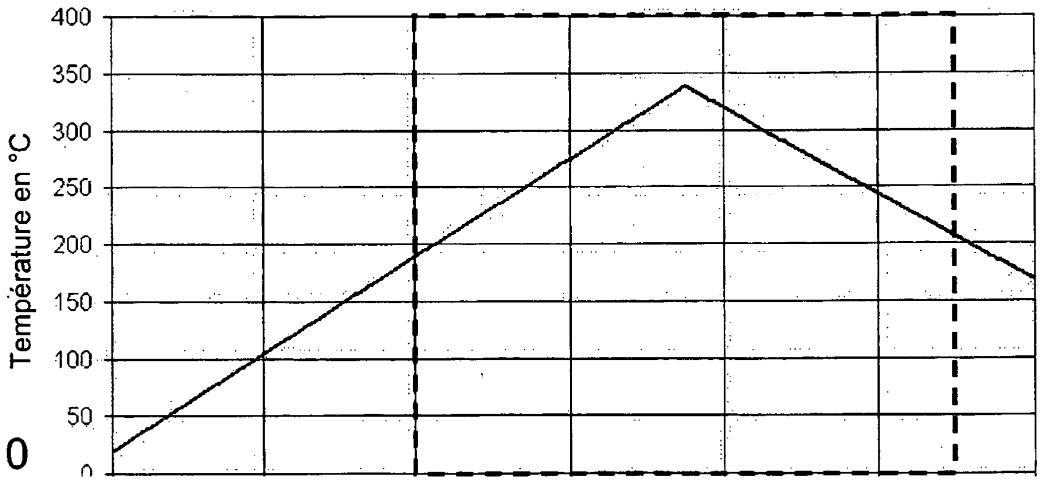

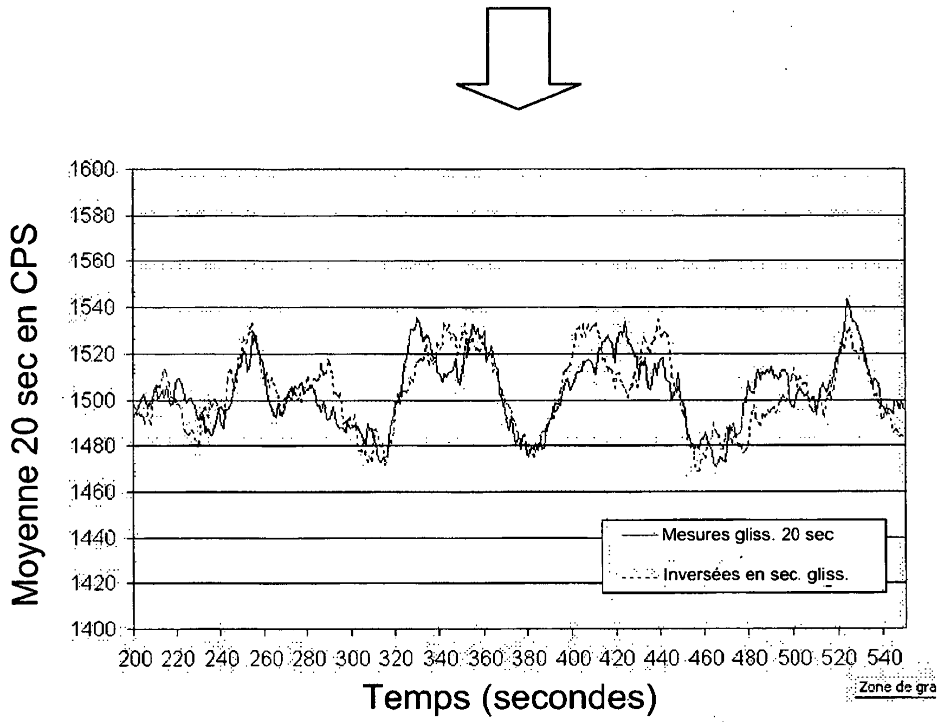
Moyenne 20 sec en CPS
1600
1580
1560
1540
1520
1500
1480
1460
1440
1420
1400
200 220 240 260 280 300 320 340 360 380 400 420 440 460 480 500 520 540
Temps (secondes)
Mesures gliss. 20 sec
Inversées en sec. gliss.
Zone de gra

Fig. 11

Fig. 12

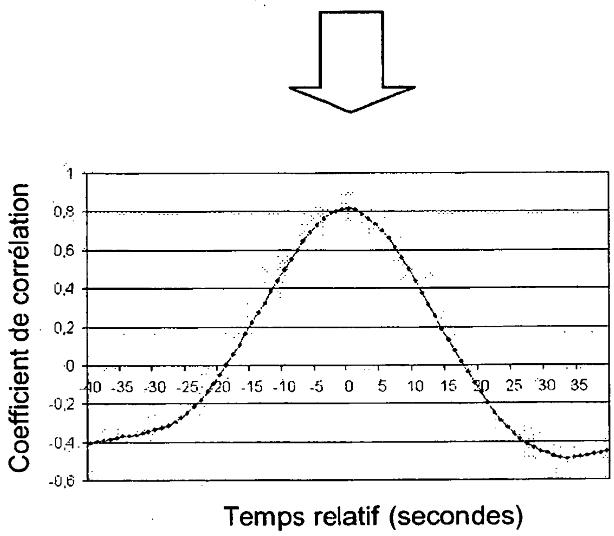
Coefficient de corrélation
1
0,8
0,6
0,4
0,2
0
-0,2
-0,4
-0,6
-40 -35 -30 -25 -20 -15 -10 -5 0 5 10 15 20 25 30 35
Temps relatif (secondes)

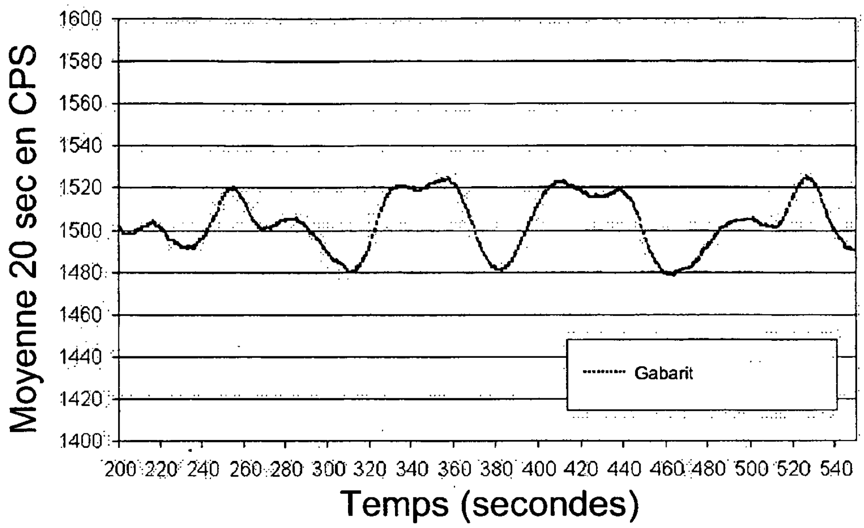


Fig. 13

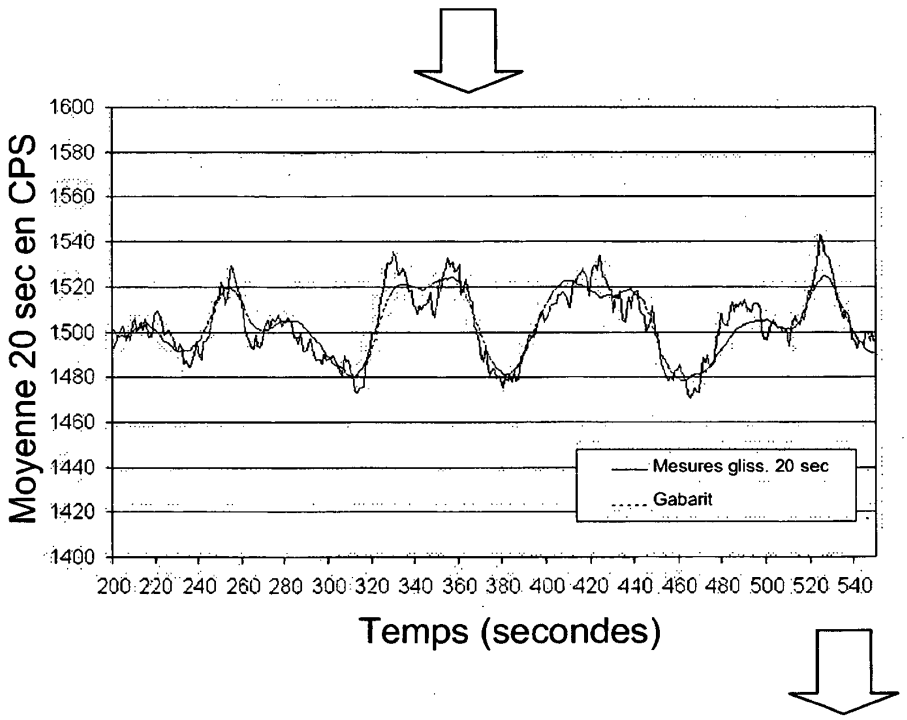


Fig. 14

Fig. 15

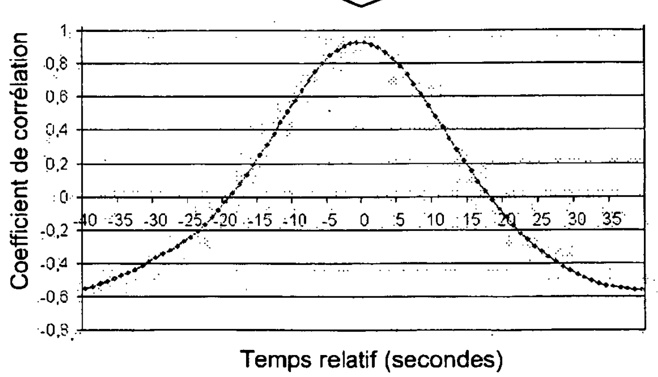

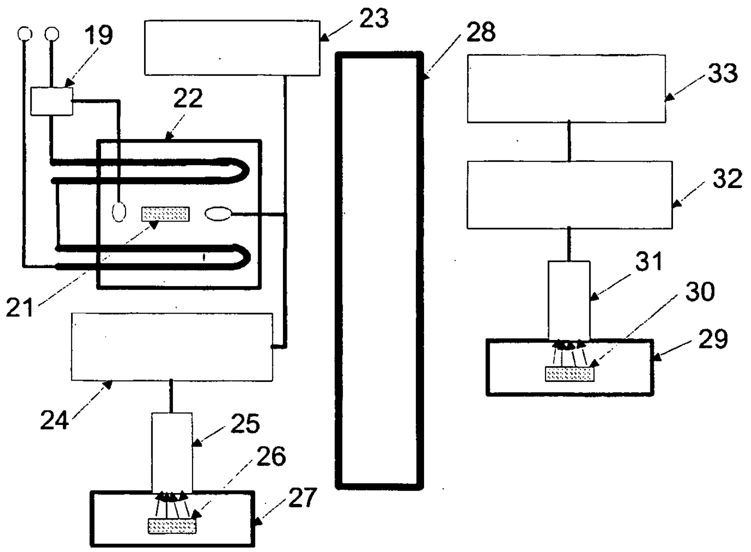


Fig. 16

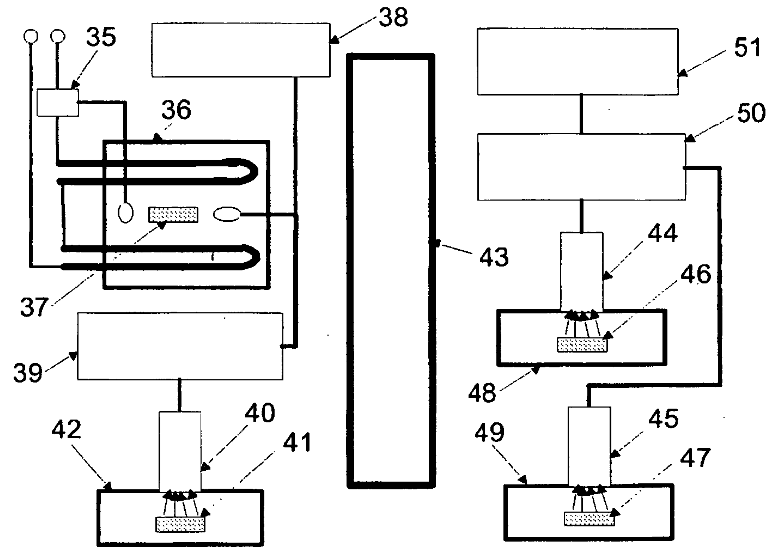


Fig. 17

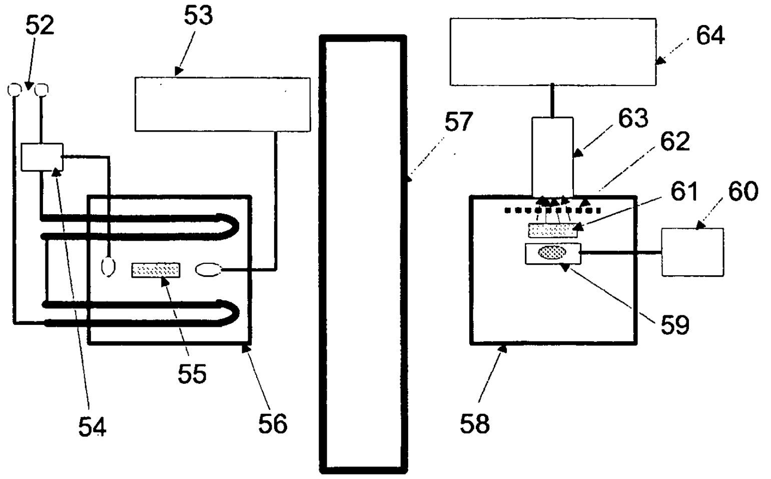


Fig. 18

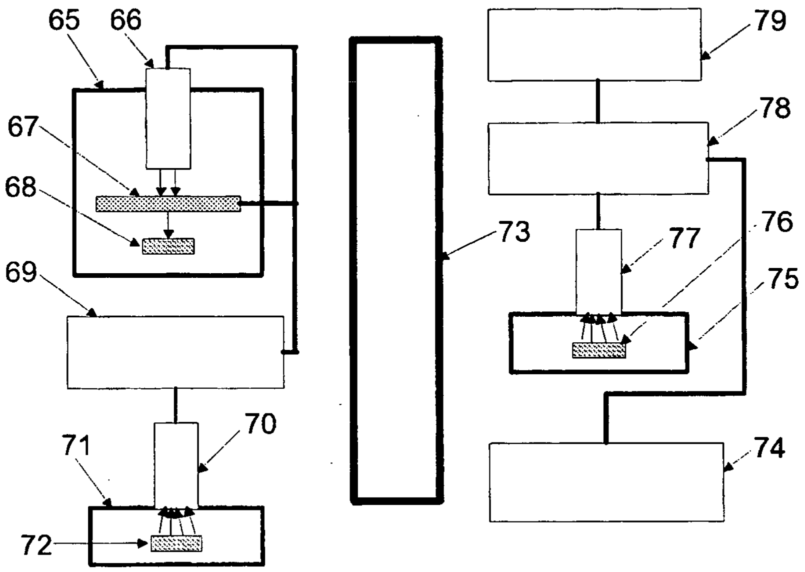


Fig. 19

Fig. 20

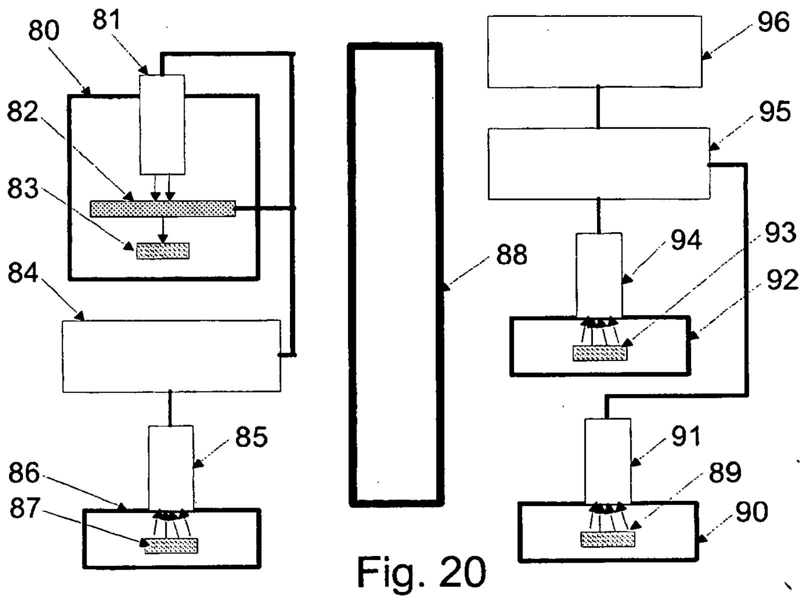


Fig. 20

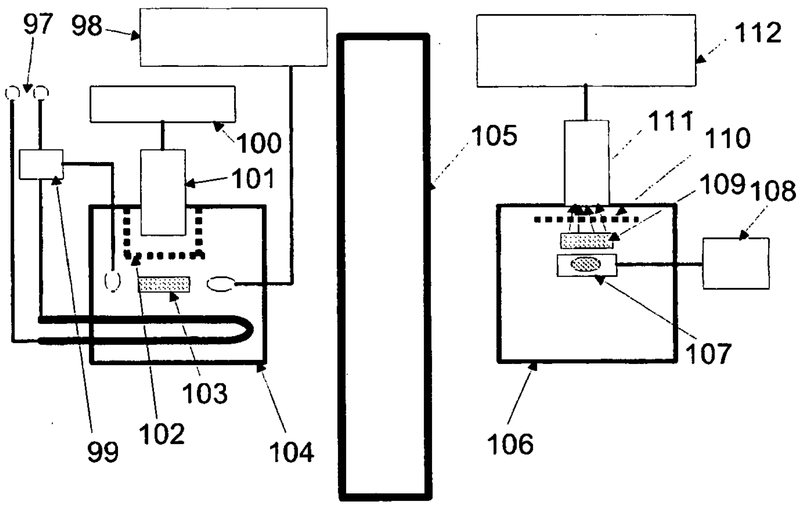


Fig. 21

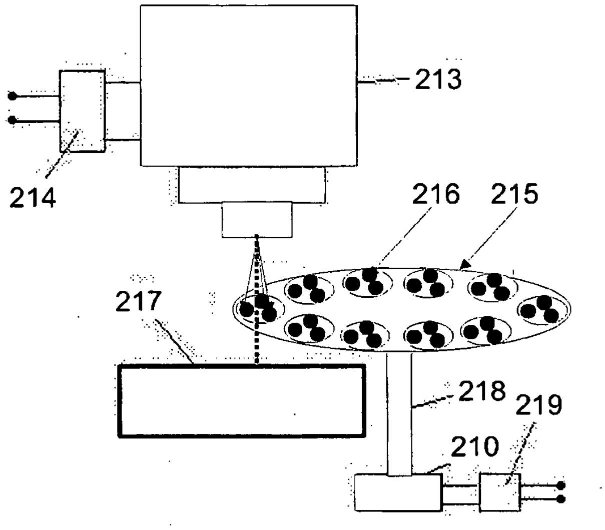


Fig. 22

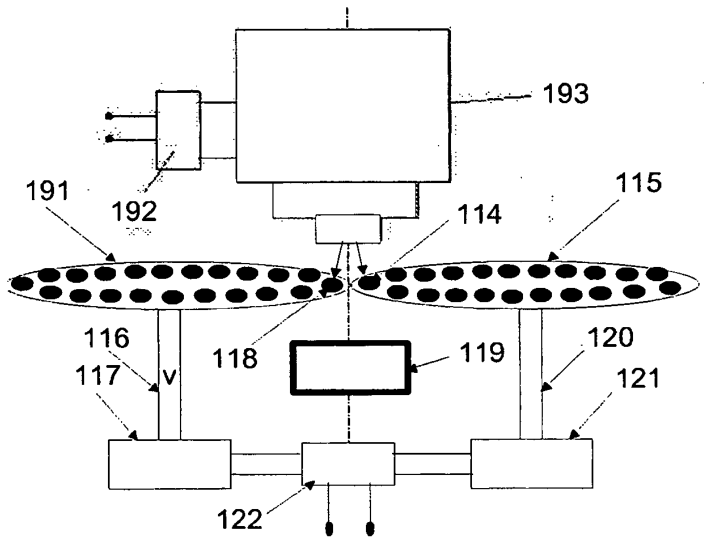


Fig. 23

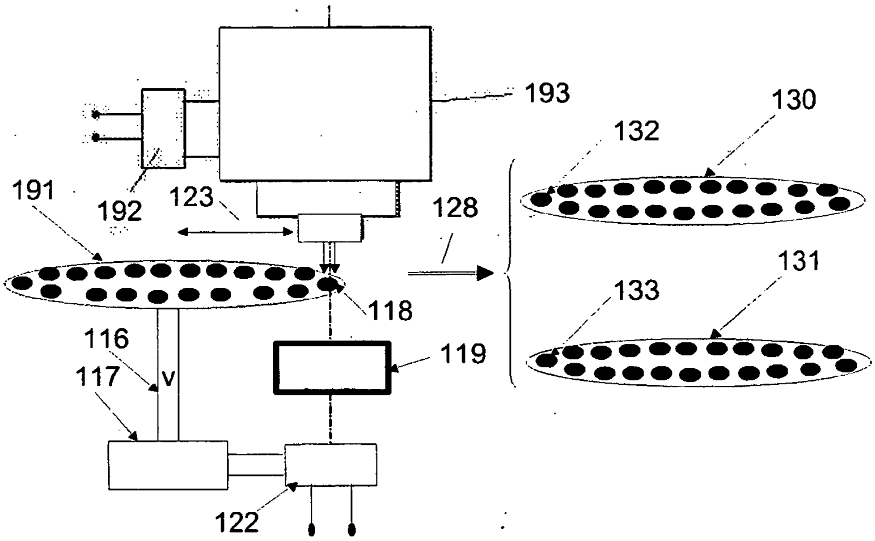


Fig. 24

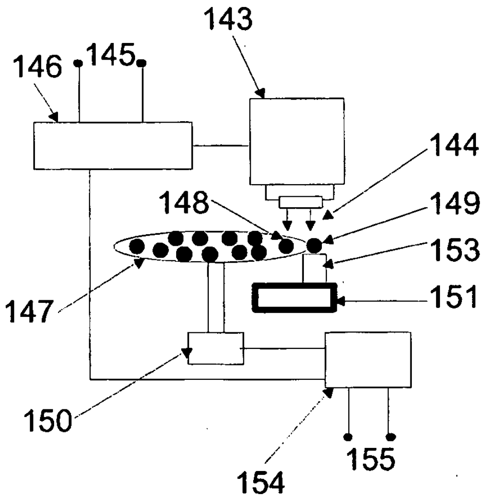


Fig. 25

Fig. 26

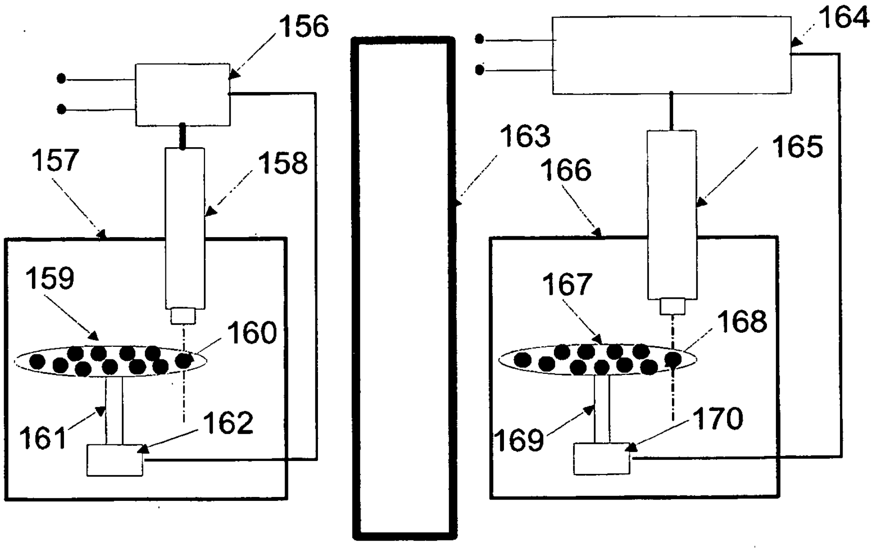


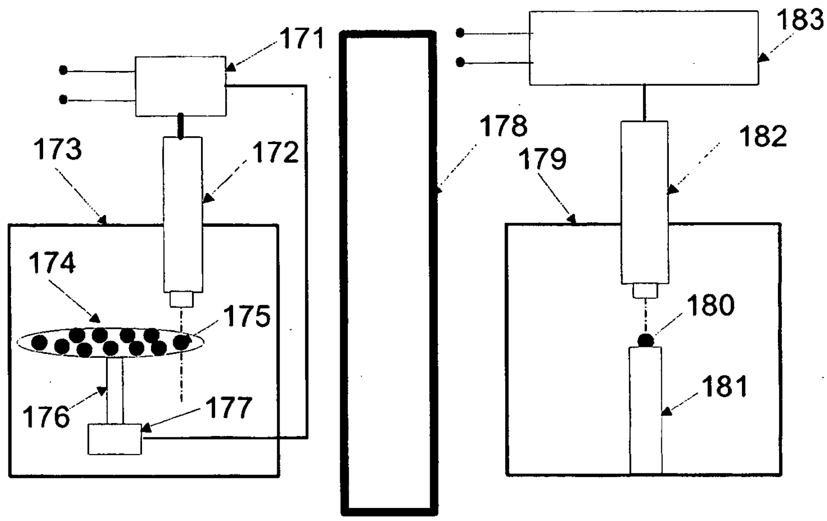


Fig. 27

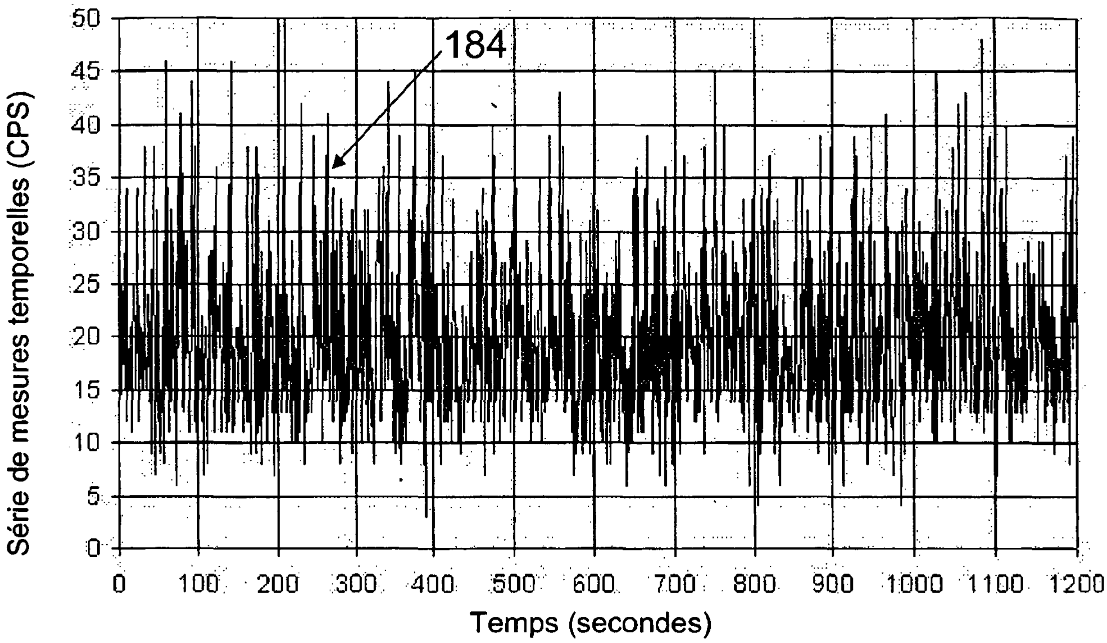
50
45
40
35
30
25
20
15
10
5
0
Série de mesures temporelles (CPS)
184
0
100
200
300
400
500
600
700
800
900
1000
1100
1200
Temps (secondes)

Fig. 28

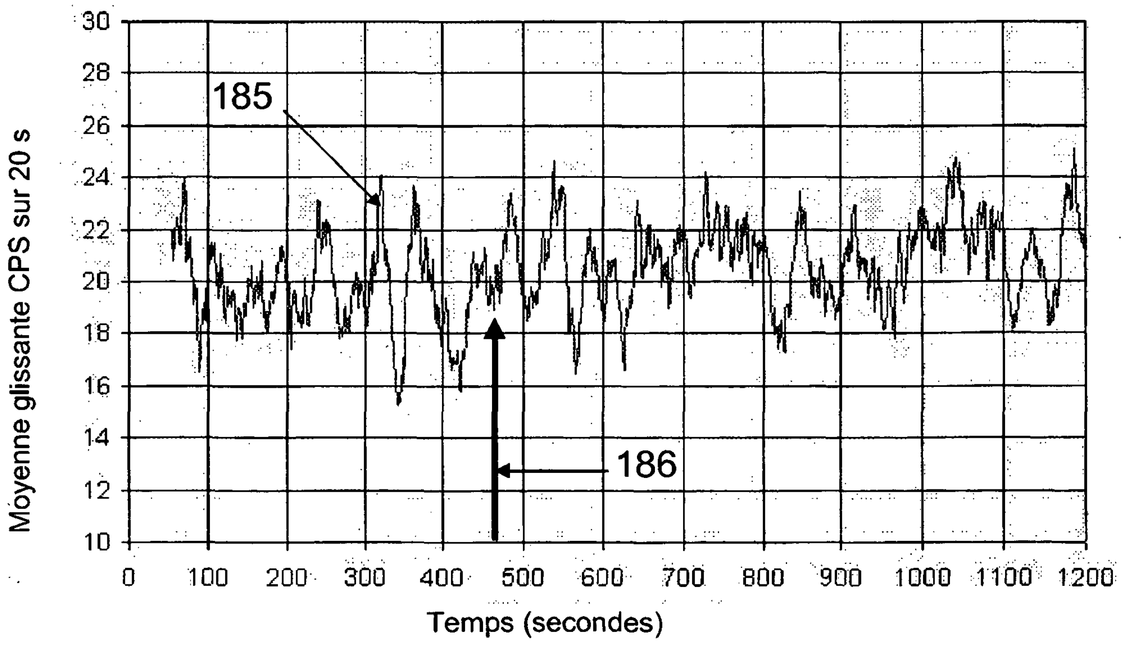
30
28
26
24
22
20
18
16
14
12
10
Moyenne glissante CPS sur 20 s
185
186
0
100
200
300
400
500
600
700
800
900
1000
1100
1200
Temps (secondes)

Fig. 29

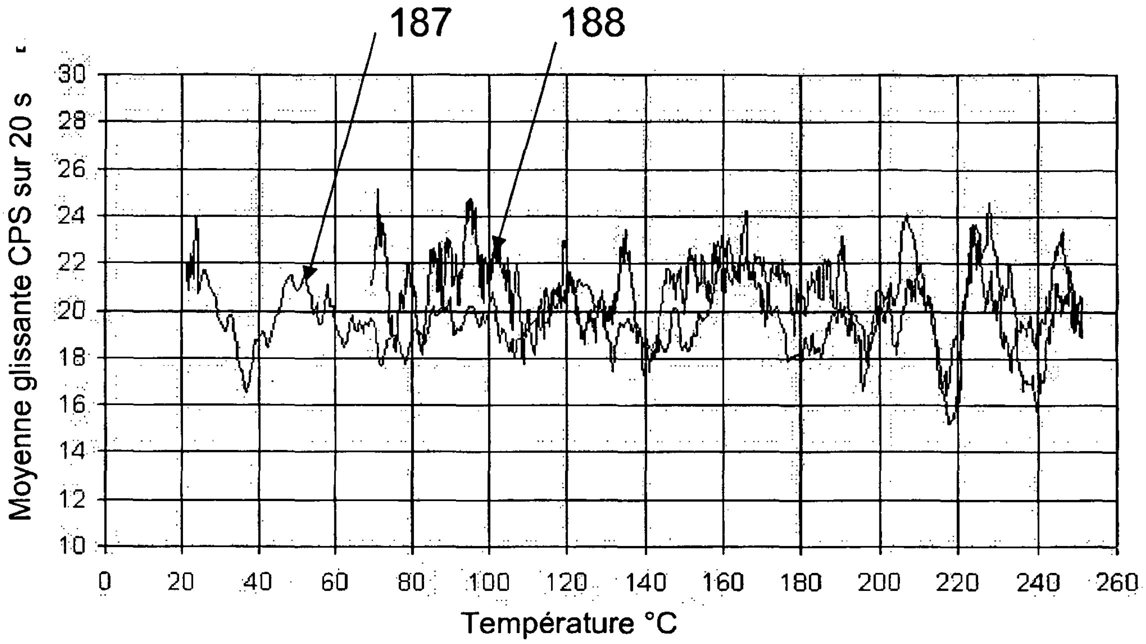
187
188
Moyenne glissante CPS sur 20 s
30
28
26
24
22
20
18
16
14
12
10
0
20
40
60
80
100
120
140
160
180
200
220
240
260
Température °C

Fig. 30

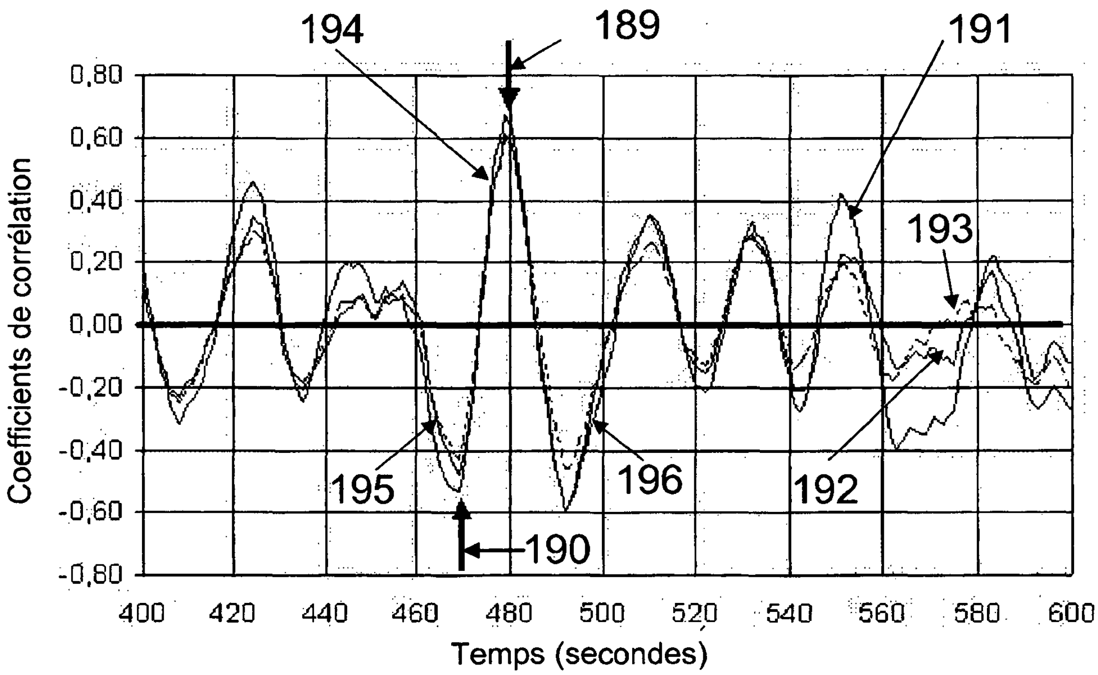
194
189
191
193
195
196
192
190
Coefficients de corrélation
0,80
0,60
0,40
0,20
0,00
-0,20
-0,40
-0,60
-0,80
400
420
440
460
480
500
520
540
560
580
600
Temps (secondes)

Fig. 31

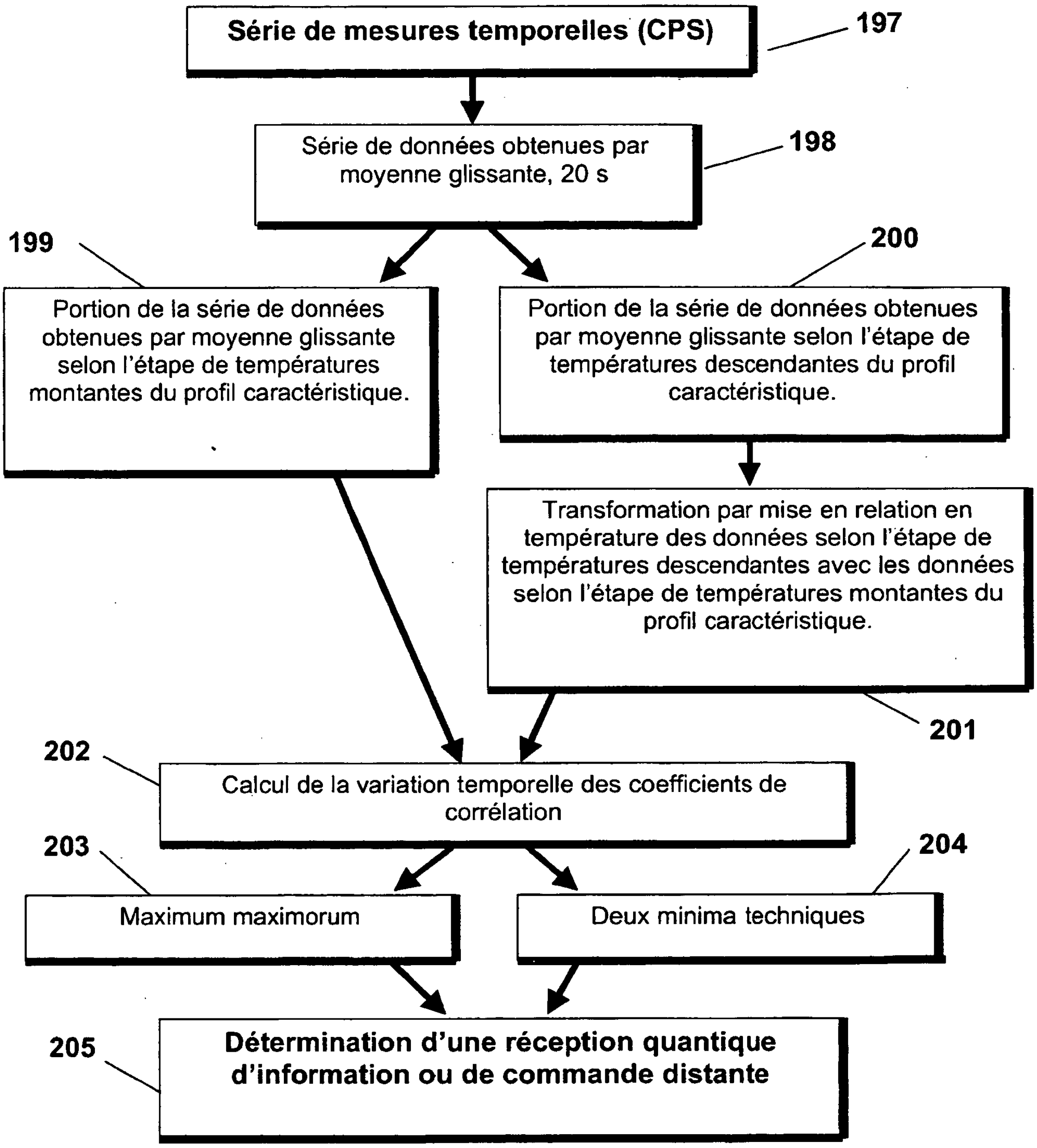
Série de mesures temporelles (CPS)
197
Série de données obtenues par moyenne glissante, 20 s
198
199
200
Portion de la série de données obtenues par moyenne glissante selon l'étape de températures montantes du profil caractéristique.
Portion de la série de données obtenues par moyenne glissante selon l'étape de températures descendantes du profil caractéristique.
Transformation par mise en relation en température des données selon l'étape de températures descendantes avec les données selon l'étape de températures montantes du profil caractéristique.
201
202
Calcul de la variation temporelle des coefficients de corrélation
203
204
Maximum maximorum
Deux minima techniques
205
Détermination d'une réception quantique d'information ou de commande distante

Fig. 32

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2005117306 A


### Littérature non-brevet citée dans la description


- **D.L. VAN GENT ; R. DESBRANDES.** Remote Stimulated Triggering of Quantum Entangled Photoluminescent Molecules of Strontium Aluminate. *INTERNET CITATION,* 07 Mars 2005
- **WEBER M. J. ; TOMPSON B. J.** Selected Papers on Photoluminescence of Inorganic Solids. *SPIE Milestone Series,* Août 1998, vol. Ms 150
- **JUSTUS B. L. et al.** Dosimetry measurements. CRC Press LLC, 2000
- **SHANI G.** Radiation Dosimetry: Instrumentation and Methods. CRC Press, Janvier 2001
- **BOTTER-JENSEN L. ; MCKEEVER S; W; S. ; WINTLE A; G.** *Optically Stimulated Luminescence Dosimetry,* 2003
- **MCKEEVER S. W. S.** Thermoluminescence of solids. Cambridge University Press, 1985
- **FURETTA C.** Handbook of Thermoluminescence. World Scientific Publishing
- **MACKEEVER S. W. S. et al.** Thermoluminescence Dosimetry Materials: Properties and Uses. Nuclear Technologiy Publishing, 1995
- **EINSTEIN A. ; PODOLSKY B. ; ROSEN N.** Can Quantum-Mechanical Description of Physical Reality Be Considered Complete?. *Phys. Rev.,* 1935, vol. 47, 777
- **BELL J. S.** Speakable and Unspeakable in Quantum Mechanics. Cambridge University Press, 1993
- **ASPECT A.** Trois tests expérimentaux des inégalités de Bell par mesure de corrélation de polarisation de photons. *Doctoral Dissertation,* 01 Février 1983
- **TOWNSEND P. D. ; RARITY J. G. ; TAPSTER P. R.** Single-Photon Interference in 10 km Long Optical-Fiber. *Electronics Letters,* 1993, vol. 29, 634
- **DUNCAN A. J. ; KLEINPOPPEN H.** Quantum Mechanics versus Local Realism. Plenum, 1988
- **GREENBERGER D. et al.** Bell's Theorem Without Inequalities. *Amer. J. of Phys.,* Décembre 1990, vol. 58 (12
- **WHITLEY V. H. ; MCKEEVER S. W. S.** Linearly modulated photoconductivity and linearly modulated optically stimulated luminescence measurements on Al2O3:C. *J. of Appl. Phys.,* 2001, vol. 90, 6073-6083